Europäisches Patentamt

European Patent Office

Office européen des brevets

(19)

(11) **EP 0 782 815 B1**

(12) **FASCICULE DE BREVET EUROPEEN**

(45) Date de publication et mention
de la délivrance du brevet:
**23.08.2000 Bulletin 2000/34**

(21) Numéro de dépôt: **96924959.8**

(22) Date de dépôt: **09.07.1996**

(51) Int Cl.7: **H04Q 11/04**, H04L 12/56

(86) Numéro de dépôt international:
**PCT/FR96/01069**

(87) Numéro de publication internationale:
**WO 97/03535 (30.01.1997 Gazette 1997/06)**

(54) **DISPOSITIF DE GESTION DE RELATIONS ENTRE DES OBJETS**

VORRICHTUNG ZUR VERWALTUNG VON VERBINDUNGEN ZWISCHEN OBJEKTEN

DEVICE FOR MANAGING RELATIONSHIPS BETWEEN OBJECTS

(84) Etats contractants désignés:
**AT BE CH DE ES GB IT LI NL SE**

(30) Priorité: **12.07.1995 FR 9508435**

(43) Date de publication de la demande:
**09.07.1997 Bulletin 1997/28**

(73) Titulaire: **ALCATEL**
**75008 Paris (FR)**

(72) Inventeur: **HENRION, Michel**
**B-1180 Bruxelles (BE)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 180 239        WO-A-92/02874**

- **ISS'95 WORLD TELECOMMUNICATIONS CONGRESS , BERLIN, DE, 23 Avril 1995, pages 278-282, XP000495579 H. YAMANAKA ET AL.: "A scalable Nonblocking Shared Multibuffer ATM Switch With a New Concept of Searchable Queue"**
- **SUPERCOMM/ICC'94 NEW ORLEANS, US, 1 Mai 1994, pages 1190-1195, XP000438689 J. SCHULTZ ET AL. : "CAM-Based Single- Chip Shared Buffer ATM Switch "**
- **IEEE 13TH ANNUAL INTERNATIONAL PHOENIX CONFERENCE ON COMPUTERS AND COMMUNICATIONS , PHOENIX, US, pages 377-383, XP000462583 S. KUMAR ET AL.: "On design of a Shared-Buffer based ATM Switch for Broadband-ISDN "**
- **MICROPROCESSING AND MICROPROGRAMMING, vol. 40, no. 1, Janvier 1994, AMSTERDAM NL, pages 33-41, XP000433534 S.MAHMUD: "Models of asynchronous packet-switched multiple and partial multiple bus systems"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un dispositif de gestion de relations entre des objets identifiables individuellement dans un champ d'adressage fini, plus particulièrement pour des applications en temps réel. Chaque relation associe deux objets appartenant à un même ensemble d'objets, ou appartenant respectivement à deux ensembles contenant des objets de même type ou de types différents. Le terme relation doit être entendu au sens large, car il peut changer en fonction des applications considérées. D'autre part un même objet peut être associé à un ou plusieurs autres objets par plusieurs relations de natures différentes.

Une application particulièrement importante se situe dans le domaine des télécommunications, et plus particulièrement dans le domaine de la gestion des relations entre cellules transférées en mode asynchrone. En effet, un système de commutation à mode de transfert asynchrone comporte une ou plusieurs mémoires tampons pour stocker temporairement des cellules à commuter. Cette mémoire tampon est généralement utilisée comme une file d'attente, par exemple du type premier-entré-premier-sorti. Dans ce premier exemple d'application, il est nécessaire de gérer des relations d'ordre entre les différents emplacements de cette mémoire tampon pour indiquer l'ordre respectif des cellules d'une file d'attente qui sont stockées dans ces emplacements.

Dans cette application, la relation est du type "cellule suivante dans la file d'attente" et associe une cellule qui est située dans un certain emplacement de la mémoire tampon à une autre cellule "suivante" qui est située dans un autre emplacement de la mémoire tampon. En général, dans le cas de mémoire tampon partagée pour plusieurs files d'attente, cet emplacement n'est pas un emplacement voisin car les emplacements sont libérés dans un ordre qui est aléatoire et sont réutilisés au fur et à mesure de leur libération.

Classiquement, la gestion de l'ordre respectif des cellules d'une file d'attente est réalisée en gérant des identificateurs de cellules, tels que les adresses des emplacements de mémoire contenant ces cellules. Par exemple, pour mémoriser l'ordre des cellules d'une file d'attente, qui sont stockées dans une mémoire tampon, leurs adresses sont inscrites à des adresses successives dans une mémoire dite d'adresses, adressée en écriture par un pointeur d'écriture incrémenté d'une unité après chaque écriture, et adressée en lecture par un pointeur de lecture, incrémenté d'une unité après chaque lecture. L'ordre dans lequel les adresses ont été inscrites dans les lignes consécutives de cette mémoire détermine l'ordre dans lequel les cellules seront relues dans la mémoire tampon.

Un autre procédé classique pour gérer l'ordre des cellules d'une file d'attente consiste à constituer une liste d'adresses chaînées dans une mémoire à accès aléatoire, dite mémoire de liens. Les emplacements de cette mémoire de liens correspondent respectivement aux emplacements de la mémoire tampon. Chaque emplacement de la mémoire de liens contient une adresse qui est la prochaine adresse à utiliser, d'une part pour lire la cellule suivante dans la mémoire tampon, et d'autre part pour lire une prochaine adresse à utiliser dans cette mémoire de liens. Un tel procédé de gestion d'ordre entre cellules est décrit par exemple dans la demande de brevet européen n°O.441.787 (Henrion 18). Dans ces deux exemples classiques de gestion d'ordre entre cellules d'une file d'attente, les identificateurs explicites utilisés sont les adresses de cellules, tandis que les relations entre cellules restent implicites.

Le document ISS 95 World Telecommunication Congress Berlin, DE, 23 Avril 1995, pages 278-282, H. Yamanaka et al : "A scalable Non Blocking Shared Multibuffer ATM Switch With a New Concept of Searchable Queue" décrit une file d'attente pour des adresses recherchables, utilisable dans un commutateur ATM, et équivalant à une pluralité de mémoires du type premier-entré-premier-sortie. Elle permet de retrouver la cellule la plus "ancienne" parmi les cellules qui attendent pour être émises sur une sortie donnée du commutateur.

Il existe un autre type de relation qui ne définit pas un ordre particulier ou une classification particulière des objets, mais plutôt l'appartenance à un même sous-ensemble ou groupement d'objets, tous les objets du sous-ensemble considéré ayant strictement les mêmes caractéristiques vis-à-vis de cette relation. Dans le domaine des télécommunications, on trouve un exemple d'une telle relation entre des cellules qui doivent être restituées par une mémoire tampon pendant un même intervalle temporel, dans le but de reséquencer les cellules dans un ordre correspondant à leur ordre d'arrivée. Lorsqu'une cellule arrive dans le système de commutation considéré, celui-ci lui associe une étiquette temporelle indiquant l'intervalle temporel au cours duquel cette cellule doit être restituée sur l'une des sorties du système de commutation. Toutes les cellules qui sont associées à une même étiquette temporelle sont alors associées à cette étiquette temporelle par une relation particulière, du type appartenance à un sous-ensemble, sans qu'il y ait pour autant une relation d'ordre entre les différentes cellules appartenant à cet ensemble. Un tel procédé de reséquencement de cellules est décrit par exemple dans la demande de brevet européen n°0.438.415 (Henrion 17).

Pour gérer de tels groupements dans un ensemble d'objets non ordonnés, on utilise classiquement :

- une mémoire d'attente où les cellules séjournent suffisamment longtemps pour que les cellules retardataires rejoignent les autres ayant une même étiquette temporelle;
- et une pile où sont transférées toutes les cellules ayant cette étiquette, sans ordre particulier entre elles, sauf celui des étiquettes temporelles de chaque sous-ensemble de cellules.

Des procédés connus de gestion de relations entre des objets, dans des ensembles d'objets ordonnés ou non ordonnés, sont classiquement mis en oeuvre au moyen de mémoires conventionnelles à accès aléatoire ou de mémoires adressables par leur contenu. La mise en oeuvre de ces procédés connus revient toujours à mémoriser des identificateurs d'objets, et non des identificateurs de relations entre objets. C'est donc la façon de mémoriser les identificateurs d'objets, par exemple en fonction de leur ordre dans une file d'attente qui détermine implicitement les relations d'ordre entre les objets. Il en résulte que les dispositifs classiques de gestion d'objets par relations implicites ont les limitations suivantes :

- Le temps d'exécution des opérations de gestion devient prohibitif s'il est nécessaire de gérer plusieurs relations au cours d'une même opération; par exemple, pour retrouver et réarranger des relations lorsqu'un objet doit être ajouté ou doit être retiré à un ensemble donné.
- La réalisation d'un dispositif de gestion pour plusieurs relations est extrêmement complexe parce que la gestion des relations implicites est distribuée dans plusieurs mémoires distinctes contenant les identificateurs d'objets dans le but d'épargner du temps en parallélisant les opérations. La complexité augmente rapidement avec le nombre de mémoires et avec le nombre de chemins parallèles nécessaires pour interconnecter les différents accès à ces mémoires : conducteurs de sélection d'un élément de mémoire, conducteurs de commande d'écriture, et conducteurs de commande de lecture.

Le but de l'invention est de proposer un dispositif de gestion de relations entre des objets, satisfaisant mieux les contraintes du temps réel, et permettant d'envisager alors des opérations de gestion plus complexes que celles réalisées jusqu'à présent (exécution parallèle et/ou combinée de plusieurs opérations élémentaires), impliquant un ou plusieurs types de relation à l'intérieur d'un même ensemble d'objets ou d'une structure comprenant plusieurs ensembles d'objets.

Par exemple, dans le domaine des systèmes de commutation à mode de transfert asynchrone, il peut être intéressant de gérer, dans un ensemble ordonné de cellules, plusieurs relations indiquant respectivement : la cellule suivante, la cellule précédente, la première cellule d'une liste ordonnée, et la dernière cellule d'une liste ordonnée. Dans un sous-ensemble non ordonné de cellules, il peut être intéressant de gérer des relations entre une cellule et chacune des autres cellules, ou bien entre chaque cellule et une cellule considérée comme référence pour le sous-ensemble considéré. La gestion de telles relations d'appartenance permet de grouper les cellules en différents niveaux de priorité pour la perte de cellules et/ou les retards à appliquer à chaque cellule ; en groupes de reséquencement des cellules; en files d'attente de sortie; etc.

L'objet de l'invention est un dispositif de gestion de relations entre des objets identifiables individuellement dans un champ d'adressage fini,
caractérisé en ce que, pour tout couple de deux objets distincts, appelés premier objet et second objet, et pour chaque relation susceptible d'associer ces deux objets, il comporte un élément de mémoire dit de relation pour mémoriser une information dite de relation indiquant soit l'existence, soit l'inexistence, de cette relation;
en ce que ces éléments de mémoire de relation sont structurés en un réseau à au moins deux dimensions, à l'aide d'une pluralité de bus susceptibles d'acheminer des signaux de sélection d'objet et des signaux de commande d'opération, chaque élément étant situé au point d'intersection de deux bus dits individuels, chaque bus individuel correspondant respectivement à un objet et étant susceptible de transporter au moins un signal dit de sélection de cet objet;
en ce que chaque élément comporte un circuit logique pouvant recevoir au moins un signal de sélection et pouvant recevoir au moins un signal de commande d'opération, pour écrire ou lire une information de relation dans cet élément;
et en ce qu'il comporte des moyens logiques couplés à des points d'accès des bus, pour leur fournir des signaux de commande d'opération, pour leur fournir des signaux de sélection d'objet, et pour recevoir d'eux des informations lues dans les éléments de mémoire de relation.
et en ce qu'il comporte des moyens logiques couplés à des points d'accès des bus, pour leur fournir au moins des signaux de commande d'opération et des signaux de sélection d'objet; et pour recevoir des informations lues dans les éléments de mémoire de relation.

Le dispositif ainsi caractérisé gère directement, c'est-à-dire explicitement des relations entre deux objets, au lieu de les gérer indirectement, puisque chaque élément de mémoire permet de mémoriser ou de restituer l'existence ou l'inexistence d'une relation entre deux objets par un adressage direct, par activation des bus individuels correspondant aux objets.

Le dispositif ainsi caractérisé procure une vitesse de traitement plus rapide que les dispositifs selon l'art antérieur, car il permet d'accèder directement aux informations de relation par un réseau de bus. Cette structure en réseau réparti permet un accès très rapide à chaque élément de mémoire correspondant à une relation entre deux objets. D'autre part, l'activation en lecture d'un bus individuel correspondant à un objet donné, permet d'accéder en une seule opération à tous les éléments de mémoire mémorisant les relations établies entre cet objet et d'autres objets de l'ensemble. Une seule opération de lecture permet donc de connaître simultanément toutes ces relations. Le temps nécessaire est donc très court. De même, une seule opération d'écriture permet de mémoriser simultanément l'existence, ou l'inexistence, de plusieurs relations.

Un mode de réalisation préférentiel du dispositif selon l'invention pour gérer des relations non nécessairement symétriques entre deux objets distincts dans un ensemble d'objets comportant N objets, est caractérisé en ce que les bus individuels comportent :

- N bus de commande de colonne, correspondant respectivement aux N objets, et commandant respectivement N colonnes d'éléments;
- N bus de commande de ligne, correspondant aux N objets, et commandant respectivement N lignes d'éléments; chaque bus de commande de ligne ayant un point d'intersection avec chaque bus de commande de colonne;

et en ce que ce dispositif de gestion de relations comporte N.(N-1) éléments de mémoire pour chaque relation susceptible de relier deux objets distincts parmi N; ces éléments étant situés en des points d'intersection des bus de commande de colonne et des bus de commande de ligne, à l'exception des points d'intersection situés sur une diagonale du réseau.

Un autre mode de réalisation préférentiel du dispositif selon l'invention, pour gérer des relations symétriques dans un ensemble de N objets, est caractérisé en ce qu'il comporte N bus individuels correspondant respectivement aux N objets, chaque bus comportant une première et une seconde branche ayant une extrémité commune; et chaque bus ayant un point d'intersection avec chacun des autres bus parmi ces N bus;

en ce que ce dispositif de gestion de relation comporte $\frac{N.(N-1)}{2}$ des éléments de mémoire de relation, pour chaque relation symétrique susceptible d'associer deux objets distincts dans cet ensemble de N objets;

en ce que les éléments de mémoire mémorisant les informations de relation entre l'objet de rang i=1 à K-1, et les objets de rang K, pour K choisi entre 1 et N, sont situés en des points d'intersection de la première branche du bus individuel correspondant à cet objet de rang K, et de la seconde branche de chaque bus individuel correspondant respectivement aux objets de rang i= 1 à K-1;

et en ce que les éléments de mémoire mémorisant des informations de relation entre l'objet de rang K et les objets de rang j=K+1 à N sont situés en des points d'intersection de la seconde branche du bus individuel correspondant à cet objet de rang K, et de la première branche de chaque bus individuel correspondant respectivement aux objets de rang j=K+1 à N.

Ce mode de réalisation présente l'avantage d'être particulièrement simple puisqu'il permet de gérer à partir de N points d'accès des relations symétriques entre N objets, avec $\frac{N^2-N}{2}$ éléments de mémoire seulement. Il est utilisable pour la plupart des relations car elles sont généralement symétriques. Par exemple, si une cellule A est placée avant une cellule B, il est évident que la cellule B est placée après la cellule A lorsque l'on exploite la séquence des cellules dans un ordre connu. Il n'est alors pas nécessaire de mémoriser ces deux relations redondantes.

Dans certains modes de réalisation particuliers, cette structure permet en outre d'accéder simultanément aux relations entre un premier et un second sous-ensemble de l'ensemble des éléments de mémoire, sans accéder simultanément aux relations entre objets d'un même sous-ensemble. L'accès est alors à la fois rapide et sélectif.

L'invention sera mieux comprise et d'autres caractéristiques apparaîtront à l'aide de la description ci-dessous, d'exemples de réalisation, et des figures l'accompagnant :

- les figures 1 à 4 représentent les schémas synoptiques de quatre exemples de réalisation du dispositif selon l'invention;
- la figure 5 représente le schéma synoptique d'un premier exemple de réalisation d'un élément de mémoire de relation pour le dispositif selon l'invention;
- la figure 6 représente un bus dit orthogonal et un point d'accès correspondant à un objet donné, pour commander l'exemple de réalisation représenté sur la figure 5;
- la figure 7 représente le schéma synoptique d'une variante du premier exemple de réalisation représenté sur la figure 5;
- la figure 8 illustre le fonctionnement d'un dispositif de gestion comportant des éléments de mémoire tels que celui représenté sur la figure 5, lors d'une opération de lecture de relations entre objets de deux sous-ensembles A et B (cas de lecture à partir de A);
- la figure 9 représente le schéma synoptique d'un exemple de réalisation d'un dispositif selon l'invention comportant des éléments de mémoire tel que celui représenté sur la figure 5, et illustre son fonctionnement lorsqu'une opération est réalisée sur les relations reliant les objets d'un sous-ensemble S d'un ensemble d'objets;
- la figure 10 illustre le problème qui se pose lorsqu'une opération d'écriture concerne deux sous-ensembles d'objets (S1 et S2);

- la figure 11 représente le schéma synoptique d'un second exemple de réalisation d'un élément de mémoire de relation pour le dispositif selon l'invention;
- la figure 12 représente un bus dit orthogonal et un point d'accès correspondant à un objet donné, pour commander l'exemple de réalisation représenté sur la figure 10;
- la figure 13 illustre le fonctionnement d'un dispositif de gestion comportant des éléments de mémoire tels que celui représenté sur la figure 10, lors de la lecture de toutes les relations existant entre un objet unique et tous les autres objets de l'ensemble considéré;
- les figures 14 et 15 illustrent deux variantes de fonctionnement de ce même dispositif lors de deux variantes d'une même opération d'écriture réalisée sur les relations reliant les objets d'un sous-ensemble S1 et les objets d'un sous-ensemble S2 (S1 et S2 étant disjoints), à l'exception de toutes les relations entre les objets d'un même sous-ensemble;
- les figures 16 et 17 représentent le schéma synoptique d'une variante de réalisation du dispositif selon l'invention, comportant des éléments de mémoire tels que celui représenté sur la figure 5, et illustre son fonctionnement lorsqu'une opération d'écriture est réalisée sur les relations reliant les objets d'un sous-ensemble S1 et les objets d'un sous-ensemble S2, S1 et S2 étant disjoints;
- la figure 18 illustre une autre application d'un dispositif de gestion comportant des éléments de mémoire tels que celui représenté sur la figure 11, lors d'une opération d'écriture de relations entre objets de deux sous-ensembles S1 et S2 quelconques et non disjoints;
- la figure 19 représente le schéma synoptique d'une variante du second exemple de réalisation représenté sur la figure 11;
- les figures 20 à 22 illustrent l'application du dispositif selon l'invention à la gestion des relations entre plusieurs sous-ensembles statiques d'objets, rassemblant respectivement des objets appartenant à des catégories différentes;
- les figures 23 à 26 représentent quatre structures élémentaires de relations permettant de gérer les objets d'un sous-ensemble dynamique;
- la figure 27 illustre l'opération de lecture des relations existant entre un objet donné et les objets appartenant à trois sous-ensembles distincts;
- les figures 28 et 30 illustrent une opération d'écriture concernant des relations entre des objets appartenant à deux groupes;
- les figures 30 et 31 illustrent une première opération complexe consistant à libérer toute relation existant entre un objet et tout autre objet;
- la figure 32 représente le schéma synoptique d'une variante du premier exemple de réalisation d'un élément de mémoire de relation, cette variante permettant de réaliser cette première opération complexe;
- la figure 33 représente le schéma synoptique d'une variante du second exemple de réalisation, cette variante permettant de réaliser cette première opération complexe;
- les figures 34 et 35 illustrent une deuxième opération complexe consistant en une double lecture simultanée de toutes les relations existant entre deux objets donnés et des objets, avec sortie séparée en deux groupes pour les objets identifiés par les deux lectures;
- la figure 36 représente le schéma synoptique d'une variante du premier exemple de réalisation, cette variante permettant de réaliser la deuxième opération complexe;
- la figure 37 représente le schéma synoptique d'une variante du second exemple de réalisation, cette variante permettant de réaliser la deuxième opération complexe;
- la figure 38 illustre une troisième opération complexe consistant en une lecture par propagation;
- la figure 39 représente le schéma synoptique d'une variante de réalisation du point d'accès représenté sur la figure 6, cette variante comportant des moyens logiques supplémentaires pour réaliser la troisième opération complexe;
- la figure 40 représente le schéma synoptique d'une variante de réalisation du point d'accès représenté sur la figure 12, cette variante comportant des moyens logiques supplémentaires pour réaliser la troisième opération complexe;
- la figure 41 illustre une quatrième opération complexe consistant à libérer des relations par propagation;
- la figure 42 représente le schéma synoptique d'une variante de réalisation du point d'accès représenté sur la figure 6, cette variante permettant de réaliser la quatrième opération complexe;
- la figure 43 représente un chronogramme illustrant le fonctionnement de cette variante;
- la figure 44 représente le schéma synoptique d'une variante de réalisation du point d'accès représenté sur la figure 12, cette variante comportant des moyens supplémentaires permettant l'exécution de la quatrième opération complexe;
- la figure 45 représente un chronogramme illustrant la réalisation de la quatrième opération complexe;
- la figure 46 illustre une cinquième opération complexe consistant à libérer une relation entre deux objets et à insérer un nouvel objet entre ces deux objets en établissant deux nouvelles relations;
- la figure 47 illustre la mise en oeuvre de cette cinquième opération complexe;

- les figures 48 et 49 représentent les schémas synoptiques de deux variantes du premier exemple de réalisation, ces variantes comportant des moyens logiques supplémentaires pour permettre de réaliser la cinquième opération complexe;
- les figures 50 et 51 représentent les schémas synoptiques de deux variantes du second exemple de réalisation, ces variantes comportant des moyens logiques supplémentaires pour permettre de réaliser la cinquième opération complexe;
- la figure 52 illustre une sixième opération complexe consistant à éliminer un objet E connu, dans une chaîne linéaire d'objets reliés par des relations sans connaître ses objets adjacents, et à établir automatiquement une relation directe entre les deux objets adjacents éventuels qui encadraient l'objet éliminé;
- la figure 53 représente le schéma synoptique d'une variante du premier exemple de réalisation, cette variante comportant des moyens logiques supplémentaires par rapport à la variante représentée sur la figure 30, pour permettre la réalisation de la sixième opération complexe;
- la figure 54 représente un chronogramme illustrant le fonctionnement de cette variante;
- la figure 55 représente le schéma synoptique d'une variante de réalisation du point d'accès représenté sur la figure 12, cette variante comportant des moyens logiques supplémentaires pour permettre la réalisation de la sixième opération complexe;
- la figure 56 représente le schéma synoptique d'un troisième exemple de réalisation d'un élément de mémoire de relation, pour le dispositif selon l'invention cette variante comportant des moyens logiques supplémentaires permettant de réaliser la première opération complexe et la sixième opération complexe, c'est-à-dire une libération de toutes les relations existant entre un objet donné et tout autre objet, puis l'établissement automatique de liaisons entre des objets qui étaient précédemment reliés indirectement par cet objet donné;
- la figure 57 représente un chronogramme illustrant le fonctionnement de cette variante pour réaliser la sixième opération complexe;
- les figures 58 et 59 représentent respectivement des variantes du premier et du second exemple de réalisation.

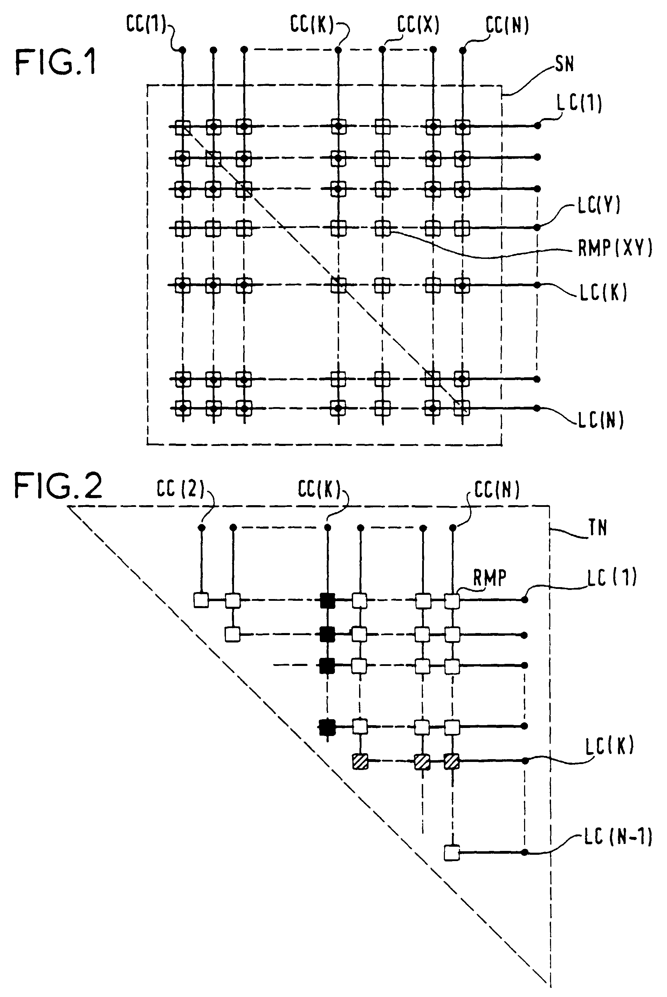

La figure 1 représente le schéma synoptique d'une partie d'un premier exemple de réalisation non optimisé du dispositif selon l'invention. Cette partie comporte un réseau carré SN constitué d'une matrice d'éléments de mémoire, RMP, chaque élément mémorisant l'existence ou l'inexistence d'une relation susceptible d'associer deux objets appartenant à un même ensemble E constitué de N objets identifiables respectivement par N identificateurs distincts : n°1,...,N. Dans un premier temps, nous considérerons un ensemble E homogène, c'est-à-dire constitué d'objets appartenant à une seule catégorie. Par exemple, ils sont tous des cellules, ou ils sont tous des intervalles temporels.

Les circuits logiques exploitant les informations mémorisées ne sont pas représentés. Le réseau SN comporte N lignes et N colonnes, chaque ligne et chaque colonne comportant N éléments RMP. Les éléments RMP sont placés aux points de croisement de bus de ligne LC(1)...LC(N) desservant respectivement les lignes de la matrice et de bus de colonne CC(1)....CC(N) desservant respectivement les colonnes de la matrice.

L'existence d'une relation entre le X-ième objet, par exemple, et le Y-ième objet, pris dans cet ordre, est mémorisée en inscrivant un bit de valeur 1 dans l'élément RMP(X,Y) situé au point de croisement des bus CC(X) et LC(Y). La détermination de l'existence ou de l'inexistence d'une relation entre ces deux objets peut être faite en lisant le contenu de cet élément.

La commande d'écriture et de lecture par les bus sera décrite plus loin. On entend par bus tout moyen classique pour acheminer un même signal à destination ou en provenance d'un ensemble d'éléments de mémoire. Le mode de réalisation le plus simple comporte un conducteur par signal, mais d'autres modes de réalisation classiques mettant en oeuvre un multiplexage sont utilisables dans le dispositif selon l'invention.

Une telle structure nécessite $N^2$ éléments de mémoire RMP pour un ensemble E constitué de N objets. Il apparaît rapidement que certains de ces éléments sont inutiles. Ceux situés sur la diagonale de la matrice, représentée en pointillés, sont inutiles car chaque objet n'a pas de relation avec lui-même. D'autre part, les relations rencontrées en pratique sont généralement des relations symétriques : réciproques ou inverses. Dans le cas de relations réciproques, si l'objet X a une certaine relation avec un objet Y, ce dernier a la même relation avec l'objet X. Par exemple la relation "identique à" est symétrique. Dans le cas de relations inverses, si l'objet X a une certaine relation avec un objet Y, alors Y a une autre relation inverse, parfaitement déterminée, avec l'objet X. Par exemple, considèrons l'ordre d'arrivée d'une suite d'objets dans le cadre d'un traitement séquentiel de ces objets selon leur ordre d'arrivée : si un objet X est arrivé avant un objet Y, on peut en déduire implicitement que l'objet Y est arrivé après l'objet X, et il n'est donc pas nécessaire de mémoriser l'existence de cette seconde relation.

La figure 2 représente le schéma synoptique d'une partie d'un second exemple de réalisation du dispositif selon l'invention, optimisé pour une relation symétrique. Il comporte un réseau TN d'éléments de mémoire, qui a une forme triangulaire. Comme sur la figure 1, les circuits logiques exploitant les informations mémorisées ne sont pas représentés. La matrice d'éléments de mémoire a été simplifiée en supprimant les éléments de mémoire situés sur la diagonale et ceux situés sur une moitié de la matrice, qui est délimitée par cette diagonale. Les bus CC(1) et LC(N) sont supprimés car ils ne desservent plus aucun élément de mémoire.

En utilisant, par exemple, le bus de colonne CC(K) et les bus de ligne LC(1)....LC(K-1), avec K donné et inférieur ou égal à N, il est possible d'inscrire ou de lire des informations traduisant l'existence ou l'inexistence d'une relation entre un objet de rang K et K-1 autres objets n°1,...,K-1. Les éléments RMP concernés sont représentés en noir. L'objet de rang K sera appelé objet K, dans ce qui suit.

En utilisant les bus de colonne CC(R+1),...,CC(N) et le bus de ligne LC(K), il est en outre possible d'inscrire ou de lire dans les éléments RMP des informations indiquant l'existence ou l'inexistence de relations entre l'objet K et les objets K+1,...,N. Les éléments RMP concernés sont représentés avec des hâchures. Il apparaît donc que les bus CC(K) et LC(K) sont utilisés simultanément pour écrire ou lire les informations concernant les relations entre l'objet K et tous les autres objets de l'ensemble des objets 1,...,N. Il est possible de relier ensemble ces deux bus à un même point qui sera appelé point d'accès, noté AP(K) pour l'objet K.

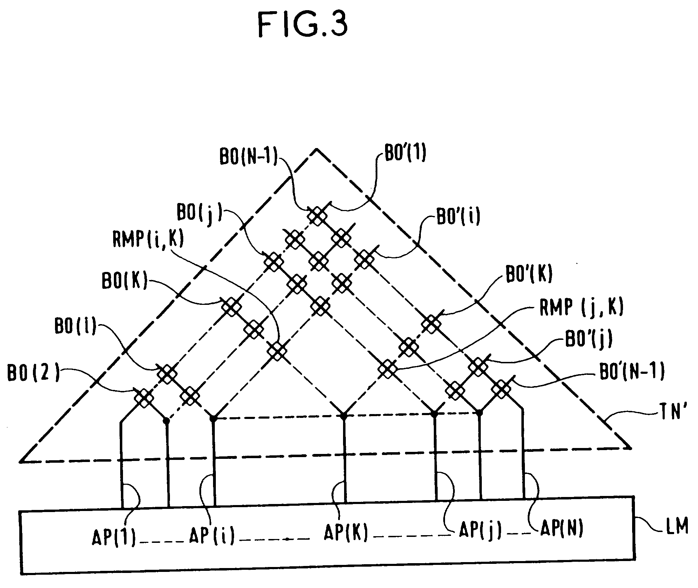

La figure 3 représente le schéma synoptique d'un troisième exemple de réalisation du dispositif selon l'invention, optimisé pour une relation symétrique, et dans lequel il n'y a qu'un seul point d'accès AP(K) pour chaque objet K, K variant de 1 à N. Il comporte un réseau triangulaire TN' ayant, par exemple, la forme d'un triangle rectangle. Les N bus de colonne CC(X) et les N bus de ligne LC(Y) sont remplacés par N bus dits orthogonaux comportant chacun deux branches orthogonales entre elles et ayant une extrémité commune reliée à un point d'accès. Chaque bus orthogonal correspond respectivement à un objet. Par exemple le point d'accès AP(K), correspondant à l'objet de rang K dans un ensemble de N objets, est relié à un bus orthogonal comportant une branche BO(K) et une branche BO'(K) parallèles respectivement aux deux côtés du réseau TN' qui forment un angle droit.

Pour mémoriser une information représentant l'existence ou l'inexistence d'une relation symétrique entre deux objets distincts pris parmi N, ce réseau TN' comporte $\frac{N(N-1)}{2}$ éléments de mémoire RMP. Les éléments de mémoire RMP(i,K) mémorisant des informations de relation entre l'objet de rang K, pour K choisi entre 1 et N, et les objets de rang i=1 à K-1, sont situés respectivement aux points de croisement de la branche BO(K) et de la branche BO'(i) de chaque bus orthogonal correspondant respectivement aux objets de rang i=1 à K-1. Les éléments de mémoire RMP(j,K) mémorisant des informations de relation entre l'objet de rang K et les objets de rang j=K+1 à N sont situés aux points de croisement de la branche BO'(K) du bus orthogonal correspondant à l'objet de rang K, et de la branche BO(j) de chaque bus de commande correspondant respectivement aux objets de rang j=K+1 à N.

Tous les points d'accès AP(1),...,AP(N) du réseau triangulaire TN' sont reliés à des moyens logiques LM pour fournir aux bus de commande des signaux de commande de lecture et des signaux de commande d'écriture pour gérer les relations entre les objets.

Dans ce qui suit on ne considérera que des relations symétriques et on notera RMP (X,Y) ou RMP(Y,X) l'élément de mémoire qui mémorise l'existence ou l'inexistence d'une relation entre un objet X et un objet Y, et la relation symétrique.

Les exemples de structure de réseau décrits ici comportent des bus de commande ayant la forme de segments de droite orthogonaux entre eux, mais toute autre forme peut convenir à condition que chaque bus correspondant à un objet ait au moins un point de croisement avec chacun des bus de commande correspondant aux autres objets, puisque chaque élément de mémoire doit être situé au point de croisement de deux bus.

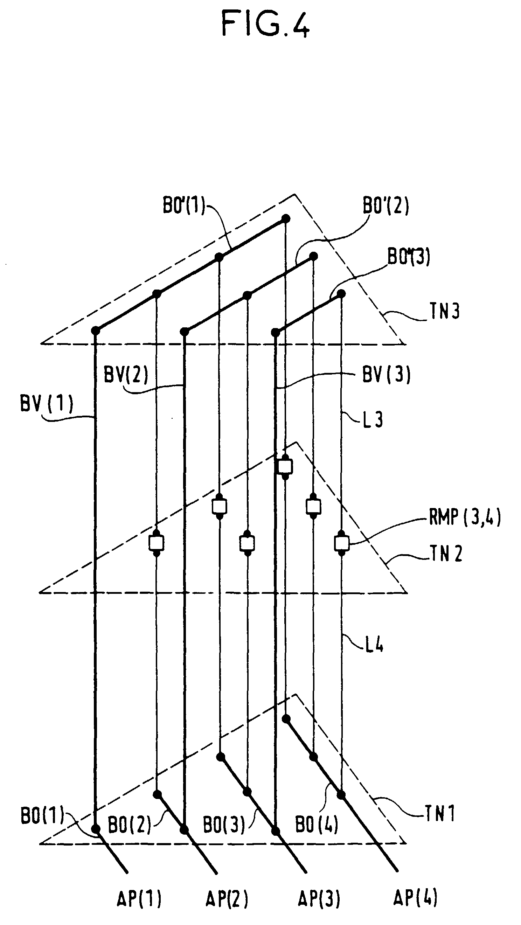

La figure 4 représente le schéma synoptique en perspective d'un quatrième exemple de réalisation de réseau, qui est réparti dans les trois dimensions de l'espace. Cet exemple de réalisation est optimisé pour une relation symétrique entre quatre objets n°1,...,n°4. Il comporte quatre bus orthogonaux constitués chacun d'une première branche et d'une seconde branche, à l'exception d'un bus dont la seconde branche est inutile. Ce quatrième exemple comporte trois couches triangulaires superposées :

- une couche TN1 dans laquelle sont situées les premières branches BO(1),..., BO(4) des bus orthogonaux;
- une couche TN2 dans laquelle sont situés six éléments de mémoire de relation, tel que l'élément RMP(3,4) qui mémorise l'existence ou l'inexistence d'une relation entre l'objet n°3 et l'objet n°4;
- et une couche TN3 où sont situées les secondes branches BO'(1),BO'(2), et BO'(3) des bus orthogonaux.

Les premières branches BO(1),...,BO(4) sont reliées respectivement à quatre points d'accès AP(1),...,AP(4). Les branches BO(1),BO(2),BO(3) sont reliées respectivement aux secondes branches BO'(1),BO'(2), et BO'(3) par des bus BV(1),BV(2),BV(3) qui sont orthogonaux au plan des trois couches. Chaque élément de mémoire est relié à la première branche d'un bus orthogonal et à la seconde branche d'un autre bus orthogonal par une pluralité de liaisons qui sont orthogonales au plan des couches TN1, TN2, TN3. Par exemple, l'élément de mémoire RMP(3,4) est relié à la branche BO'(3) par une pluralité de liaisons L3; et est relié à la branche BO(4) par une pluralité de liaisons L4.

Dans un même ensemble de N objets il peut y avoir simultanément deux types de relation entre objets : des relations qui sont exclusives les unes des autres, et les relations non exclusives :

- Lorsque les relations sont toutes exclusives, c'est-à-dire s'il ne peut y avoir qu'une seule relation entre deux objets de cet ensemble appartenant à deux catégories données, à chaque instant, la nature de la relation entre deux objets peut rester implicite car elle peut être déduite de la catégorie de chacun des deux objets. Un élément unique de mémoire de relation peut alors gérer l'existence d'une relation entre deux objets quelle que soit la nature de cette relation. Par exemple, dans le cas où chacun des deux objets est soit une cellule, soit une position temporelle, il existe trois natures de relation qui sont exclusives selon que les deux objets appartiennent tous les deux à la même catégorie "cellules", ou appartiennent tous les deux à la catégorie "positions temporelles", ou appartiennent respectivement à la catégorie "cellules" et à la catégorie "positions temporelles".

- Lorsque des relations sont non exclusives, donc susceptibles d'exister simultanément entre deux objets donnés, le réseau du dispositif de gestion doit comporter plusieurs éléments de mémoire par couple d'objets, afin de mémoriser l'existence ou l'inexistence de chacune des relations possibles. Ce réseau comporte soit un élément de mémoire par relation, soit un nombre restreint d'éléments de mémoire, en codant les informations représentant l'existence ou l'inexistence de chaque relation. Par exemple, l'existence ou l'inexistence de six relations appelées relations du type 1,2,3,...,6 peut être codée et mémorisée au moyen de trois éléments de mémoire en mémorisant les mots binaires suivants :

| 000 | Pas de relation |
|-----|-----------------|
| 001 | Relation de type 1 |
| 010 | Relation de type 2 |
| 011 | Relation de type 3 |
| 100 | Relation de type 2 et 3 |
| 101 | Relation de type 2 et 4 |
| 110 | Relation de type 5 |
| 111 | Relation de type 5 et 6 |

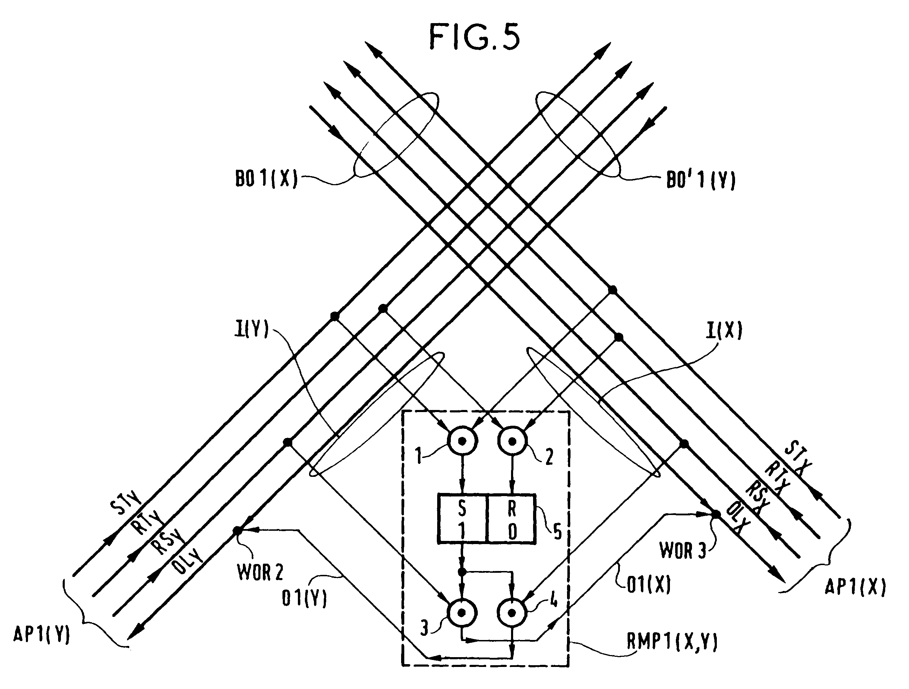

La figure 5 représente le schéma synoptique d'un premier exemple de réalisation d'un élément mémoire, noté RMP1(X,Y). Il peut être utilisé dans l'un quelconque des exemples de réalisation décrit ci-dessus, SN, TN, ou TN'.

Par exemple, cet élément RMP1(X,Y) est situé au point d'intersection d'une branche BO1(X) d'un bus orthogonal relié à un point d'accès AP1(X) correspondant à un objet X, et d'une branche BO'1(Y) d'un autre bus orthogonal relié à un point d'accès AP1(Y) correspondant à un objet Y. Ces deux bus se croisent mais sans être connectés entre eux. Dans les exemples de réalisation décrits ci-après les bus sont du type comportant un conducteur pour chaque signal à transmettre. Mais il est à la portée de l'Homme de l'Art de les remplacer par d'autres arrangements de bus selon des techniques classiques, par exemple permettant de réduire le nombre de conducteurs.

L'élément RMP1(X,Y) comporte :

- une première entrée I(Y) recevant trois signaux, $ST_Y$, $RT_Y$, et $RS_Y$; cette entrée comportant, dans cet exemple, trois conducteurs qui sont reliés respectivement à trois conducteurs de la branche BO'1(Y), transmettant respectivement ces trois signaux, dans cet exemple;
- une seconde entrée I(X) recevant trois signaux $ST_X$, $RT_X$, et $RS_X$; cette entrée comportant, dans cet exemple, trois conducteurs qui sont reliés respectivement à trois conducteurs de la branche BO1(X), transmettant respectivement ces trois signaux dans cet exemple;
- une première sortie O1(Y) reliée à un conducteur de la branche BO'1(Y), transmettant le signal $OL_Y$, ce conducteur de la branche BO'1(Y) constituant un OU câblé WOR2;
- une seconde sortie O1(X) reliée à un conducteur de la branche BO1(X), transmettant un signal $OL_X$, ce conducteur constituant un OU câblé WOR3;
- une bascule 5 comportant : une entrée S de mise à 1; une entrée R de mise à O; et une sortie notée 1;
- une porte logique ET, 1, à deux entrées et une sortie, cette dernière étant reliée à l'entrée S de la bascule 5;
- une porte logique ET, 2, à deux entrées et à une sortie, cette dernière étant reliée à l'entrée R de la bascule 5;
- une porte logique ET, 3, à deux entrées et une sortie, cette dernière constituant la sortie O1(X);
- une porte logique ET, 4, à deux entrées et une sortie, cette dernière constituant la sortie O1(Y).

Les deux entrées de la porte 1 sont reliées respectivement au conducteur de la branche BO'1(Y) fournissant le signal $ST_Y$, et au conducteur de la branche BO1(X) fournissant le signal $ST_X$, de manière à remettre à 1 la bascule 5 lorsque les signaux $ST_Y$ et $ST_X$ sont appliqués simultanément, respectivement sur les points d'accès AP1(X) et AP1(Y) correspondant aux objets X et Y. Les deux entrées de la porte 2 sont reliées respectivement au conducteur de la branche BO'1(Y) qui fournit le signal $RT_Y$, et au conducteur de la branche BO1(X) qui fournit le signal $RT_X$, de manière à remettre à O la bascule 5 lorsque les signaux $RT_Y$ et $RT_X$ sont appliqués simultanément, respectivement sur les points d'accès AP1(X) et AP1(Y) correspondant aux objets X et Y.

Les deux entrées de la porte 3 sont reliées respectivement à la sortie 1 de la bascule 5, qui fournit un 1 lorsque cette bascule est mise à 1, et au conducteur de la branche BO'1(Y) qui fournit le signal $RS_Y$. La porte 1 transmet à la sortie O1(X) le bit mémorisé par la bascule 5, lorsque le signal $RS_Y$ est appliqué au point d'accès AP1(Y) correspondant à l'objet Y, afin de recevoir la valeur de ce bit sur le point d'accès AP1(X) correspondant à l'objet X, ce bit constituant le signal $OL_X$.

Les deux entrées de la porte 4 sont reliées respectivement à la sortie 1 de la bascule 5 et au conducteur de la branche BO1(X) qui fournit le signal $RS_X$. La porte 4 transmet vers la sortie O1(Y) le bit mémorisé par la bascule 5, lorsque le signal $RS_X$ est appliqué au point d'accès AP1(X), afin de recevoir la valeur de ce bit sur le point d'accès AP1(Y) correspondant à l'objet Y, la valeur de ce bit constituant le signal $OL_Y$.

Cet exemple de réalisation RMP1(X,Y) permet donc de mémoriser un bit de valeur 1 dans la bascule 5 lorsque les deux signaux $ST_X$ et $ST_Y$ sont actifs simultanément; ou de mémoriser un bit de valeur O quand les deux signaux $RT_X$ et $RT_Y$ sont actifs simultanément; ou de lire le bit mémorisé dans la bascule 5, sur l'accès AP1(Y) correspondant à l'objet Y, si la lecture est commandée par le signal $RS_X$, ou bien sur le point d'accès AP1(X) correspondant à l'objet X si la lecture est commandée par le signal $RS_Y$. Dans ce premier exemple de réalisation, chaque bus correspondant à un objet transporte des signaux qui ont deux fonctions à la fois : sélection de cet objet, et commande d'une opération.

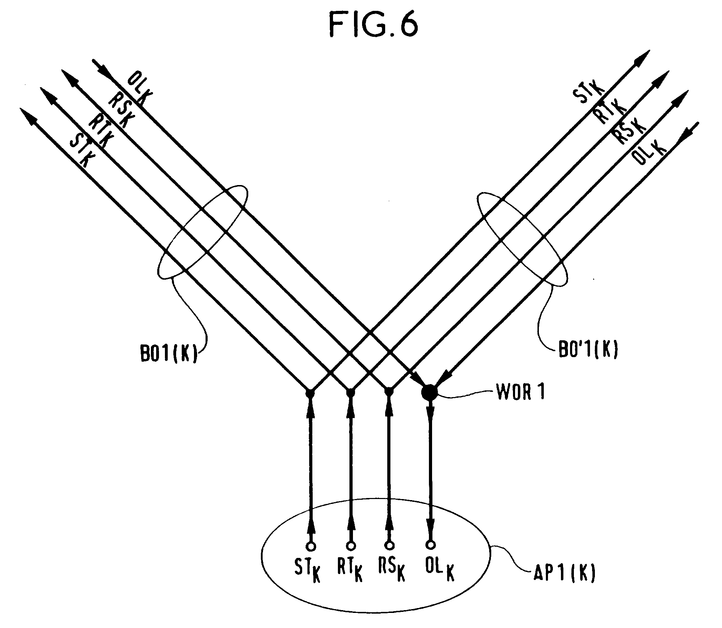

La figure 6 représente à titre d'exemple le bus orthogonal constitué des branches BO1(K) et BO'1(K), et l'accès AP1(K), qui correspondent à l'objet K. Cet accès comporte quatre conducteurs qui sont reliés respectivement aux quatre conducteurs constituant la branche BO1(K), et aux quatre conducteurs constituant la branche BO'1(K). Ces conducteurs permettent les opérations de gestion suivantes :

- inscrire une information, (à savoir) un bit de valeur 1, indiquant l'existence d'une relation entre l'objet K et un autre objet;
- inscrire une information, par exemple un bit de valeur O, indiquant l'inexistence d'une relation entre l'objet K et un autre objet;
- lire une information, à savoir la valeur d'un bit, indiquant l'existence ou la non existence d'une relation entre l'objet K et un autre objet.

Pour réaliser de telles opérations, les signaux de commande appliqués au point d'accès AP(K), sont respectivement les suivants :

- un signal $ST_K$ de commande de mise à 1;
- un signal $RT_K$ de commande de remise à 0;
- un signal $RS_K$ de commande de lecture.

Un quatrième conducteur de l'accès AP1(K) est une sortie fournissant aux circuits logiques LM un signal binaire $OL_K$ résultant d'une lecture dans un ou plusieurs éléments de mémoire, les conducteurs $OL_K$ des branches OB(K) et OB'1(K) constituant un OU câblé, noté WOR1 sur la figure.

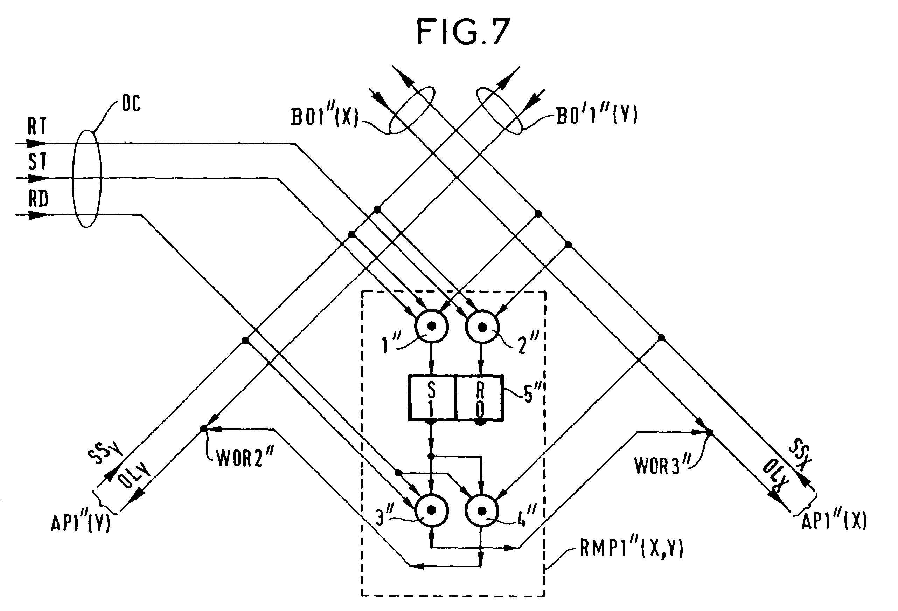

La figure 7 représente le schéma synoptique d'une variante RMP1" (X,Y) du premier exemple de réalisation. Selon cette variante, le nombre de signaux transmis par les bus correspondant respectivement aux objets est minimisé, par contre il y a un bus supplémentaire OC qui est commun pour tous les objets et qui est relié à tous les éléments de mémoire de relation. L'élément RMP1"(X,Y) est situé au point d'intersection d'une branche BO1"(X) d'un bus orthogonal relié à un point d'accès AP1"(X) correspondant à un objet X, et d'une branche BO'1"(Y) d'un autre bus orthogonal relié à un point d'accès AP1"(Y) correspondant à un objet Y. Chaque branche ne comporte que deux conducteurs, l'un transportant un signal de sélection pour sélectionner tous les éléments correspondants à un objet donné, et l'autre transportant un signal de sortie de lecture pour cet objet donné. Le bus commun OC comporte un conducteur pour chacune des opérations à commander :

- un conducteur transporte un signal RT pour commander l'inscription d'une valeur 0 indiquant l'inexistence d'une relation;
- un conducteur transporte un signal ST pour commander l'inscription d'une valeur 1 indiquant l'existence d'une relation;
- un conducteur transporte un signal RD pour commander la lecture d'une information de relation.

Dans cette variante RMP1" du premier exemple de réalisation, il y a donc dissociation totale des signaux de sélection d'objet, $SS_X$ et $SS_Y$, et des signaux communs de commande d'opération : RT, ST, RD.

Dans d'autre variantes de réalisation une dissociation partielle de ces deux fonctions est envisageable.

L'élément de mémoire RMP1"(X,Y) comporte :

- une bascule 5" comportant une entrée S de mise à 1, une entrée R de mise à 0, et une sortie notée 1;
- une porte logique ET, 1", à trois entrées et une sortie, cette dernière étant reliée à l'entrée S de la bascule 5";
- une porte logique ET, 2", à trois entrées et une sortie, cette dernière étant reliée à l'entrée R de la bascule 5";
- une porte logique ET, 3", à trois entrées et une sortie, cette dernière constituant une sortie de l'élément RMP1"(X, Y) et étant reliée à un conducteur de la branche B0'1"(Y), ce conducteur acheminant un signal de sortie de lecture 0LY et constituant un OU câblé WOR3";
- une porte logique ET, 4", à trois entrées et une sortie, cette dernière constituant une sortie de l'élément RMP1"(X, Y) reliée à un conducteur de la branche B0'1"(X) transportant un signal de sortie de lecture $OL_X$ et constituant un OU câblé WOR2".

Une première entrée de la porte 1" est reliée à un conducteur de la branche BO'1"(Y) pour recevoir un signal d'adressage $SS_Y$. Une deuxième entrée de la porte 1" est reliée à un conducteur de la branche BO1"(X) pour recevoir un signal d'adressage $SS_X$. Une première entrée et une deuxième entrée de la porte 2" sont reliées respectivement de la même façon. Quel que soit le type d'opération à réaliser, l'écriture d'un 1 ou d'un 0 dans la bascule 5", un élément RMP1"(X,Y) est sélectionné en fournissant simultanément un signal de sélection $SS_X = 1$ sur le point d'accès AP1"(X) et un signal de sélection, $SS_Y = 1$ sur le point d'accès AP1"(Y) correspondant à l'objet Y. La nature de l'opération réalisée est déterminée par un signal de commande d'opération appliqué sur le bus commun OC. La troisième entrée de la porte 1" est reliée au conducteur du bus commun OC pour recevoir le signal ST pour écrire une valeur 1 dans la bascule 5" lorsque les trois signaux $SS_Y$, $SS_X$, et ST sont actifs simultanément. La troisième entrée de la porte 2" est reliée au conducteur du bus commun OC fournissant le signal RT pour écrire une valeur O dans la bascule 5", lorsque les trois signaux $SS_Y$, $SS_X$, et RT sont actifs simultanément.

Une première entrée des portes 3" et 4" est reliée à la sortie 1 de la bascule 5". Une deuxième entrée de la porte 3" est reliée au conducteur de la branche BO'1"(Y) transportant le signal de sélection $SS_Y$. La deuxième entrée de la porte 4" est reliée au conducteur de la branche BO1"(X) transportant le signal sélection $SS_X$. La troisième entrée de la porte 3" et la troisième entrée 4" sont reliées au conducteur du bus commun OC transportant le signal RD, pour commander une lecture lorsque les deux signaux RD et $SS_Y$ sont actifs simultanément, ou bien lorsque les deux signaux RD et $SS_X$ sont actifs simultanément. Dans le premier cas, le signal de sortie de lecture est un signal $OL_X$ fourni à un conducteur de la branche BO1"(X). Dans le deuxième cas, le signal de sortie de lecture est un signal $OL_Y$ fourni à un conducteur de la branche BO'1"(Y).

Naturellement d'autres variantes du premier exemple de réalisation sont à la portée de l'Homme de l'Art, en considérant toutes les variantes intermédiaires entre celles représentées sur les figures 5 et 7.

Il est à remarquer que le caractère individuel des points d'accès correspondant aux différents objets, et des points de mémoire de relation, permet de réaliser de nombreuses opérations en parallèle. Par exemple, dans la variante de réalisation RMP1 représentée sur la figure 5, une opération de lecture à partir d'un objet X, déclenchée en envoyant le signal $RS_X$ sur l'accès AP1(X) provoque une opération de lecture dans tous les éléments de mémoire RMP1(X,Y) pour Y = 1 à N et Y ≠ X. Un signal logique $OL_Y$ de valeur 1 apparaît simultanément sur tous les accès AP1(Y) des objets Y=1,..., N et Y ≠ X ayant une relation établie avec l'objet X considéré, c'est-à-dire dont les éléments de mémoire RMP1(X,Y) contiennent une information binaire de valeur 1.

D'autre part, il est possible d'effectuer une opération de lecture multiple, c'est-à-dire simultanément à partir de plusieurs objets, par exemple $X_1$, $X_2$ et $X_3$. Dans ce cas, un signal logique OL(Y) de valeur 1 apparaît simultanément sur tous les accès AP1(Y) des objets Y=1,...,N qui ont une relation établie avec au moins un des objets $X_1, X_2, X_3$. Dans une telle opération de lecture multiple, l'ensemble des objets Y identifiés comme ayant une relation établie avec au moins un des objets $X_1, X_2,...,X_x$, est donc la réunion (au sens logique du terme) des x ensembles d'objets Y qui seraient identifiés par x lectures individuelles à partir d'un seul objet parmi $X_1, X_2,...,X_x$. Outre l'identification de tous les objets ayant une relation établie avec au moins un des objets $X_1, X_2,...,X_x$, c'est-à-dire avec $X_1$, ou avec $X_2$,..., ou avec $X_x$, une opération de lecture multiple effectuée à partir de l'ensemble des N objets simultanément permet d'identifier tous les objets qui ont au moins une relation avec un autre objet, d'une part, et tous les objets qui n'ont aucune relation avec les autres objets d'autre part, c'est-à-dire typiquement d'identifier des objets "occupés" ou "utilisés" et des objets "libres" ou "non utilisés" respectivement.

Une opération d'écriture déclenchée en appliquant le signal de mise à 1,$ST_K$, à n points d'accès correspondant à un sous-ensemble de n objets prédéterminés, permet de mémoriser simultanément l'existence de toutes les relations entre deux objets pour toutes les paires d'objets, réalisables avec ce sous-ensemble de n objets. De manière analogue il est possible de mémoriser l'inexistence de toutes les relations entre toutes les paires d'objets réalisables entre les objets d'un sous-ensemble de n objets en appliquant un signal de mise à zéro, RT=1, aux n points d'accès des objets de ce sous-ensemble prédéterminé.

Dans un premier temps nous ne considérerons que des opérations réalisées sur des sous-ensembles prédéterminés, c'est-à-dire soit statiques, c'est-à-dire dont la composition est fixée, soit dynamiques mais dont la composition est connue et gérée à l'extérieur du dispositif selon l'invention. Dans un second temps, nous considérerons des opérations plus complexes réalisées sur des sous-ensembles d'objets non prédéterminés, c'est-à-dire dont la composition n'est pas nécessairement connue à l'extérieur du dispositif.

Lorsque les N objets sont structurés en plusieurs sous-ensembles d'objets prédéterminés dont la composition est connue à l'extérieur du dispositif, les opérations de lecture et les opérations d'écriture sont possibles comme décrit dans les paragraphes suivants.

Si une opération de lecture, à partir d'un ou plusieurs objets, doit être limitée à un sous-ensemble connu de n objets, il suffit que les circuits logiques LM comporte un circuit logique qui ne prenne en compte que les n signaux OL venant des n points d'accès correspondant aux n objets de ce sous-ensemble.

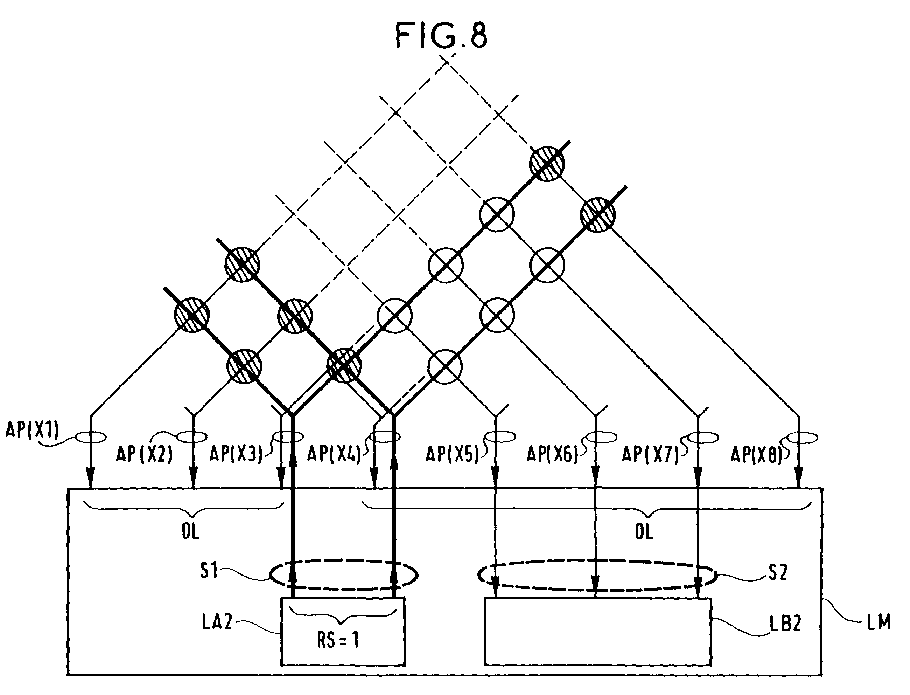

A titre d'exemple, la figure 8 illustre l'identification des relations établies entre les objets $X_3$ et $X_4$ constituant un sous-ensemble S1 d'un ensemble E constitué des objets $X_1,X_2,...,X_8$; et les objets $X_5,X_6,X_7$ constituant un autre sous-ensemble S2. Les éléments de mémoire de relation qui sont lus sont représentés par des cercles. Ils sont du type RMP1 représenté sur la figure 5.

Une telle identification peut se faire par lecture simultanée à partir des objets de l'un des sous-ensembles (S1 par exemple) et prise en compte sélective des signaux OL venant seulement des points d'accès des objets de l'autre sous-ensemble (S2 dans l'exemple choisi).

Pour limiter la lecture aux relations concernant les objets du sous-ensemble S1, les circuits logiques LM comportent un circuit logique LA2 émettant les signaux RS = 1 seulement sur les points d'accès AP(X3) et AP(X4) correspondant aux objets du sous-ensemble S1. Pour limiter la lecture aux relations concernant les objets du sous-ensemble S2, les circuits logiques LM comportent un circuit logique LB2 qui ne prend en compte que les signaux OL provenant des points d'accès AP(X5),AP(X6),AP(X7), correspondant au sous-ensemble S2. Les cercles hachurés représentent les éléments de mémoire qui sont lus mais dont l'information n'est pas prise en compte par le circuit LB2. Dans cet exemple, les signaux OL = 1 indiquent quels objets de l'ensemble S2 ont au moins une relation avec les objets de l'ensemble S1.

Examinons maintenant les possibilités d'une opération d'écriture sur des sous-ensembles connus à l'extérieure du dispositif.

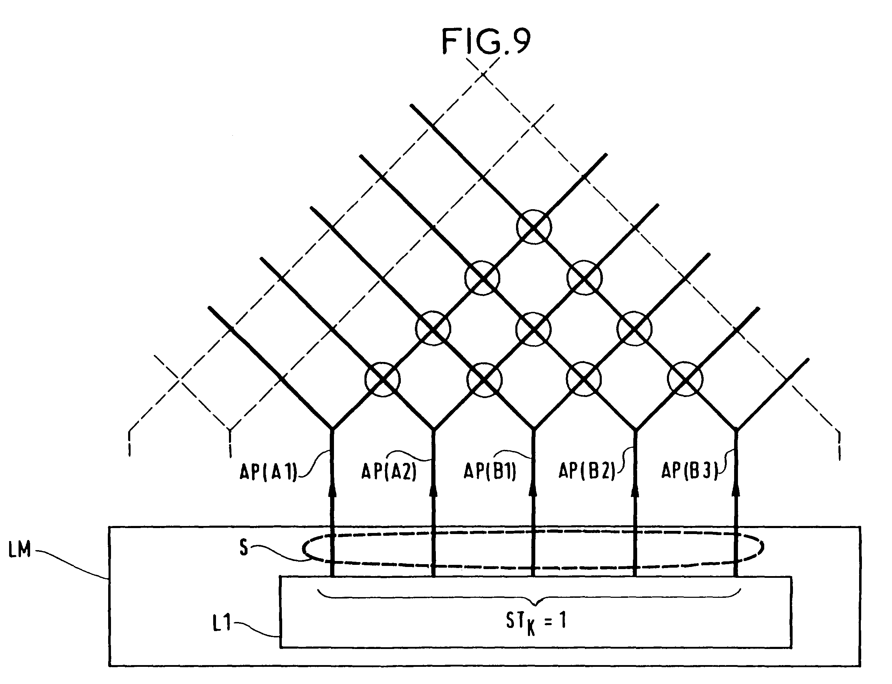

La figure 9 illustre un exemple pour n = 5. Considérons un sous-ensemble S constitué de cinq objets : A1, A2, , B2, B3, dans un ensemble E de huit objets (N = 8), appartenant à une même catégorie. Par exemple, l'existence de toutes les relations possibles entre ces cinq objets peut être mémorisée au moyen d'une seule opération d'écriture, en appliquant simultanément cinq signaux $ST_K$=1 respectivement aux points d'accès AP(A1),AP(A2),AP(B1), AP(B2), AP(B3), au moyen d'un circuit logique L1 appliquant une sélection du sous-ensemble S, et faisant partie des circuits logiques LM. Les bus qui sont activés sont représentés en traits continus. Les bus inactivés sont représentés en pointillés. Les éléments de mémoire qui réalisent l'opération d'écriture sont représentés chacun par un cercle.

Il apparaît que l'existence de toutes les relations A1-A2,A1-B1,A1-B2,A1-B3,A2-B1,A2-B2,A2-B3,B1-B2, B1-B3,B2-B3 peut être mémorisée par cette unique opération. Il est possible d'effacer de manière analogue l'existence de toutes ces relations, en une seule opération.

Cependant ce premier exemple de réalisation des éléments de mémoire ne permet pas de réaliser des opérations plus sélectives, mettant en oeuvre au moins deux sous-ensembles de l'ensemble E, par exemple : un sous-ensemble S1 constitué de n1=2 objets A1 et A2, et un sous-ensemble S2 constitué de n2=3 objets,B1,B2,B3. Il n'est pas possible par exemple de :

- mémoriser l'existence de relations entre l'objet A1 et chacun des n2 objets B1,B2,B3, sans mémoriser l'existence de relations B1-B2,B1-B3,B2-B3 au sein du sous-ensemble S2;
- ou mémoriser l'existence de relations entre chaque objet du sous-ensemble S1 de n1 objets, A1,A2 et chaque objet du sous-ensemble S2 de n2 objets B1,B2,B3 sans mémoriser l'existence d'une relation A1-A2 entre les objets du sous-ensemble S1 et sans mémoriser l'existence d'une relation B1-B2,B1-B3,B2-B3 entre les objets du sous-ensemble S2.

La mémorisation de l'inexistence de relations, autrement dit l'effacement du contenu des éléments de mémoire, pose un problème similaire.

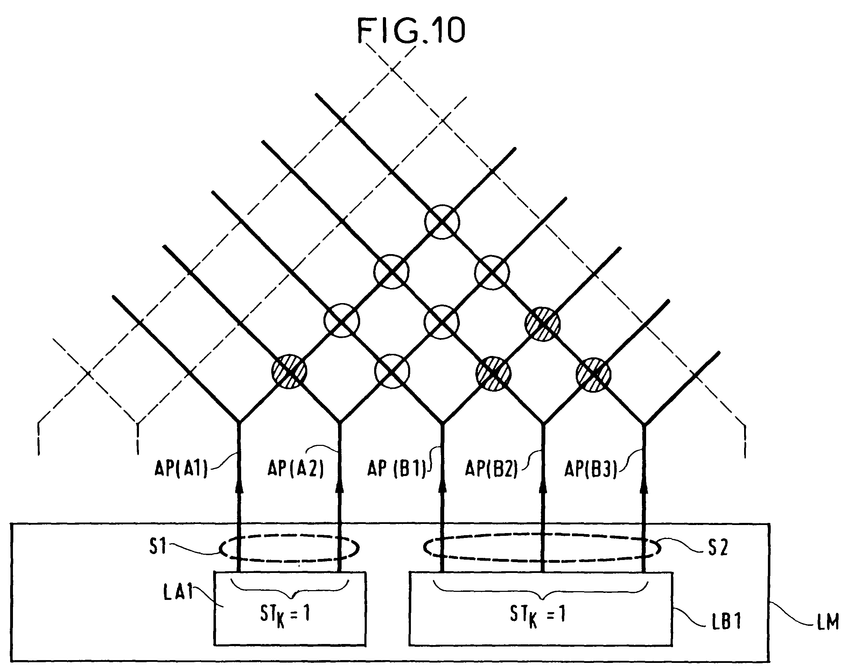

La figure 10 illustre ce problème en montrant le fonctionnement du dispositif selon l'invention lorsqu'il est constitué d'éléments de mémoire RMP1 tels que celui représenté sur la figure 5. Deux circuits logiques LA1 et LB1 activent, par des signaux $ST_K$=1, respectivement les accès : AP(A1) et AP(A2) d'une part, et AP(B1), AP(B2), AP(B3), d'autre part, qui correspondent respectivement aux sous-ensembles S1 et S2 de l'ensemble E. Les bus activés sont représentés en traits continus. Les éléments de mémoire qui sont activés sont représentés par des cercles. Ceux qui mémorisent l'existence d'une relation entre un objet du sous-ensemble S1 et un objet du sous-ensemble S2 sont représentés en blanc. Ceux qui mémorisent l'existence d'une relation entre deux objets du même sous-ensemble, S1 ou S2, sont hachurés. Il est souhaitable de pouvoir mémoriser ou effacer une information dans les éléments représentés en blanc, sans faire forcément la même opération dans les éléments représentés hachurés.

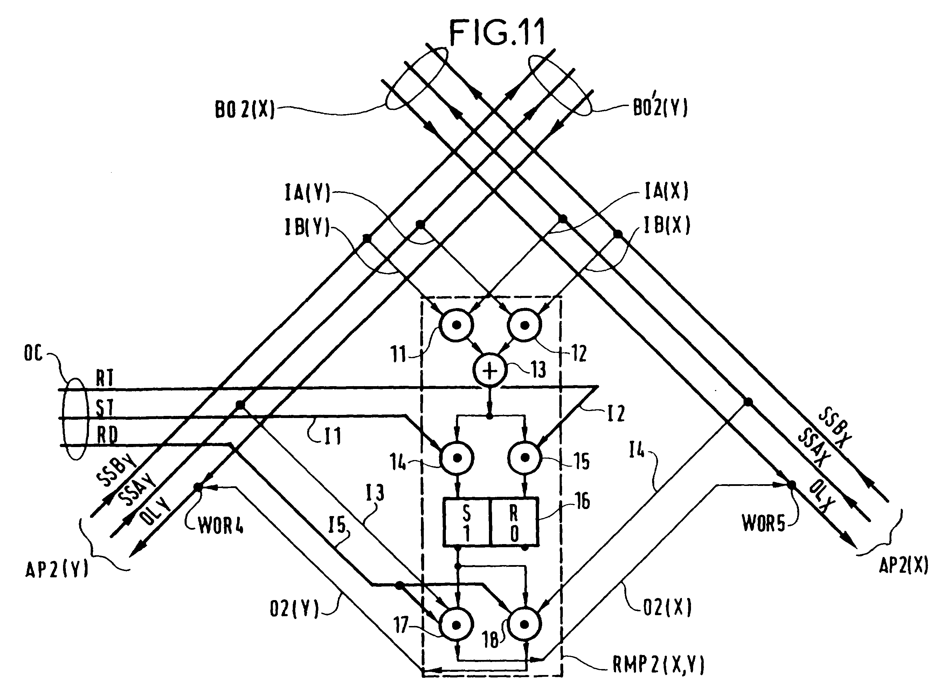

La figure 11 représente le schéma synoptique d'un second exemple de réalisation, RMP2(X, Y), de l'élément mémoire utilisé dans le dispositif selon l'invention. Ce second exemple de réalisation présente l'avantage de permettre une mise à 1 ou une mise à O plus sélective car il permet de modifier les relations entre deux objets appartenant respectivement à deux sous-ensembles S1 et S2, sans nécessairement modifier les relations à l'intérieur de ces sous-ensembles. Les bus n'ont pas les mêmes fonctions que dans le premier exemple de réalisation représenté sur les figures 5 et 6. Un premier bus noté OC transmet trois signaux. Dans cet exemple, ce bus comporte trois conducteurs dont le cheminement est indépendant de la disposition des éléments de mémoire car il est commun à tous les éléments de mémoire, et fournit des signaux dits banalisés commandant une opération sélectionnée parmi plusieurs opérations prédéterminées. Les trois signaux transmis sont les suivants :

- un signal RT commandant la remise à O de tout élément de mémoire qui est adressé par ailleurs;
- un signal ST qui remet à 1 tout élément de mémoire qui est adressé par ailleurs;
- un signal RD qui commande une lecture dans tout élément de mémoire qui est adressé par ailleurs.

Ce premier bus OC est relié à trois entrées du dispositif, non représentées. Ces trois entrées sont indépendantes des points d'accès individuels qui correspondent respectivement aux N objets du dispositif de gestion.

Chaque élément RMP2 est situé au point d'intersection de deux bus individuels correspondant respectivement à deux objets, ces deux bus pouvant être du type bus de ligne, respectivement de colonne, ou du type bus orthogonal, qui ont été décrits en référence aux figures 1 et 3. Considérons par exemple deux bus du type bus orthogonal. Un premier bus orthogonal comporte notamment une branche BO2(X) et est relié à un point d'accès AP2(X) correspondant à un objet X. Un second bus orthogonal comporte notamment une branche BO'2(Y) et est relié à un point d'accès AP2(Y) correspondant à un objet Y. La branche BO2(X) transmet trois signaux. Dans cet exemple, elle comporte trois conducteurs transmettant respectivement:

- un signal $SSA_X$ d'adressage et de sélection de groupe A pour l'écriture, ou d'adressage pour la lecture;
- un signal $SSB_X$ d'adressage et de sélection de groupe B pour l'écriture;
- un signal de sortie, $OL_X$, résultant de la lecture des éléments de mémoire RMP2(X, Y) reliés au bus orthogonal correspondant à l'accès AP2(X), chaque élément RMP2(X, Y) possédant une sortie O2(X) qui est reliée à un même conducteur de la branche LC2(X) pour constituer un OU câblé WOR5.

La branche BO'2(Y) transmet trois signaux. Dans cet exemple, elle comporte trois conducteurs transmettant respectivement :

- un signal $SSA_Y$ d'adressage et de sélection de groupe A pour l'écriture, ou d'adressage pour la lecture,
- un signal $SSB_Y$ d'adressage et de sélection de groupe B pour l'écriture;
- un signal de sortie, $OL_Y$, résultant de la lecture des éléments de mémoire RMP2(X,Y) reliés au bus orthogonal correspondant au point d'accès AP2(Y), ceux-ci ayant chacun une sortie O2(Y) reliée à un même conducteur de la branche BO'2(Y) pour constituer un OU câblé WOR5.

Pour la lecture, il n'y a pas de sélection de groupe A ou B, un seul signal d'adressage suffit :
$SSA_Y = 1$ sur le bus BO'2(Y) en cas de lecture à partir de l'objet Y, ou $SSA_X=1$ sur le bus BO2(X) en cas de lecture à partir de l'objet X.

Pour l'écriture, un objet K peut appartenir à l'un et/ou à l'autre des deux groupes A et B selon les signaux $SSA_K$ et $SSB_K$ qui sont activés sur l'accès AP(K) :

- si $SSA_K =1$ et $SSB_K=O$, l'objet K appartient seulement au groupe A, pour l'écriture,
- si $SSA_K= O$ et $SSB_K=1$, l'objet K appartient seulement au groupe B, pour l'écriture,
- si $SSA_K=O$ et $SSB_K=O$, l'objet K n'appartient à aucun des groupes A et B (aucun des éléments de mémoire mémorisant l'existence ou l'inexistence des relations de l'objet K avec d'autres objets n'est activé),
- si $SSA_K= 1$ et $SSB_K= 1$, l'objet K appartient à la fois au groupe A et au groupe B.

Cet exemple d'élément de mémoire RMP2(X,Y), illustré sur la figure 11, comporte :

- deux entrées, IA(Y) et IA(X), de sélection en écriture, qui sont reliées respectivement au conducteur transmettant le signal $SSA_Y$ dans la branche BO'2(Y), et au conducteur transmettant le signal $SSA_X$ dans la branche BO2(X);

- deux entrées, IB(Y) et IB(X), de sélection en écriture, qui sont reliées respectivement au conducteur transmettant le signal $SSB_Y$ dans la branche BO'2(Y) et au conducteur transmettant le signal $SSB_X$ dans la branche BO2(X);
- une entrée banalisée de remise à O, I2, reliée au conducteur du bus OC transmettant le signal RT;
- une entrée banalisée de mise à 1, I1, reliée au conducteur du bus OC transmettant le signal ST;
- une entrée banalisée de commande lecture, I5, reliée au conducteur du bus OC transmettant le signal RD;
- deux entrées de sélection en lecture, I3 et I4, qui sont reliées respectivement au conducteur transmettant le signal $SSA_Y$ dans la branche BO2'(Y) et au conducteur transmettant le signal $SSA_X$ dans la branche BO2(X);
- les sorties O2(Y) et O2(X) mentionnées précédemment;
- deux portes ET, 11 et 12, ayant chacune une première entrée, une seconde entrée, et une sortie; les premières entrées des portes 11 et 12 constituant les entrées IB(Y) et IA(Y); et les secondes entrées des portes 11 et 12 constituant les entrées IA(X) et IB(X);
- une porte OU, 13, ayant deux entrées reliées respectivement aux deux sorties des portes 11 et 12, et ayant une sortie;
- deux portes ET, 14 et 15, ayant chacune une première entrée, une seconde entrée, et une sortie ; les premières entrées étant reliées ensemble à la sortie de la porte OU 13; les secondes entrées des portes 14 et 15 constituant respectivement les entrées I1 et I2 de remise à O et de remise à 1 de l'élément RMP2(X, Y);
- une bascule 16 ayant : une entrée de remise à 1, notée S, reliée à la sortie de la porte 14; une entrée de remise à O, notée R, reliée à la sortie de la porte 15; et une sortie;
- deux portes ET, 17 et 18, ayant chacune une première entrée, une deuxième entrée, une troisième entrée, et une sortie; les premières entrées des portes 17 et 18 étant reliées ensemble et constituant l'entrée I5 de commande de lecture; les deuxièmes entrées des portes 17 et 18 constituant respectivement les entrées I3 et I4 de sélection en lecture, les troisièmes entrées des portes 17 et 18 étant reliées ensemble à la sortie de la bascule 16, et les sorties des portes 17 et 18 constituant respectivement les sorties O2(Y) et O2(X).

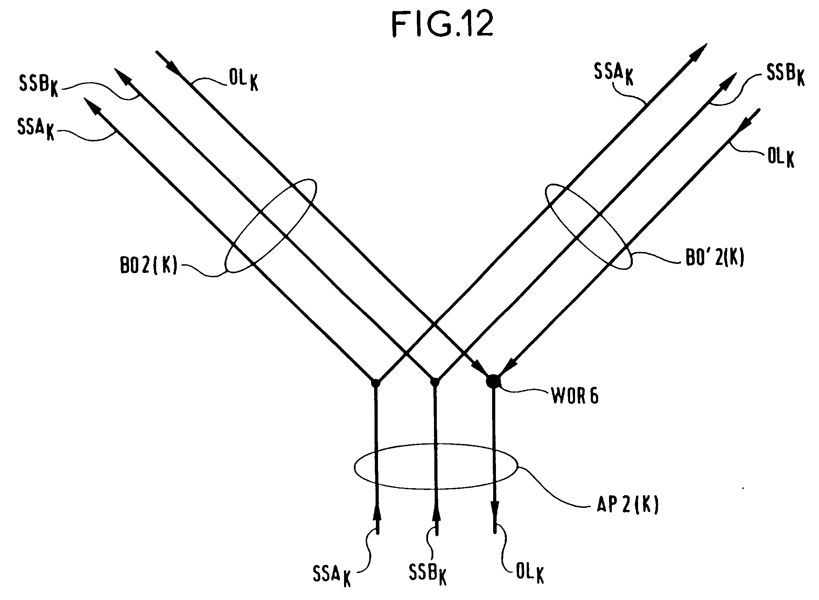

La figure 12 représente un bus orthogonal et un point d'accès AP(K) correspondant à un objet K pris à titre d'exemple. Ce bus orthogonal comporte deux branches : BO2(K) et BO'2(K). Le point d'accès AP2(K) comporte :

- un conducteur relié à un conducteur de la branche BO2(K) et à un conducteur de la branche BO'2(K) pour transmettre le signal $SSA_K$;
- un conducteur relié à un conducteur de la branche BO2(K) et à un conducteur de la branche BO'2(K) pour transmettre le signal $SSB_K$;
- un conducteur relié à un conducteur de la branche BO2(K) et à un conducteur de la branche BO'2(K) pour recevoir un signal $OL_K$ en constituant un OU câblé WOR6.

Au niveau d'un élément de mémoire de relation RMP2(X, Y) relatif aux objets X et Y, une opération d'écriture dans l'élément de mémoire est réalisée lorsque les 2 conditions suivantes sont réalisées sur les bus de commande :

- ST = 1 ou RT = 1, sur le bus commun OC, respectivement pour écrire 1 ou 0;
- $SSA_X$ = 1 et $SSB_Y$ = 1, ou $SSB_X$ = 1 et $SSA_Y$ = 1, sur les bus de commande BO2(X) et BO2'(Y) respectivement.

Selon cette dernière condition logique, $SSA_X.SSB_Y + SSB_X. SSA_Y = 1$, un élément de mémoire de relation RMP2(X, Y) est sélectionné, pour l'écriture, chaque fois que l'objet X appartient à un au moins l'un des groupes A ou B ($SSA_X$=1 ou $SSB_X$=1) et que l'autre objet Y appartient au moins à l'autre groupe, respectivement B ou A ($SSB_Y$ = 1 ou $SSA_Y$ = 1), indépendamment du fait que chacun des objets X et Y appartienne à un seul groupe ou aux deux groupes.

Pour la lecture, cet élément de mémoire RMP2(X, Y) est commandé de la manière suivante : la lecture des relations existant entre l'objet K et tout autre objet L (sans distinguer des groupes A et B) est réalisée en faisant RD=1 sur le bus OC, ce signal étant commun pour tous les éléments de mémoire, et en faisant $SSA_K$ = 1 sur l'accès AP(K) correspondant à l'objet K considéré (le signal $SSB_K$ est sans effet pour la lecture). Un signal $OL_i$= 1 apparaît alors sur chaque point d'accès AP(i) correspondant aux objets i ayant une relation établie avec K, c'est-à-dire dont l'élément de mémoire RMP2(K, $L_i$) contient une information binaire de valeur 1.

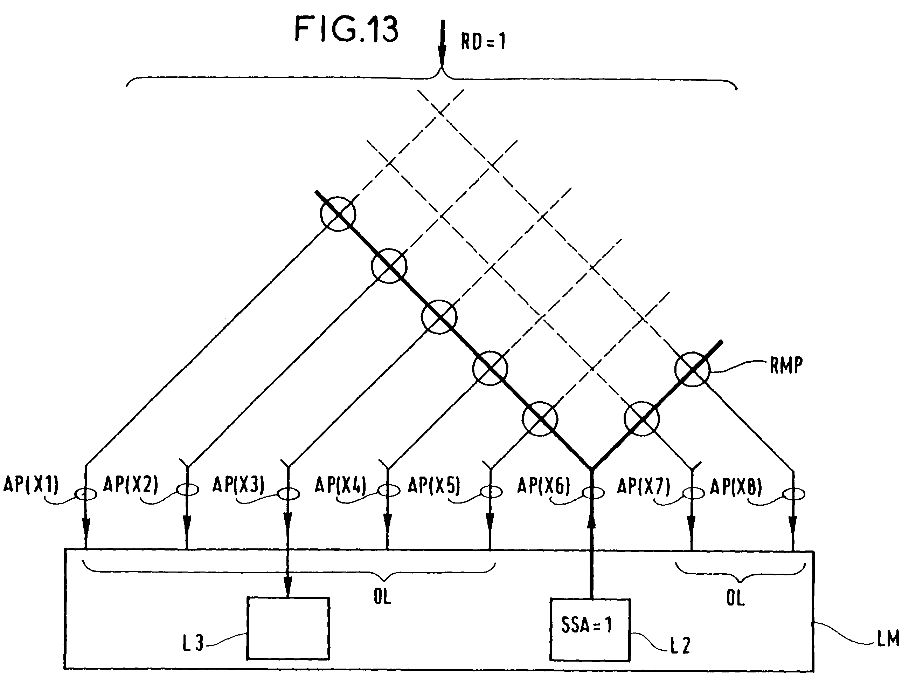

Cette lecture est illustrée par la figure 13. Elle représente les circuits logiques LM qui gèrent les relations d'un ensemble E constitué de huit objets : X1, ..., X8. La figure 13 illustre la lecture des éléments de mémoire de relation entre l'objet X6 et tous les autres objets de l'ensemble E. Un circuit logique L2 fournit un signal SSA = 1 (le signal SSB étant quelconque pour la lecture) à l'accès AP(X6). Les éléments de mémoire lus par l'application simultanée du signal RD=1 sur le bus commun et du signal SSA= 1 sont représentés respectivement par des cercles.

Comme dans le cas des éléments de mémoire précédents RMP1, si la lecture doit être limitée à un sous-ensemble connu de l'ensemble X1, ..., X5, X7, X8, il suffit que les circuits logiques LM comportent un circuit logique qui ne prenne en compte que les signaux OL venant des points d'accès correspondant à ce sous-ensemble. Par exemple, pour lire l'information indiquant l'existence ou non d'une relation entre l'objet X6 et un seul autre objet, X3 par exemple, il suffit de tester la valeur du signal OL3, 1 ou 0, fournie par l'accès AP(X3), au moyen d'un circuit logique L3 relié à cet accès.

Plus généralement, le deuxième exemple de réalisation RMP2(X, Y) permet d'effectuer les mêmes opérations de lecture que le premier exemple RMP1(X, Y) : opération de lecture simple ou multiple (simultanée à partir de plusieurs objets); identification de relations établies entre objets de deux sous-ensembles (cas illustré par la figure 8 avec RMP1 (X, Y)).

Selon une variante de réalisation de l'élément RMP1(X, Y) ou de l'élément RMP2(X,Y), lorsque cet élément de mémoire réalise une opération de lecture, il restitue une information de relation simultanément sur le bus individuel BO1(X), respectivement BO2(X), correspondant à un premier objet, et sur le but individuel BO'(Y), respectivement BO'2(Y), correspondant à un second objet, s'il reçoit un signal de sélection par au moins un de ces deux bus individuels, ainsi qu'un signal de commande de lecture. Lorsque cette variante de réalisation est utilisée, les moyens logiques LM doivent être adaptés à cette variante, c'est-à-dire être capables de distinguer parmi les signaux de sortie de lecture celui qui est fourni par l'accès où est appliqué le signal de sélection, et celui ou ceux fournis par d'autres accès.

En ce qui concerne les opérations d'écriture, le deuxième exemple de réalisation RMP2(X,Y) permet d'effectuer :

- les mêmes opérations d'écriture que celles permises par le premier exemple de réalisation RMP1(X, Y), c'est-à-dire des opérations non sélectives effectuées sur un seul sous-ensemble prédéterminé de n objets;
- en outre des opérations d'écriture particulières, c'est-à-dire effectuées sélectivement entre les n1 objets d'un premier sous-ensemble et les n2 objets d'un deuxième sous-ensemble, les deux sous-ensembles étant prédéterminés.

Avec ce deuxième exemple de réalisation, pour effectuer une opération d'écriture non sélective sur un groupe de n objets, c'est-à-dire sur toutes les relations entre ces n objets pris deux à deux, il suffit d'émettre simultanément les signaux suivants :

- ST = 1 ou RT = 1 (mise à 1 ou à 0 respectivement) sur le bus de commande commun OC;
- $SSA_K$ = 1 et $SSB_K$ = 1 sur chaque point d'accès AP(K) correspondant à un objet K appartenant au sous-ensemble considéré de n objets.

En effet, en affectant chacun des n objets considérés à la fois au groupe A et au groupe B pour cette opération d'écriture ($SSA_K$ = 1 et $SSB_K$=1), chaque élément de mémoire de relation RMP2(X, Y), relatif à deux objets X et Y appartenant au sous-ensemble considéré de n objets, recevra les signaux $SSA_X$ = 1 et $SSB_X$ par le bus de commande BO2(X) de l'objet X, et recevra $SSA_Y$ = 1 et $SSB_Y$ = 1 par le bus de commande BO2'(Y) de l'objet Y. Chaque élément RMP2(X, Y) exécutera donc l'opération d'écriture pour la relation X-Y, puisque l'un des objets (X, Y) est sélectionné par l'un des groupes (A, B) et l'autre objet (Y, X) est sélectionné par l'autre groupe (B, A), ceci étant d'ailleurs vérifié de façon redondante pour les deux permutations des groupes A et B dans ce cas.

La méthode décrite ci-dessus est valable pour un sous-ensemble de n objets où $2 \leq n \leq N$. Toutefois, on peut noter qu'une autre méthode peut être utilisée dans le cas particulier n = 2, c'est-à-dire une opération d'écriture d'une relation simple entre deux objets X et Y, à savoir en affectant arbitrairement l'un des objets X à l'un des groupes A ou B et l'autre objet Y à l'autre groupe B ou A respectivement, pour cette opération. Dans ce cas, les signaux émis simultanément sont :

- ST = 1 ou RT= 1 (mise en 1 ou en 0) sur le bus commun OC,
- $SSA_X$ = 1 et $SSB_X$ = 0 sur le bus de commande de l'objet X, et $SSA_Y$ = 0 et $SSB_Y$ = 1 sur le bus de commande de l'objet Y, ou bien $SSA_X$ = 0 et $SSB_X$ = 1 sur le bus de commande de l'objet X, et $SSA_Y$ = 1 et $SSB_Y$= 0 sur le bus de commande de l'objet Y.

L'élément de mémoire RMP2(X, Y) concerné peut également exécuter l'opération d'écriture pour la relation X-Y selon cette autre méthode lorsque n=2.

Examinons maintenant les opérations d'écriture particulières permises par le deuxième exemple de réalisation RMP2(X, Y), c'est-à-dire effectuées sélectivement entre les n1 objets d'un premier sous-ensemble prédéterminé et les n2 objets d'un deuxième sous-ensemble prédéterminé, sans nécessairement modifier les relations entre les objets d'un même sous-ensemble prédéterminé (on suppose que les deux sous-ensembles ne sont pas identiques et que n1 et/ou n2 est supérieur à 1).

Dans le cas d'une opération d'écriture des relations entre des objets appartenant à deux sous-ensembles disjoints ou non disjoints, l'écriture d'une information (1 ou 0) indiquant l'existence ou l'inexistence des relations entre les n1 objets du premier sous-ensemble prédéterminé et les n2 objets du second sous-ensemble prédéterminé, est réalisée en affectant, pour cette opération, les n1 objets du premier sous-ensemble arbitrairement à l'un des groupes A ou B (utilisation des signaux de sélection SSA et SSB) et les n2 objets du second sous-ensemble à l'autre groupe B ou A respectivement.

Pour clarifier le fonctionnement de telles opérations d'écriture sélectives entre deux sous-ensembles d'objets prédéterminés, il faut distinguer deux cas selon que les sous-ensembles prédéterminés de n1 et n2 objets sont disjoints (chaque objet n'appartient qu'à un seul sous-ensemble) ou bien non disjoints (au moins un objet appartient aux deux sous-ensembles). En effet, dans le premier cas chaque objet n'est présent que dans un seul groupe (A ou B), et les signaux de sélection utilisés pour un tel objet sont soit SSA=1 et SSB=0 s'il appartient au groupe A, soit SSA=0 et SSB=1 s'il appartient au groupe B pour l'opération. Par contre, dans le deuxième cas où les n1 et n2 objets constituent des sous-ensembles non disjoints, au moins un des objets considérés (parmi n1+n2 objets) est commun aux deux sous-ensembles prédéterminés, et pour chacun de tels objets communs les deux signaux de sélection sont activés simultanément, SSA=1 et SSB=1, puisqu'il appartient aux deux groupes A et B pour cette opération.

Une telle opération d'écriture sélective entre deux sous-ensembles prédéterminés disjoints ou non disjoints est donc effectuée en émettant simultanément les signaux suivants :

- ST = 1 ou RT =1 (mise en 1 ou en 0) sur le bus commun OC;
- $SSA_L$ = 1 et $SSB_L$ =0 sur le bus de commande de chaque objet L qui doit être affecté seulement au groupe A;
- $SSA_M$ = 0 et $SSB_M$ = 1 sur le bus de commande de chaque objet M qui doit être affecté seulement au groupe B;
- $SSA_N$ = 1 et $SSB_N$ = 1 sur le bus de commande de chaque objet N qui doit être affecté à la fois au groupe A et au groupe B (objet commun).

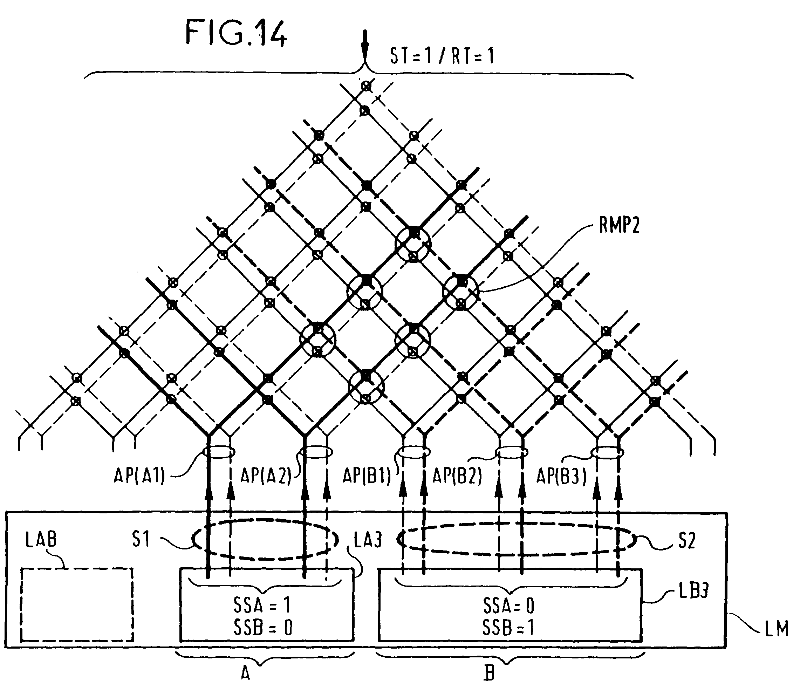

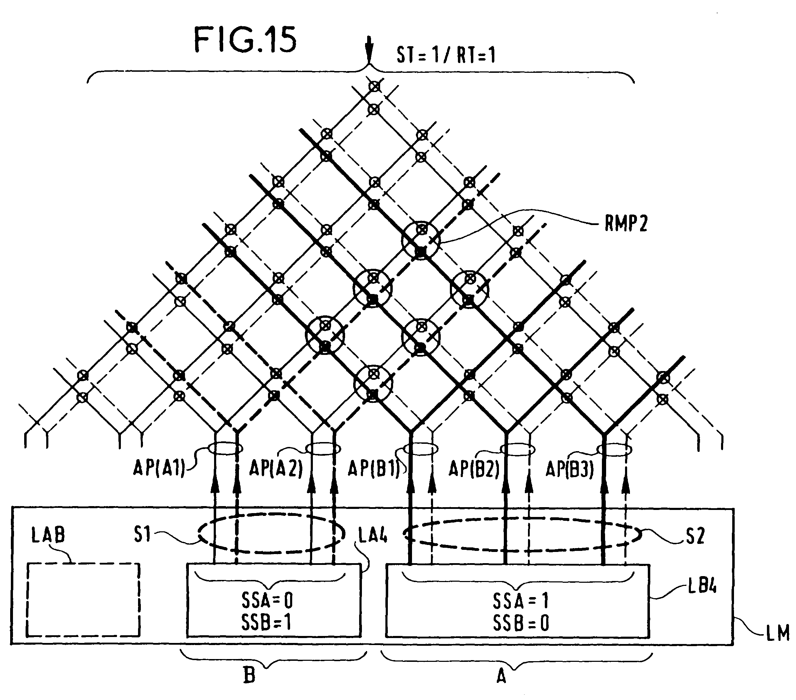

Les figures 14 et 15 illustrent respectivement ces deux procédés équivalents pour écrire l'existence ou l'inexistence de relations entre les objets A1, A2 d'un sous-ensemble S1, d'une part; et les objets B1, B2, B3 d'un sous-ensemble S2, d'autre part, les deux sous-ensembles S1 et S2 étant supposés disjoints.

Sur ces figures, les signaux d'adressage et sélection sont distingués de la façon suivante :

- $SS_A$ = 1 : Trait fort continu
- SSB = 1 : Traits fort discontinu
- SSA = 0 : trait fin continu
- SSB = 0 : Trait fin discontinu.

D'autre part, les éléments de mémoire qui exécutent une opération d'écriture sont indiqués par un cercle.

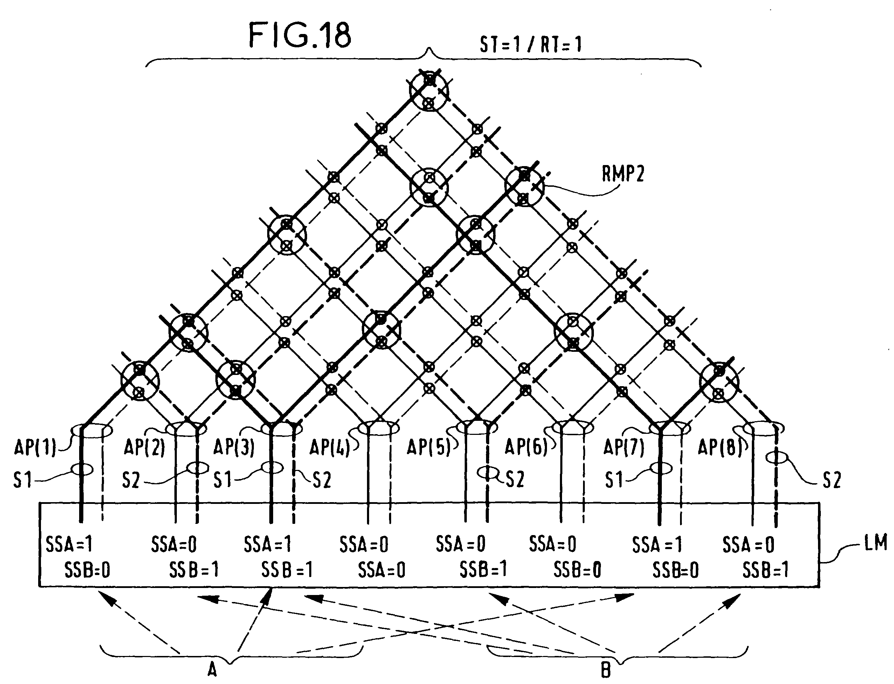

Il est à remarquer que, contrairement à ce qui passait avec le premier exemple de réalisation RMP1 (cas illustré sur la figure 8), le second exemple de réalisation RMP2 ne provoque pas l'écriture d'informations indiquant l'existence ou l'inexistence de relations entre les objets A1 et A2 du même sous-ensemble S1, ni entre les objets B1, B2, B3, du même sous-ensemble S2, lorsque les sous-ensembles S1 et S2 sont disjoints comme supposé pour le cas des figures 14 et 15. Par contre, l'existence d'un ou plusieurs objets communs à deux sous-ensembles, lorsque ces derniers sont non disjoints, a pour effet d'écrire certaines relations à l'intérieur d'un même sous-ensemble (voir plus loin le cas illustré par la figure 18).

Pour l'exemple représenté sur la figure 14, les circuits logiques LM comportent :

- un cicuit logique LA3 fournissant des signaux SSA=1 et SSB=0 aux accès AP(A1) et AP(A2) des objets du sous-ensemble S1 affectés au groupe A;
- un circuit logique LB3 fournissant des signaux SSA=0 et SSB=1 aux accès AP(B1), AP(B2), AP(B3) des objets du sous-ensemble S2 affectés au groupe B.

Tous les autres signaux SSA et SSB des autres accès, ont une valeur 0. Les circuits logiques LM fournissent le signal d'écriture ST = 1 ou RT = 1 (mise à 1 ou à 0 respectivement) au bus commun qui n'est pas représenté.

Dans d'autres exemples où certains objets doivent être affectés à la fois au groupe A et au groupe B, un circuit logique LAB est prévu pour fournir les signaux SSA = 1 et SSB = 1 aux points d'accès correspondant à ces objets. Ce circuit logique LAB n'étant pas utilisé pour l'exemple illustré par les figures 14 et 15, il est représenté en pointillés.

Pour l'exemple représenté sur la figure 15, les circuits logiques LM comportent :

- un circuit logique LA4 fournissant des signaux SSA=O et SSB=1 aux accès AP(A1) et AP(A2) des objets du sous-ensemble S1 affectés au groupe B;
- et un circuit logique LB4 fournissant des signaux SSA=1 et SSB= 0 aux accès AP(B1), AP(B2), AP(B3) des objets du sous-ensemble S2 affectés au groupe A.

Tous les autres signaux SSA et SSB des autres accès ont une valeur 0. Les circuits logiques LM fournissent le signal d'écriture ST=1 ou RT=1 (mise en 1 ou en 0 respectivement) au bus commun qui n'est pas représenté.

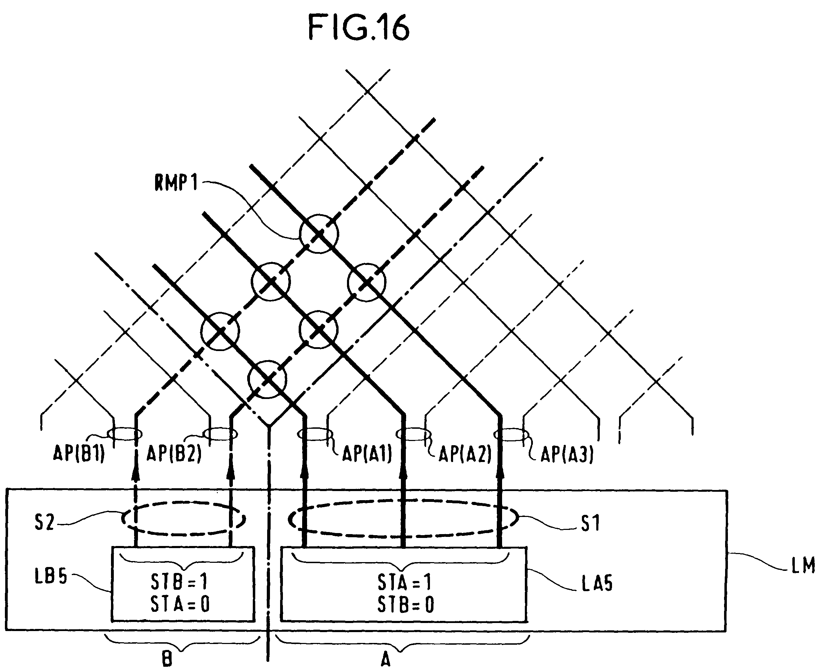

La figure 16 illustre le cas d'une structure de bus d'une variante de réalisation du réseau d'éléments de mémoire du dispositif selon l'invention. Ce réseau est encore constitué des éléments de mémoires RMP1 représentés sur la figure 5 mais les conducteurs transmettant les signaux $RT_K$ et $ST_K$ dans la branche BO(K) ne sont plus reliés aux conducteurs homologues de la branche BO'(K) comme c'est représenté sur la figure 6. Selon cette variante, les deux branches sont ici commandées indépendamment pour l'écriture.

Un point d'accès AP'(K) est représenté sur la figure 16. Il comporte six conducteurs :

- un conducteur transmettant un signal de mise à 1, $STA_K$, à tous les éléments reliés à branche BO1(K), dans le cas où l'objet K appartient au groupe A;
- un conducteur transmettant un signal de mise à 1, $STB_K$, à tous les éléments reliés à la branche BO1'(K), dans le cas où l'objet K appartient au groupe B;
- un conducteur transmettant un signal de remise à 0, $RTA_K$, à tous les éléments reliés à la branche BO1(K), dans le cas où l'objet K appartient au groupe A;
- un conducteur transmettant un signal de remise à 0, $RTB_K$, à tous les éléments reliés à la branche BO1(K), dans le cas où l'objet K appartient au groupe B;
- un conducteur de commande de lecture transmettant un signal de commande de lecture, $RS_K$, à tous les éléments reliés au bus orthogonal constitué par les deux branches BO1(K) et BO1'(K);
- un conducteur de sortie de lecture fournissant aux circuits logiques LM un signal $OL_K$ résultant, par un OU câblé, de tous les signaux fournis par une lecture dans les éléments reliés au bus orthogonal constitué par les deux branches BO'1(K) et BO1(K).

Cette structure du réseau d'éléments de mémoire RMP1 permet un adressage sélectif semblable à celui de la structure de bus précédente avec des éléments RMP2, en particulier pour effectuer des opérations d'écriture entre objets de deux sous-ensembles S1 et S2 disjoints, sans qu'il en résulte l'écriture indésirable d'une relation entre deux objets appartenant à un même sous-ensemble .

Cette structure comporte douze bus d'accès aux éléments de mémoire, au lieu de neuf pour la variante représentée sur les figures 11 et 12. Par contre, chaque élément de mémoire comporte moins de portes : 2 portes ET et une porte OU en moins.

La figure 16 illustre le fonctionnement de cette variante dans un exemple où l'opération d'écriture concerne les relations entre les objets A1, A2, A3 constituant un sous-ensemble S1 affectés au groupe A, et les objets B1, B2, constituant un sous-ensemble S2 affecté au groupe B. Les circuits logiques LM comportent un circuit logique LA5 qui fournit simultanément un signal STA=1 et signal STB=O aux points d'accès AP(A1), AP(A2), AP(A3), correspondant aux objets du groupe A; et ils comportent un circuit logique LB5 qui fournit simultanément un signal STB=1 et un signal STA=O aux points d'accès AP(B1), et AP(B2) correspondant aux objets du groupe B.

Les éléments RMP1 qui sont activés en écriture sont représentés par des cercles. Les conducteurs transmettant les signaux actifs sont représentés en traits forts continus ou discontinus. Les conducteurs fournissant le signal STA=1 pour le groupe A sont représentés en traits forts continus. Les conducteurs fournissant le signal STA=O pour le groupe B sont représentés en traits fins continus. Les conducteurs fournissant le signal STB = 1 pour le groupe B sont représentés en traits forts discontinus. Les conducteurs fournissant le signal STB=O pour le groupe A sont représentés en traits fins discontinus.

Il faut toutefois noter que cette variante de réseau illustrée sur la figure 16 n'offre pas la même souplesse d'utilisation que la version de réseau précédente, avec les éléments RMP2, en ce qui concerne la composition des sous-ensembles d'objets A et B pour une opération d'écriture entre 2 sous-ensembles.

En effet, dans le cas de la version précédente, avec les éléments RMP2, chaque objet K peut librement être affecté à l'un des groupes A et B ou aux deux groupes, selon les besoins de l'opération, indépendamment de la position de l'objet K par rapport aux autres objets. Par exemple, parmi un ensemble E de huits objets, référencés 1, 2, 3, 4, 5, 6, 7, 8, une opération d'écriture peut être effectuée sur deux sous-ensembles quelconques, disjoints ou non disjoints de l'ensemble E, par exemple un sous-ensemble S1 comprenant les objets 1, 3 et 7, et un sous-ensemble S2 comprenant les objets 2, 3, 5 et 8.

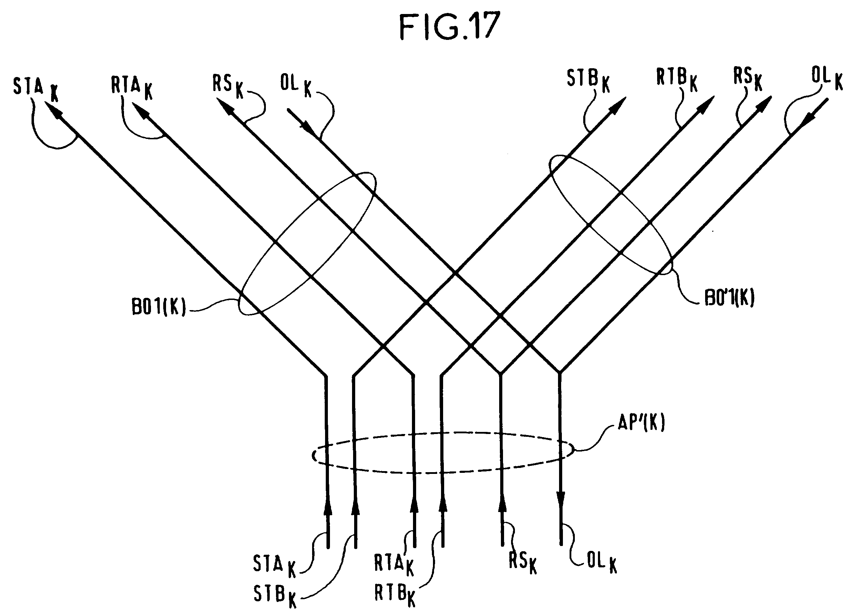

Par contre, dans le cas de la version avec les éléments RMP1, illustrée sur les figures 16 et 17, la séparation physique des deux branches BO1(K) et BO1'(K) introduit une contrainte dans la composition des sous-ensembles S1 et S2, qui doivent non seulement être disjoints, mais aussi tels que leurs objets soient de part et d'autre d'une séparation physique dans la rangée des points d'accès des objets de l'ensemble E.

Par exemple, la figure 15 peut représenter un réseau pour huit objets, pour lequel on considère une opération entre un sous-ensemble S2 comprenant les objets B1 et B2, et un sous-ensemble S1 comprenant les objets A1, A2, et A3. Cette opération est possible car les deux sous-ensembles S1 et S2 sont disjoints et situés de part et d'autre d'une séparation physique entre les objets B2 et A1, qui délimite deux domaines distincts. Cette séparation physique est représentée en traits mixtes sur la figure 15.

Par contre, cette dernière variante ne permet pas d'effectuer une opération sur deux sous-ensembles tels que ceux mentionnés précédemment, à savoir deux sous-ensembles non disjoints et pour lesquels les éléments de mémoire ne sont pas physiquement séparables de part et d'autre d'une telle séparation physique.

Un tel exemple est illustré sur la figure 18 montrant le fonctionnement du réseau basé sur le deuxième exemple de réalisation, RMP2(X, Y), pour deux sous-ensembles, S1 comprenant des objets référencés 1, 3, et 7 (n1=3); et S2 comprenant des objets référencés 2, 3, 5 et 8 (n2=4), parmi les N=8 objets de l'ensemble considéré. Les sous-ensembles S1 et S2 sont non disjoints puisqu'ils ont en commun l'objet 3. Par exemple le sous-ensemble S1 est affecté au groupe A et le sous-ensemble S2 est affecté au groupe B (l'affectation inverse en permutant le rôle de A et B donnerait le même résultat).

Les circuits logiques LM comportent des moyens logiques (non représentés sur la figure 17) fournissant les signaux d'adressage et sélection (SSA, SSB), appropriés pour chaque objet, sur la base des règles précédemment décrites pour le deuxième exemple de réalisation RMP2(X, Y), et selon l'appartenance de chaque objet au groupe A et/ou au groupe B, à savoir :

- des moyens logiques pour fournir des signaux d'adressage et sélection (SSA=1 et SSB=0) pour les objets qui n'appartiennent qu'au groupe A;
- des moyens logiques pour fournir des signaux d'adressage et sélection (SSA=0 et SSB=1) pour les objets qui n'appartiennent qu'au groupe B;
- des moyens logiques pour fournir des signaux d'adressage et sélection (SSA=1 et SSB=1) pour les objets qui appartiennent à la fois au groupe A et au groupe B.

La valeur appropriée des signaux SSA et SSB pour chaque objet est donnée sur la figure 18, et le type de représentation à l'aide de traits forts ou fins continus ou discontinus est le même que pour les figures 14 et 15. On peut remarquer que le point d'accès AP(3) correspondant à l'objet 3 commun aux deux groupes A et B reçoit simultanément des signaux $SSA_3=1$ et $SSB_3= 1$; d'autre part les points d'accès AP(4) et AP(6) des objets 4 et 6 qui ne sont pas concernés par cette opération reçoivent des signaux SSA=0 et SSB=0.

Dans le réseau d'éléments de mémoire RMP2(X,Y), les éléments qui exécutent une opération d'écriture de relation sont indiqués par un cercle sur la figure 18, à savoir les relations 1-2, 1-3, 1-5, 1-8, 2-3, 2-7, 3-5, 3-7, 3-8, 5-7, et 7-8. On peut noter que, dans cet exemple de sous-ensembles non disjoints, l'existence d'un objet 3 commun aux deux sous-ensembles S1 et S2 a pour effet de provoquer une écriture de relations entre objets d'un même sous-ensemble (qui sont également des relations entre objets des deux sous-ensembles), à savoir 1-3, 2-3, 3-5, 3-7 et 3-8.

Le dispositif selon l'invention peut comporter un filtre relié à chaque conducteur de bus, $OL_K$, reliant toutes les sorties d'élément de mémoire relatives à un objet K donné, pour appliquer un masque de filtrage aux signaux fournis en parallèle par ces conducteurs de bus. Ce filtre peut alors remplacer les circuits logiques L3, LB3, décrits précédemment, pour les opérations de lecture.

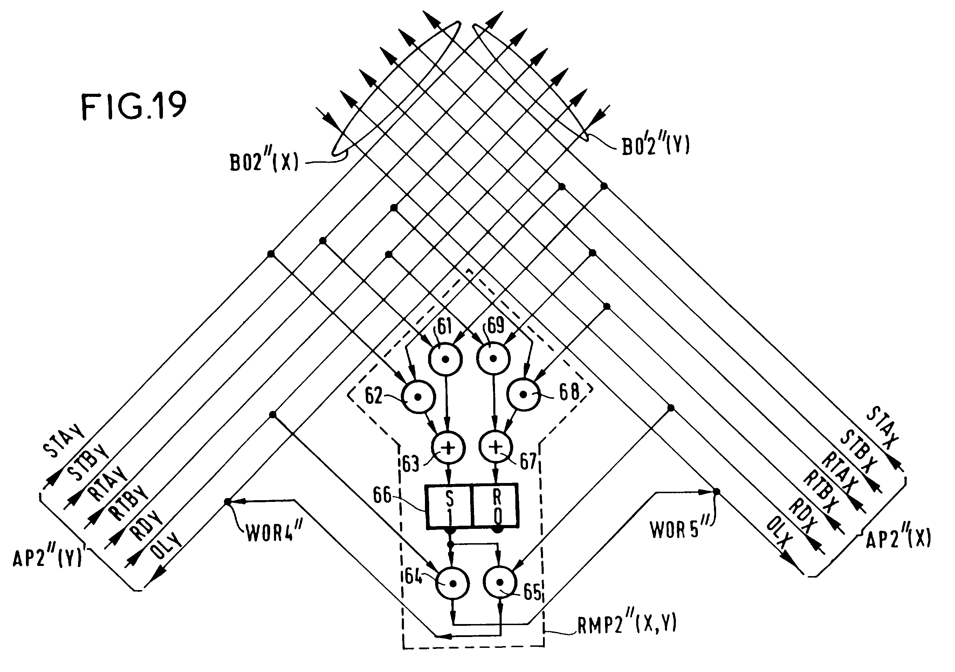

La figure 19 représente le schéma synoptique d'une variante RMP2"(X, Y) du second exemple de réalisation de l'élément de mémoire utilisé dans le dispositif selon l'invention. Cette variante ne comporte aucun bus commun pour commander les opérations, elle permet cependant de modifier les relations entre deux objets appartenant respectivement à deux sous-ensembles, sans nécessairement modifier les relations à l'intérieur de ces sous-ensembles. Chaque élément RMP2" est situé au point d'intersection d'une branche BO2"(X) d'un bus correspondant à un objet X et d'une branche BO'2"(Y) d'un bus correspondant à un objet Y. Chacune de ces branches comporte six conducteurs, dans cet exemple de réalisation. A titre d'exemple, la branche BO'2"(Y) transporte les signaux suivants :

- $STA_Y$ et $STB_Y$, pour commander l'écriture d'une valeur 1, en permettant d'affecter l'objet Y dans un groupe A, ou dans un groupe B, ou dans les deux groupes à la fois;
- $RTA_Y$ et $RTA_Y$ pour commander l'écriture d'une valeur 0, en permettant d'affecter l'objet Y soit dans un groupe A, soit dans un groupe B, soit dans les deux groupes à la fois;
- $RD_Y$, pour commander une lecture;
- $OL_Y$, signal commun de sortie de lecture pour tous les éléments susceptibles de mémoriser une relation entre l'objet Y et un autre objet.

L'élément RMP2"(X, Y) comporte :

- une bascule 66, ayant une entrée S de mise à 1, une entrée R de remise à 0, et une sortie notée 1;

- une porte OU, 63, à deux entrées et une sortie, cette dernière étant reliée à l'entrée S de la bascule 66;
- une porte OU, 67, à deux entrées et une sortie, cette dernière étant reliée à l'entrée R de la bascule 66;
- une porte ET, 62, à deux entrées et une sortie, cette dernière étant reliée à une première entrée de la porte 63;
- une porte ET, 61, à deux entrées et une sortie, cette dernière étant reliée à la seconde entrée de la porte 63;
- une porte ET, 69, à deux entrées et une sortie, cette dernière étant reliée à une première entrée de la porte 67;
- une porte ET, 68, à deux entrées et une sortie, cette dernière étant reliée à la seconde entrée de la porte 67;
- une porte ET, 64, ayant une entrée reliée à la sortie 1 de la bascule 66, une entrée reliée à un conducteur de la branche B0'2"(Y) transportant le signal $RD_Y$, et une sortie constituant une sortie de l'élément RMP2"(X, Y), et qui est reliée à un conducteur de la branche BO2"(X), transportant un signal commun de sortie $OL_X$ et constituant un OU câblé WOR5";
- une porte ET65, ayant une entrée reliée à la sortie 1 de la bascule 66, une entrée reliée à un conducteur de la branche BO2"(X) transportant un signal $RD_X$, et une sortie constituant une sortie de l'élément RMP2"(X, Y), et qui est reliée à un conducteur de la branche BO'2"(Y) transportant un signal commun de sortie $OL_Y$ et constituant un OU câblé WOR4".

Pour la lecture, il n'y a pas de sélection de groupe A ou B, un seul signal d'adressage suffit : $RD_Y = 1$ sur la branche BO'2"(Y), en cas de lecture à partir de l'objet Y; ou $RD_X = 1$ sur la branche BO2"(X) en cas de lecture à partir de l'objet X.

Pour l'écriture, un objet K peut appartenir à l'un et/ou à l'autre des deux groupes A et B, selon les signaux qui sont appliqués sur les bus. Par exemple, pour l'écriture d'une valeur 1 :

- si $STA_Y = 1$ et $STB_Y = 0$, l'objet Y appartient seulement au groupe A pour l'écriture,
- si $STA_Y = 0$ et $STB_Y = 1$, l'objet Y appartient seulement au groupe B,
- si $STA_Y = 0$ et $STB_Y = 0$, l'objet Y n'appartient à aucun des groupes A et B, donc aucun des éléments de mémoire mémorisant l'existence ou l'inexistence des relations avec l'objet Y n'est activé,
- si $STA_Y = 1$ et $STB_Y = 1$, l'objet Y appartient à la fois au groupe A et au groupe B.

De même, il est possible de faire une affectation au groupe A ou B pour l'opération d'écriture d'une valeur 0, au moyen des signaux $RTA_X$ et $RTA_Y$. Naturellement les mêmes opérations sont possibles à partir du point d'accès AP2"(X) pour l'objet X.

Une opération d'écriture d'existence (ou d'inexistence) de relation dans l'élément RMP2"(X, Y) relatif aux objets X et Y est exécutée lorsque les signaux de sélection et de commande d'opération satisfont l'équation logique $STA_X . STB_Y + STB_X . STA_Y = 1$ (ou respectivement $RTA_X . RTB_Y + RTB_X . RTA_Y = 1$)

Il est à la portée de l'Homme de l'Art de réaliser d'autres variantes du deuxième exemple de réalisation, qui soient intermédiaires entre les variantes RMP2 et RMP2", représentées respectivement sur les figures 11 et 19. Considérons maintenant le cas de la gestion des relations dans un ensemble constitué de sous-ensembles statiques d'objets appartenant à différentes catégories. Par exemple, considérons la gestion d'un ensemble de N objets comportant N1 objets qui sont des cellules et N2 objets qui sont des positions temporelles. Dans cet exemple $N = N_1 + N_2$. Un tel ensemble n'est pas du tout homogène puisque les types de relations à mettre en oeuvre sont très différentes, à savoir :

- gestion des relations entre N1 cellules possibles (tel que groupement par classe de priorité, en séquence, etc);
- gestion des relations entre N2 positions temporelles possibles (regroupement de positions temporelles libres, séquence des positions temporelles occupées, etc);
- gestion des relations entre N1 cellules possibles et N2 positions temporelles possibles (association d'une cellule à une position de temps).

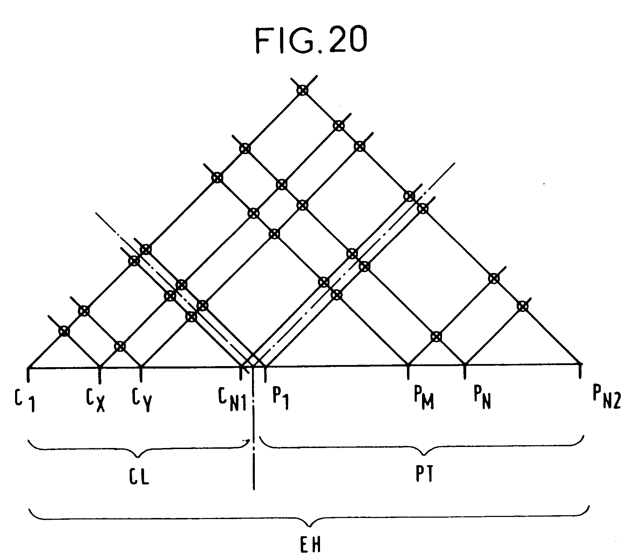

La figure 20 représente schématiquement le réseau d'un dispositif selon l'invention, permettant de gérer un tel ensemble hétérogène EH comportant N objets. Les circuits logiques LM ne sont pas représentés sur cette figure. Ce réseau est analogue au réseau triangulaire TN représenté sur la figure 3, et qui gérait un ensemble homogène de N objets appartenant à une même catégorie. Dans le cas considéré, les N points d'accès du réseau correspondent respectivement aux N objets de l'ensemble EH en attribuant par exemple les points d'accès de rang 1 à N1 aux cellules $C_1, ..., C_{N1}$ constituant le sous-ensemble CL rassemblant des cellules; et en attribuant les points d'accès de rang N+1 à N respectivement aux positions temporelles $P_1$ à $P_{N2}$ constituant le sous-ensemble PT rassemblant les positions temporelles. La constitution des sous-ensembles CL et PT est fixe. Ce dispositif de gestion de relations peut être considéré comme l'assemblage de trois dispositifs plus simples : D1, D2, D3.

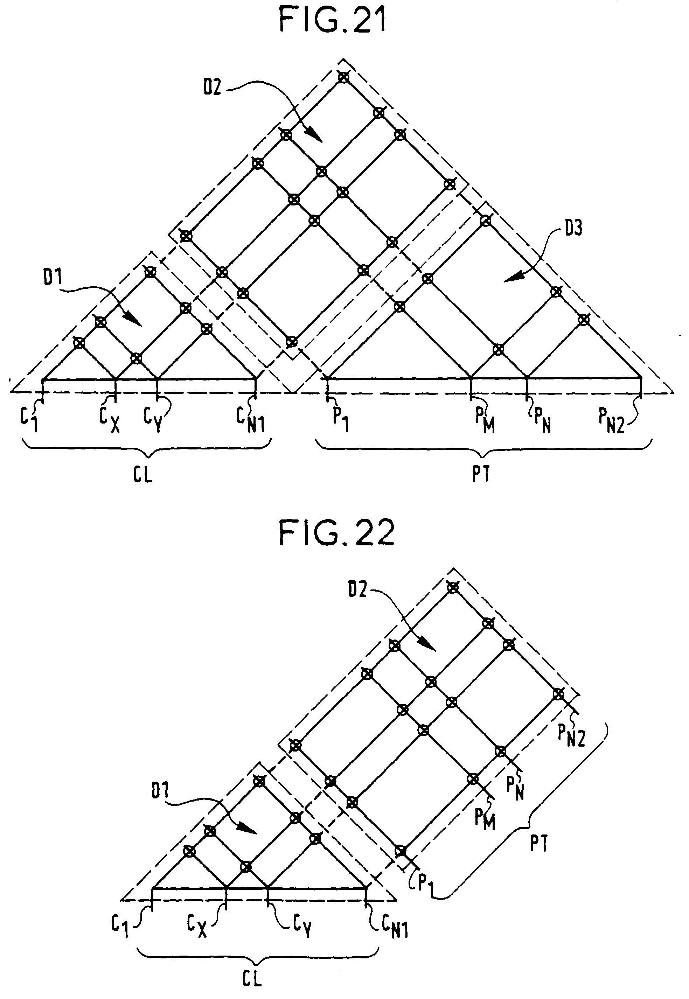

La figure 21 représente ces trois dispositifs plus simples :

- le dispositif D1 a une structure triangulaire et gère les relations entre les N1 cellules;
- le dispositif D2 a une structure matricielle rectangulaire et gère les relations entre les N1 cellules et les N2 positions temporelles;
- le dispositif D3 a une structure triangulaire et gère les relations entre les N2 positions temporelles.

Dans le cas particulier où il n'est pas nécessaire de gérer des relations entre les positions temporelles, le dispositif peut être simplifié en supprimant le dispositif D3.

La figure 22 représente schématiquement le réseau dans le cas de cette simplification. Le dispositif D1 comporte un réseau triangulaire analogue au réseau TN' décrit en se référant à la figure 3, alors que le dispositif D2 comporte un réseau rectangulaire analogue au réseau carré SN décrit précédemment en se référant à la figure 1.

Considérons maintenant la gestion des relations entre des objets appartenant à des sous-ensembles dynamiques. Cette gestion consiste à effectuer des opérations sur certaines relations entre des objets qui ne sont pas nécessairement tous connus à l'extérieur du dispositif, mais qui appartiennent à des sous-ensembles identifiés indirectement. Le dispositif selon l'invention est prévu pour gérer N objets au maximum, mais il ne gère en pratique qu'un nombre n d'objets à un instant donné, un nombre N-n de points d'accès étant "inutilisés" ou "libres" à cet instant.

Le nombre de sous-ensembles à gérer dépend :

- soit uniquement de l'application qui est faite du dispositif selon l'invention, auquel cas le nombre de sous-ensembles est fixe;
- soit également de l'état des objets mêmes qui sont gérés par le dispositif, auquel cas le nombre de sous-ensembles varie au cours du temps.

Par exemple les relations entre des cellules et des intervalles de temps appelées positions temporelles, sont gérées en mettant en oeuvre des sous-ensembles rassemblant chacun les cellules associées à une position temporelle donnée. L'existence à un instant donné d'un tel sous-ensemble dépend de l'existence d'au moins une cellule associée à la position temporelle relative à ce sous-ensemble. Un tel sous-ensemble peut donc disparaître à certains moments, s'il arrive qu'aucune cellule ne soit associée à l'une des positions temporelles possibles.

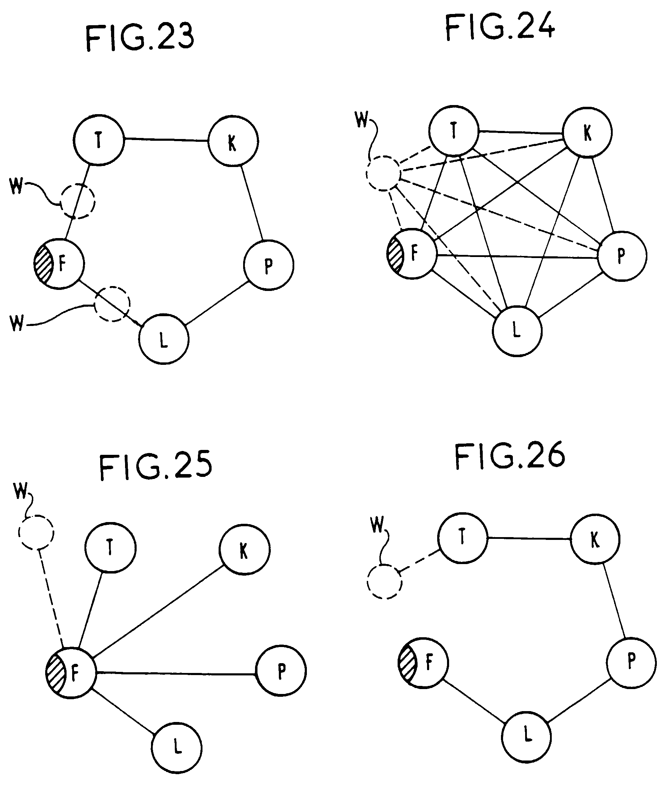

Les figures 23 à 26 représentent quatre exemples de structure élémentaire de relation permettant de gérer les objets d'un sous-ensemble dynamique. Dans chacune de ces structures l'un des objets, F, joue un rôle particulier et il est appelé objet de référence pour accéder aux sous-ensembles considérés. Il est le seul objet du sous-ensemble, qui est connu à l'extérieur du dispositif de gestion. Les autres objets ne sont connus que par le dispositif de gestion de relations, qui mémorise l'existence des relations entre tous ces objets.

La figure 23 représente une structure en anneau qui comporte l'objet de référence F et des objets T, K, P, L qui sont reliés par des relations F-T, T-K, K-P, P-L et L-F, formant un anneau.

La figure 24 représente une structure maillée dans laquelle les mêmes objets sont reliés par les mêmes relations que dans la structure précédente, mais avec en plus des relations F-K, F-P, T-L, T-P, K-F, K-L.

La figure 25 représente une structure en étoile comportant les mêmes objets, mais où les relations sont seulement :

F-T, F-K, F-P et F-L.

La figure 26 représente une structure linéaire comportant les mêmes objets mais où les relations sont : F-L, L-P, P-K, K-T.

L'ajout d'un objet supplémentaire W peut être réalisé de différentes manières selon la structure du sous-ensemble auquel cet objet doit être ajouté.

Si le sous-ensemble a une structure en anneau telle que celle représentée sur la figure 23, le nouvel objet W est inséré soit entre les objets F et T, soit entre les objets F et L. Cette insertion implique de libérer la relation F-T, respectivement F-L, et d'établir deux nouvelles relations W-F et W-T, respectivement W-F et W-L. Cette opération d'ajout d'un objet est donc une opération combinant : l'identification d'un objet T ou L qui est relié à F, la libération de la relation F-T ou F-L, et l'établissement de deux nouvelles relations F-W et W-T ou F-W et W-L. Elle est réalisée par des moyens qui sont décrits plus loin.

Si un nouvel objet W est à insérer dans la structure représentée sur la figure 24, cet objet est à relier à tous les objets déjà présents dans le sous-ensemble, ce qui implique d'identifier tous ces objets en partant de l'objet F, puis d'établir des relations supplémentaires W-T, W-K, W-P, W-L, W-F.

Si un nouvel objet W est à ajouter à un sous-ensemble ayant la structure représentée sur la figure 25, il suffit de relier cet objet W à l'objet de référence F, déjà connu, par une nouvelle relation W-F.

Si un nouvel objet W est à ajouter à un sous-ensemble ayant la structure représentée sur la figure 26, le nouvel objet W peut être :

- soit relié au dernier objet T de cette structure, auquel cas il faut identifier ce dernier objet T à partir de l'objet F puis établir une relation W-T (alternative illustrée sur la figure 26);

- soit relié au premier objet F de la structure, auquel cas il suffit d'établir une relation W-F, puisque l'objet F est déjà connu comme étant l'objet de référence et le premier objet de cette structure.

Dans ce qui suit on distinguera non seulement des catégories d'objets et des sous-ensembles dynamiques d'objets, mais aussi des groupes d'objets impliqués dans une opération élémentaire, lesquels ne coïncident pas nécessairement avec une catégorie d'objets ou avec un sous-ensemble. Les opérations réalisées par le dispositif de gestion selon l'invention peuvent porter sur des relations entre deux ou plusieurs objets appartenant à un ou plusieurs sous-ensembles distincts, par conséquent les groupes d'objets impliqués dans une opération sont généralement différents des sous-ensembles dynamiques. Un tel groupe d'objets peut être par exemple :

- un objet unique;
- ou des objets résultant d'une opération logique sur plusieurs sous-ensembles (réunion, intersection, ou exclusif);
- un nombre prédéterminé d'objets provenant d'un sous-ensemble (par exemple, transférés quatre par quatre d'un sous-ensemble à un autre);
- etc.

Dans chacune des structures représentées sur les figures 23 à 26 l'objet de référence F d'un sous-ensemble, joue un rôle particulier, de deux manières possibles :

- soit c'est un objet qui a un rôle particulier de référence d'accès au sous-ensemble considéré, tant que cet objet fait partie de ce sous-ensemble, et s'il sort de ce sous-ensemble une reconfiguration des relations doit être réalisée avant de pouvoir désigner un autre objet comme référence d'accès;
- soit c'est un objet qui est choisi aléatoirement dans cet ensemble, au cours du traitement des objets, à un instant donné, mais qui n'a pas de rôle particulier dans la structure du sous-ensemble à l'instant considéré. Il est alors appelé objet de référence de contexte pour une opération donnée.

Pour les structures représentées sur les figures 23 et 24, qui sont symétriques pour tous les objets, n'importe quel objet peut remplacer l'objet de référence d'accès sans modifier la structure des relations entre les objets. Dans les structures représentées sur les figures 25 et 26 qui ne sont pas symétriques pour tous les objets, l'objet F jouant un rôle particulier de référence d'accès, le remplacement de l'objet F par un autre objet implique une reconfiguration préalable des relations entre les objets du sous-ensemble.

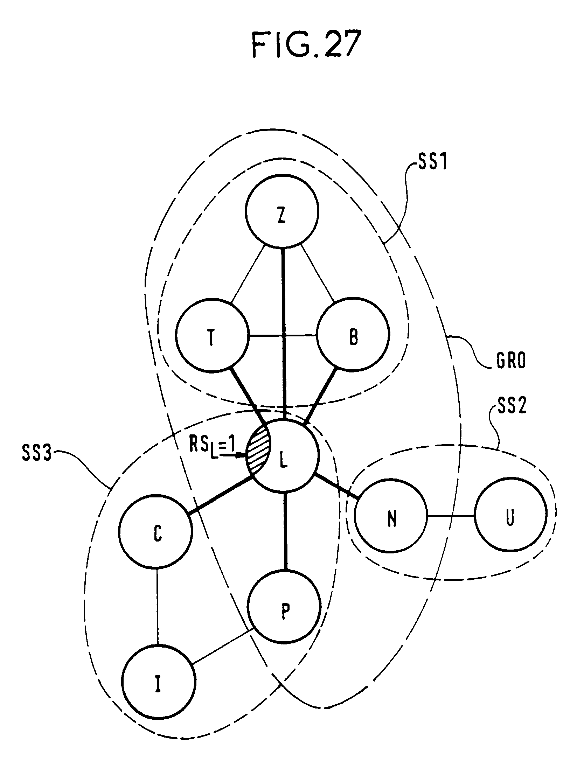

La figure 27 illustre une opération de lecture des relations existant dans un ensemble d'objets, à partir d'un objet L, alors que cet objet L a des relations avec des objets appartenant à trois sous-ensembles distincts SS1, SS2 et SS3. Dans cet exemple, l'objet L est un objet de référence de contexte qui appartient au sous-ensemble SS3. Le sous-ensemble SS1 a une structure maillée, constituée de trois objets : T, Z, B, ayant entre eux des relations T-Z, Z-B, B-T et ayant avec l'objet de référence les relations T-L, Z-L, B-L. Le sous-ensemble SS2 a une structure linéaire constituée de deux objets N et U ayant entre eux des relations N-U, et ayant avec l'objet de référence L la relation L-N. Le sous-ensemble SS3 a une structure en anneau constituée de trois objets C, I, P et L ayant entre eux des relations L-C, C-I, I-P et P-L.

La lecture est effectuée dans un dispositif tel que par exemple celui représenté sur la figure 5 en fournissant un signal $RS_L = 1$ au point d'accès correspondant à l'objet L. Le réseau fournit une réponse au niveau des points d'accès correspondant aux objets T, Z, B, N, P, C. Les relations qui sont lues ainsi sont représentées en trait gras sur la figure 27. Cette opération fournit l'identité de tous les objets qui ont une relation établie avec L. Tous ces objets constituent par définition un groupe d'objets identifiés, GRO, qui ne coïncide avec aucun des sous-ensembles dynamiques SS1, SS2, SS3, ni à aucune combinaison particulière de ces sous-ensembles.

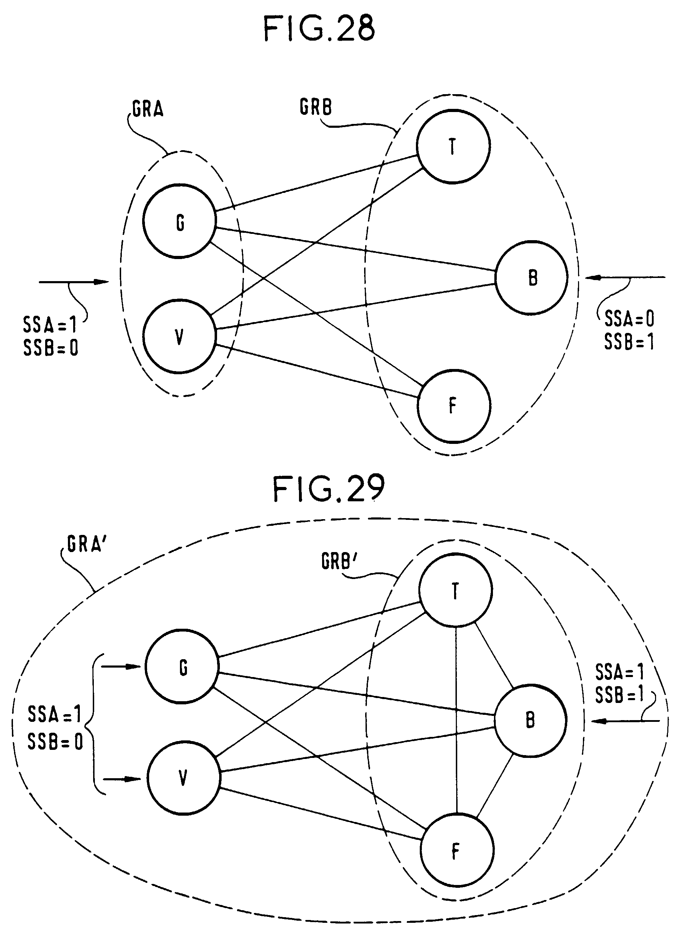

Les figures 28 et 29 illustrent une opération d'écriture concernant des relations entre des objets appartenant à deux groupes d'objets, au moyen de l'exemple de réalisation du dispositif selon l'invention, représenté sur la figure il. La figure 28 illustre une opération d'écriture de relations, chaque relation étant établie entre un objet du groupe GRA et un objet du groupe GRB. La figure ne représente que les relations affectées par l'opération d'écriture (c'est-à-dire établies si ST=1 ou éliminées si RT =1). Cette opération d'écriture ne modifie pas l'état des relations entre les objets G et V constituant le groupe GRA, et ne modifie pas l'état des relations entre des objets T,B,F, qui constituent le groupe GRB. Les nouvelles relations à établir sont G-T, G-B, G-F, V-T, V-B, V-F. L'exemple de réalisation représenté sur la figure 10 permet, grâce aux deux signaux de sélection SSB et SSA que comporte chaque point d'accès, d'opérer une écriture sur les deux groupes d'objets GRA et GRB de telle sorte que l'écriture n'est effective que pour les relations entre un objet G ou V, appartenant au groupe GRA et un objet T ou B ou F, appartenant au groupe GRB. Les signaux de commande ont pour valeurs :

ST = 1 ou RT=1 sur le bus commun OC (mise en 1 ou en 0);
SSA=1, SSB= 0 pour le groupe GRA;
SSA = 0, SSB = 1 pour le groupe GRB.

L'appellation A et l'appellation B peuvent être permutées pour les deux groupes : il suffit de permuter l'activation des lignes SSB et SSA sur les points d'accès correspondant à chacun des objets considérés.

Il est à noter aussi qu'un même objet peut appartenir à un seul groupe ou à deux groupes, puisque chaque point d'accès comporte deux signaux de sélection SSB et SSA qui peuvent être activées simultanément.

La figure 29 illustre un tel exemple d'opération d'écriture de relations entre deux groupes non disjoints : un groupe GRB' comprenant des objets T, B, F et un groupe GRA' comprenant les mêmes objets T, B, F et des objets supplémentaires G et V. Ces groupes sont définis par une activation convenable des signaux de sélection SSB et SSA sur chacun des points d'accès correspondant respectivement à ces objets :

SSA=1, SSB= 0 pour G et V
SSA=1, SSB=1 pour T, B, F.

Des traits représentent les relations affectées et dont l'existence ou l'inexistence est mémorisée par une telle opération d'écriture portant sur les groupes GRA' et GRB'. Ces relations sont :
G-T, G-B, G-F, V-T, V-B, V-F, T-B, B-F et F-T. Les relations entre T, B, F sont modifiées dans ce cas puisque ces trois objets appartiennent à la fois au groupe GRA' et au groupe GRB'. Par contre, la relation G-V entre les objets G et V n'est pas modifiée, puisqu'ils appartiennent exclusivement au groupement GRA'.

Considérons maintenant des opérations plus complexes que les opérations de lecture ou d'écriture précédemment décrites, et qui nécessiteraient a priori le déroulement de plusieurs opérations élémentaires successives et donc plus de temps qu'une opération élémentaire.

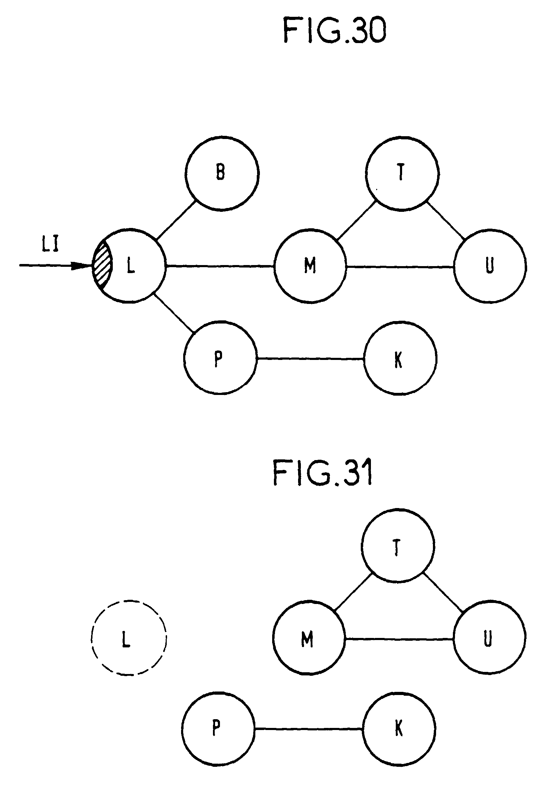

Les figures 30 et 31 illustrent une première opération complexe qui est une opération de libération de toutes les relations existant entre un objet donné, et tout autre objet inconnu à l'extérieur du dispositif de gestion de relations.

Une telle opération est typiquement utilisée pour "éliminer" ou "libérer" un objet dans le dispositif de gestion.

Une telle opération ne serait possible qu'avec une opération élémentaire d'écriture qu'à condition de connaître au préalable à l'extérieur du dispositif les objets ayant une relation avec l'objet donné, ce qui implique généralement de déterminer préalablement ces objets par une opération élémentaire de lecture. La première opération complexe a pour but d'exécuter cette libération globalement, par une seule opération dans le dispositif selon l'invention, donc beaucoup plus rapidement. En outre cette opération doit pouvoir être exécutée simultanément sur plusieurs objets donnés différents.

La figure 30 représente des objets B, L, P, K, M, T, U qui sont reliés par les relations suivantes : L-B, L-M, L-P, P-K, M-T, M-U, U-T. Dans cet exemple, une opération référencée LI consiste à libérer toutes les relations entre l'objet L et tous les autres objets.

La figure 31 représente les relations subsistant entre ces objets après l'exécution de cette opération. Les objets L et B ne sont plus représentés car le dispositif ne mémorise plus aucune relation avec les objets L et B. Par contre, il continue à mémoriser les relations :
P-K, M-T, M-U, U-T.

La libération des relations existant entre un objet donné Z et tout autre objet consiste à écrire un zéro dans les éléments de mémoire qui sont situés au point de croisement du bus orthogonal correspondant à cet objet Z et de tous les autres bus orthogonaux. Une telle opération d'écriture est caractérisée par l'utilisation d'un seul signal de sélection correspondant à l'objet donné Z, tous les autres objets étant déterminés de façon implicite dans cette opération; ainsi, pour exécuter une telle opération, il suffit qu'un élément de mémoire RMP(Z,X), X étant tout autre objet que Z, reçoive un seul signal de sélection sur le bus individuel relatif à l'objet Z. Il s'agit donc ici d'une opération d'écriture effectuée à partir d'un seul objet par rapport à tout autre objet et qui ne met donc en oeuvre qu'une sélection d'objet, comme l'opération de lecture (par opposition à une opération d'écriture de relation entre deux objets explicitement désignés qui met en oeuvre deux sélections d'objets par relation).

Fonctionnellement, cette opération de libération nécessite donc un signal de commande d'opération additionnel pour la distinguer des autres opérations. Dans le cas du second exemple de réalisation RMP2(X,Z) d'un élément de mémoire de relation, un signal de commande de libération est ajouté au bus commun. Dans le cas du premier exemple de réalisation RMP1(X,X) où les signaux de commande d'opération sont combinés aux signaux de sélection sur les bus individuels, un signal de sélection et de commande de libération peut être défini comme un signal additionnel (RLz), ou bien à l'aide d'une combinaison codée des signaux existants.

Une telle combinaison codée peut être par exemple $RT_Z = 1$ et $RS_Z = 1$, qui n'est pas utilisée pour les opérations d'écriture et de lecture simple.

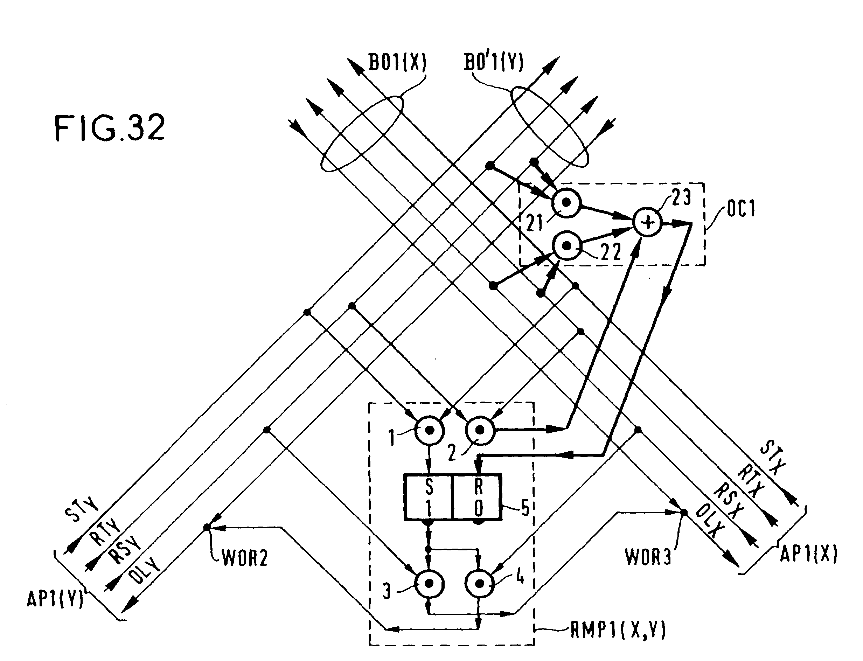

La figure 32 représente le schéma synoptique d'une variante du premier exemple de réalisation RMP1(X, Y) d'un élément de mémoire de relation, cette variante permettant de réaliser la première opération complexe. Elle comporte les mêmes moyens que ceux représentés sur la figure 5 plus des moyens supplémentaires OC1 pour réaliser la première opération complexe sous la commande RTX=1 et RSX=1 s'il s'agit d'éliminer les relations avec l'objet X, ou $RT_Y$=1 et $RS_Y$=1 s'il s'agit d'éliminer les relations avec l'objet Y. Ces moyens supplémentaires OC1 comportent :

- une porte logique ET21 ayant deux entrées reliées respectivement aux deux conducteurs de la branche BO'1(Y), qui fournissent les signaux $RT_Y$ et $RS_Y$;
- une porte logique ET22 ayant deux entrées reliées respectivement aux deux conducteurs de la branche BO1(X), qui fournissent respectivement les signaux $RT_X$ et $RS_X$ ;
- une porte logique OU23 ayant :

  -- trois entrées reliées respectivement à une sortie de la porte 21, une sortie de la porte 22, et à la sortie de la porte ET 2 de l'élément de mémoire RMP1(X,Y), cette sortie n'étant plus reliée directement à l'entrée R de la bascule 5;
  -- et une sortie qui est reliée à cette entrée R de la bascule 5.

Les moyens supplémentaires OC1 et l'élément de mémoire OC1 sont représentés séparés sur la figure, mais en pratique ils constituent une entité unique, appelée élément de mémoire de relation, et qui est placée au point de croisement des branches BO1(X) et BO'1(Y).

Grâce à ces moyens supplémentaires OC1, il suffit d'appliquer les signaux $RT_X$= 1 et $RS_X$= 1 au point d'accès AP1(X) correspondant à l'objet X pour remettre à zéro tous les éléments de mémoire susceptibles de mémoriser l'existence d'une relation entre l'objet X donné et n'importe quel autre objet. De même, il suffit d'appliquer les signaux $RT_Y$= 1 et $RS_Y$=1 sur le point d'accès AP1(Y) pour remettre à zéro tous les éléments de mémoire susceptibles de mémoriser l'existence d'une relation entre un objet Y donné, et tout autre objet.

Il est à la portée de l'Homme de l'Art de transposer les moyens OC1 dans le schéma de la variante RMP2" (figure 19) pour réaliser la première opération complexe.

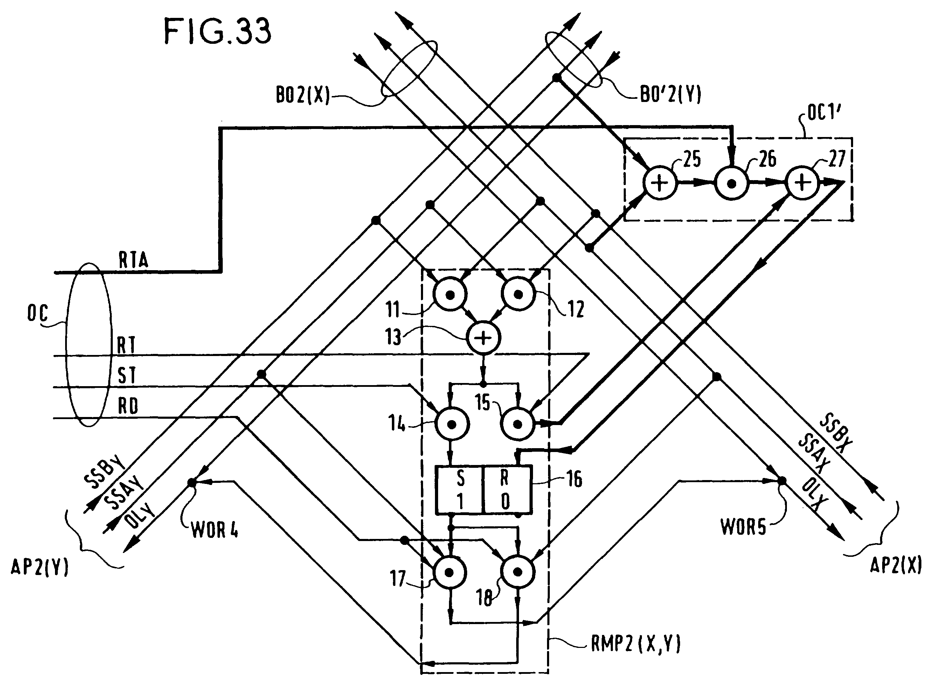

La figure 33 représente le schéma synoptique d'une variante du second exemple de réalisation RMP2(X,Y) d'un élément de mémoire de relation, cette variante permettant de réaliser la première opération complexe. Cette variante comporte tous les éléments représentés sur la figure 11, et des moyens supplémentaires OC1' qui réalisent la première opération complexe sous une commande RTA= 1 et $SSA_Z$= 1 pour un objet donné Z. Le signal de sélection $SSA_Z$=1 est appliqué sur le bus orthogonal correspondant à l'objet Z et le signal de commande RTA=1 est appliqué à un conducteur commun à tous les éléments de mémoire, et qui peut être un conducteur supplémentaire du bus OC.

Les moyens supplémentaires OC'1 représentés sur la figure 33 réalisent la fonction logique RTA.($SSA_X$ + $SSA_Y$) car l'élément RMP2(X, Y) doit être remis à zéro quand la première opération est réalisée sur l'objet X et quand elle est réalisée sur l'objet Y. Ces moyens supplémentaires OC1' comportent :

- une porte logique OU25 ayant deux entrées reliées respectivement au conducteur de la branche BO'2 (Y) qui fournit le signal $SSA_Y$ et au conducteur de la branche BO2 (X) qui fournit le signal $SSA_X$;
- une porte logique ET26 ayant une entrée reliée à une sortie de la porte 25 et une entrée recevant le signal de commande commun RTA au moyen d'un conducteur qui peut être éventuellement intégré au bus OC;
- une porte logique OU27 ayant : une entrée reliée à une sortie de la porte 26; une entrée reliée à la sortie de la porte logique ET15, cette sortie n'étant plus reliée directement à l'entrée R de la bascule 16; et une sortie qui est reliée à l'entrée R de la bascule 16.

Il est à remarquer qu'au moins une autre condition logique : RTA.($SSB_X$ + $SSB_Y$) pourrait être utilisée pour réaliser cette première opération complexe, en remplaçant le signal $SSA_Y$ par le signal $SSB_Y$, et remplaçant le signal $SSA_X$ par le signal $SSB_X$.

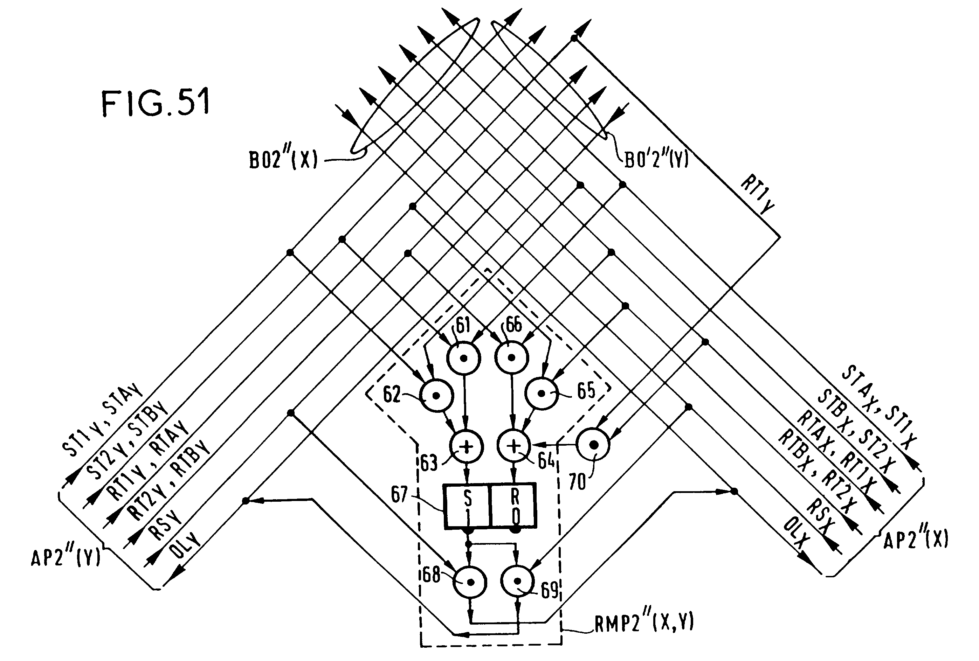

Une autre variante du second exemple de réalisation RMP2(X, Y) permettant de réaliser la première opération complexe, et une autre opération complexe, sera décrite plus loin en se référant à la figure 51.

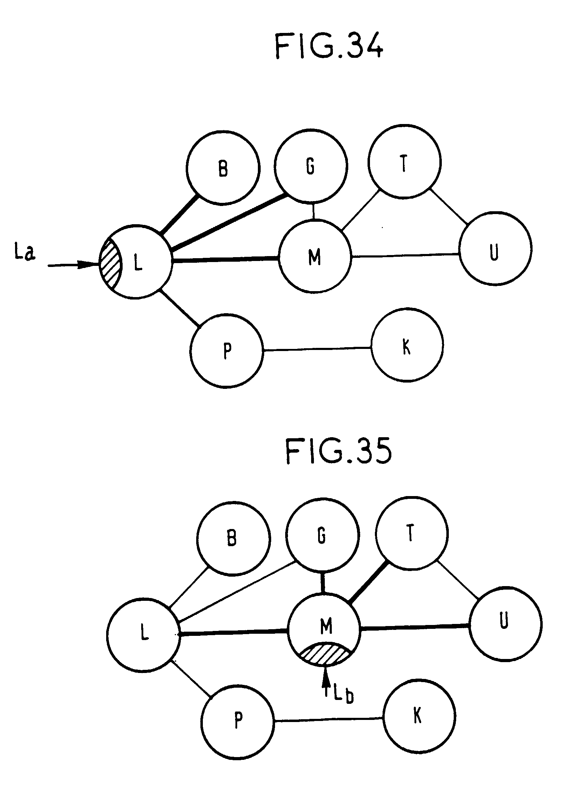

Les figures 34 et 35 illustrent ensemble une deuxième opération complexe consistant en deux lectures simultanées $L_a$ et $L_b$ de toutes les relations établies avec deux objets donnés, avec sortie séparée des objets identifiés répartis en deux groupes distincts A et B. La figure 34 illustre la première lecture $L_a$ consistant à lire quels sont les objets reliés à un objet donné L, parmi des objets B,G, M, T, U, P, K, inconnus à l'extérieur du dispositif de gestion de relations. Dans cet exemple, une lecture à partir de l'objet L doit identifier pour le groupe A les objets B, G, M, P suivant les relations suivantes : L-B, L-G, L-M, L-P, qui sont représentées en trait fort sur la figure.

La figure 35 illustre la seconde lecture $L_b$ réalisée simultanément à partir de l'objet donné M, parmi les mêmes objets B, G, M, T, U, P, K. Cette seconde lecture doit identifier pour le groupe B les objets L, G, T, U suivant les relations suivantes : M-L, M-G, M-T, M-U.

Il est à remarquer, dans cet exemple, que la relation L-M est lue deux fois. Par contre, les relations T-U et P-K ne sont jamais lues puisque ce ne sont pas des relations établies avec les objets donnés comme référence : L et M.

Cette deuxième opération complexe présente l'avantage de lire simultanément un groupe A(comportant les objets identifiés B, G, M, P) à partir de L et un groupe B(comportant les objets identifiés L, G, T, U) à partir de M, en une seule opération, mais en séparant les résultats pour distinguer les objets appartenant respectivement à ces deux groupes A et B d'objets identifiés . Ceci implique de dédoubler les moyens de lecture dans le dispositif de gestion des relations, à savoir :

- au niveau de chaque bus orthogonal, pouvoir commander une lecture $L_a$ à partir du premier objet L pour un groupe A, et une lecture $L_b$ à partir du second objet M pour un groupe B; et disposer de deux signaux de sortie de lecture distincts correspondant respectivement à la lecture $L_a$ et à la lecture $L_b$;
- au niveau de chaque élément de mémoire, prévoir une condition logique de lecture qui prenne en compte ces deux possibilités de commande de lecture $L_a$ et $L_b$.

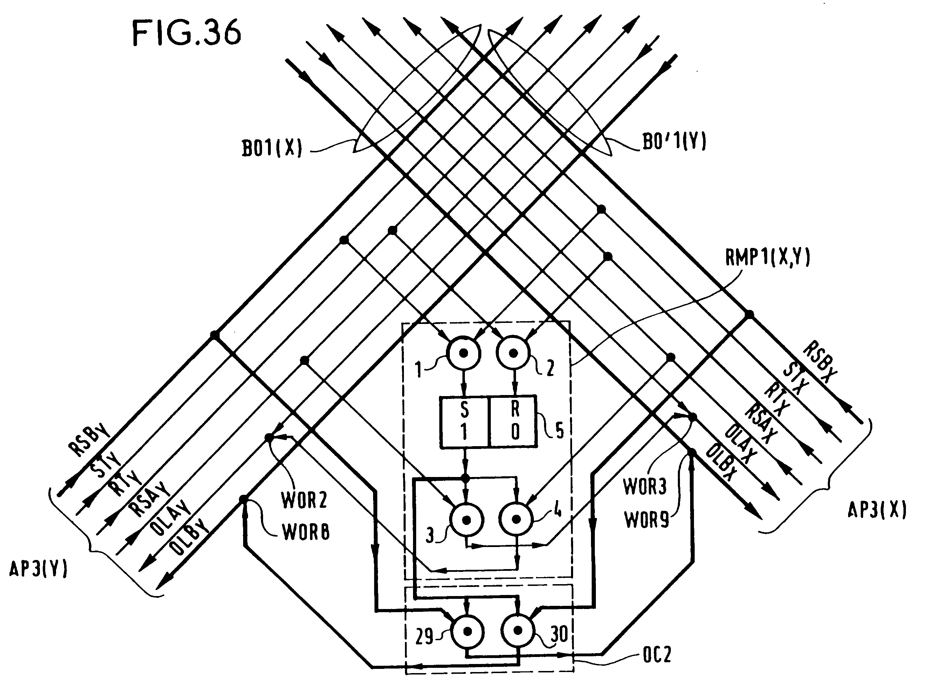

La figure 36 représente le schéma synoptique d'une variante du premier exemple de réalisation RMP1(X, Y) d'un élément de mémoire de relation. Cette variante permet de réaliser la deuxième opération complexe permettant deux lectures simultanées. Elle comporte les mêmes moyens que ceux représentés sur la figure 5 et décrits précédemment, plus des moyens supplémentaires. Ces moyens supplémentaires comportent :

- deux conducteurs supplémentaires dans chaque branche de chaque bus orthogonal. Un premier conducteur est adjoint à la branche BO2(X) pour transmettre un signal $RSB_X$ qui est appliqué à un point d'accès AP3(X). Un second conducteur supplémentaire est adjoint à la branche BO2(X) pour recevoir des signaux $OLB_X$ et les transmettre jusqu'au point d'accès AP3(X), ce second conducteur supplémentaire constituant un OU câblé WOR9. Un premier conducteur supplémentaire est adjoint à la branche BO'2(Y) pour transmettre un signal $RSB_Y$. Un second conducteur supplémentaire est adjoint au bus BO'2(Y) pour recevoir des signaux $OLB_Y$ et les acheminer vers un point d'accès AP3(Y), ce second conducteur supplémentaire constituant un OU câblé WOR8;
- des moyens logiques supplémentaires OC2 qui comportent:

  -- une porte logique ET29 ayant une entrée reliée au conducteur transmettant le signal $RSB_Y$, une entrée reliée à la sortie 1 de la bascule 5, et une sortie reliée au conducteur transmettant le signal $OLB_X$;
  -- et une porte logique ET30 ayant une entrée reliée à la sortie 1 de la bascule 5, une entrée reliée au conducteur transmettant le signal $RSB_X$, et une sortie reliée au conducteur transmettant le signal $OLB_Y$.

La porte ET29 transmet l'information fournie par la sortie de la bascule 5 vers le conducteur transmettant les signaux $OLB_X$ si le signal $RSB_Y$= 1 est appliqué au point d'accès AP3(Y), c'est-à-dire dans le cas d'une lecture des objets qui ont une relation avec l'objet Y et qui appartiennent à un groupe B. La porte ET30 transmet l'information fournie par la sortie 1 de la bascule 5 vers le conducteur transmettant ces signaux $OLB_Y$ si le signal $RSB_X$ =1 est appliqué sur le point d'accès AP3(X), c'est-à-dire dans le cas d'une lecture des objets ayant une relation avec l'objet X et appartenant au groupe B.

Les portes 3 et 4 ont le même fonctionnement que dans la variante représentée sur la figure 5, mais elles ne sont qu'utilisées pour transmettre l'information fournie par la sortie 1 de la bascule 5 que dans le cas d'une lecture des objets appartenant au groupe A. Le signal $RS_Y$ est alors appelé $RSA_Y$. Le signal de sortie de lecture $OL_X$ est alors appelé $OLA_X$. Le signal $RS_X$ est alors appelé $RSA_X$. Le signal $OL_Y$ est alors appelé $OLA_Y$.

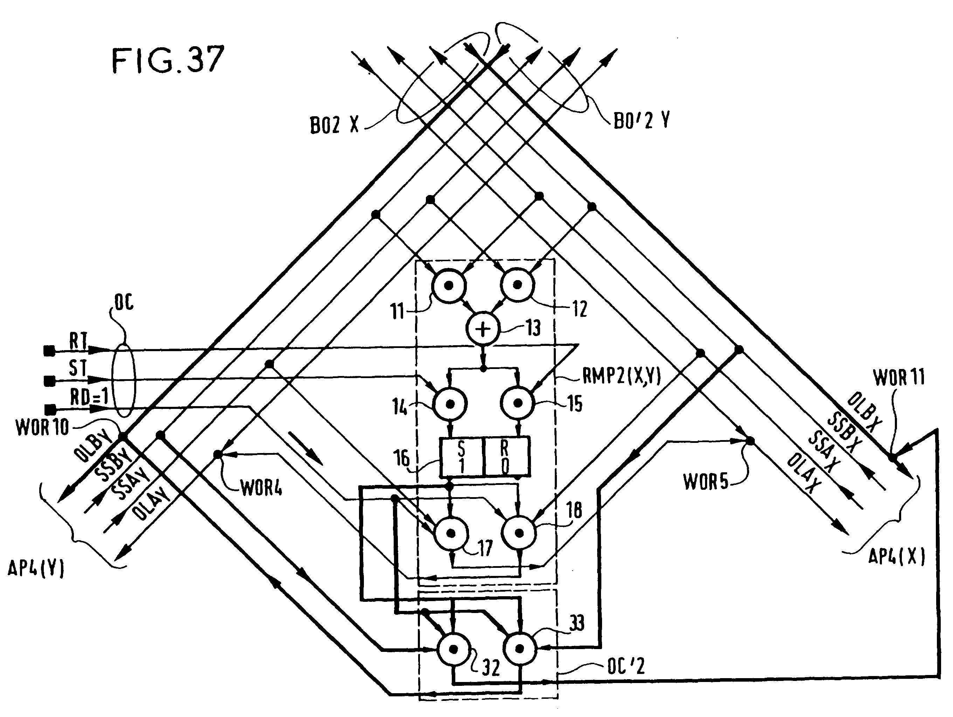

La figure 37 représente le schéma synoptique d'une variante du second exemple de réalisation RMP2(X, Y) d'un élément de mémoire de relation, cette variante permettant de réaliser la deuxième opération complexe. Cette variante comprend les mêmes moyens que le second exemple de réalisation représenté sur la figure 11, et des moyens supplémentaires qui comportent :

- un conducteur supplémentaire adjoint à la branche BO'2(Y) pour recevoir des signaux de sortie de lecture $OLB_Y$, ce conducteur formant un OU câble WOR1O et transmettant ces signaux à un point d'accès Ap4(Y);
- un conducteur supplémentaire adjoint à la branche BO2(X) pour recevoir des signaux de sortie de lecture $OLB_X$, ce conducteur formant un OU câblé WOR11 et transmettant ces signaux à un point d'accès AP4(X);
- et des moyens logiques OC'2 qui comportent :

  -- une porte logique ET32 ayant : une entrée reliée à la sortie 1 de la bascule 16, une entrée reliée au conducteur de la branche BO'2(Y) qui transmet le signal $SSB_Y$, une entrée reliée au conducteur du bus OC qui transmet le signal commun de commande de lecture RD, et une sortie reliée au conducteur supplémentaire qui transmet les signaux $OLB_X$;

-- une porte logique ET33 ayant : une entrée reliée à la sortie 1 de la bascule 16, une entrée reliée au conducteur du bus OC qui transmet le signal commun de commande de lecture RD, une entrée reliée au conducteur de la branche BO2(X) qui transmet le signal $SSB_X$, et une sortie reliée au conducteur supplémentaire $OLB_Y$.

Lorsque le signal commun de commande de lecture RD= 1 est appliqué simultanément avec le signal $SSB_Y$=1, la porte 32 transmet l'information fournie par la sortie 1 de la bascule 16 vers le point d'accès AP4(X), pour indiquer qu'un objet X appartenant au groupe B est relié à l'objet Y donné, dans le cas où la bascule 16 fournit une information 1. Lorsque le signal RD= 1 est appliqué simultanément avec un signal $SSB_X$= 1, la porte 33 transmet l'information fournie par la sortie 1 de la bascule 16 vers le point d'accès AP4(Y), pour indiquer qu'un objet Y appartenant au groupe B est relié à l'objet donné X, dans le cas où la sortie 1 de la bascule 16 fournit une information 1.

Les portes 17 et 18 ont le même fonctionnement que dans la variante représentée sur la figure 11, mais elles interviennent pour la lecture des objets appartenant au groupe A, c'est pourquoi le signal $OL_Y$ est appelé désormais $OLA_Y$, et le signal $OL_X$ est appelé désormais $OLA_X$.

Naturellement si une opération de lecture ne nécessite pas de distinguer deux groupes A et B, il suffit de faire une seule de ces deux lectures, en appliquant soit les signaux correspondant au groupe A, soit les signaux correspondant au groupe B.

En outre, si des opérations logiques doivent être réalisées entre les objets des groupes identifiés A et B, après lecture des objets constituant ces groupes, il suffit de relier au niveau de chaque point d'accès les sorties fournissant les signaux $OLA_X$ et $OLB_X$ à un circuit logique approprié pour réaliser les fonctions logiques souhaitées.

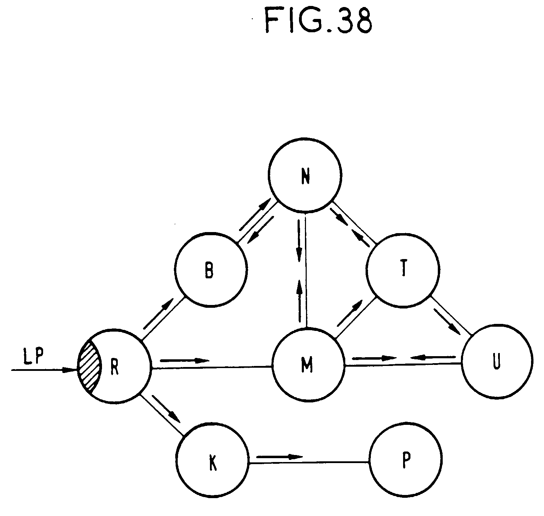

La figure 38 illustre une troisième opération complexe consistant en une lecture par propagation. La lecture commence à partir d'un objet de référence R et se propage de proche en proche sur l'ensemble des relations établies, d'abord vers des objets B, M, K, inconnus à priori, mais reliés directement à R. Puis la lecture se propage des objets B, M, K vers des objets N, T, U indirectement reliés à l'objet R; et de l'objet P vers l'objet K.

Enfin, la lecture se propage de l'objet N vers les objets B, M, T; de l'objet T vers les objets N et U; et de l'objet K vers l'objet P. Ce procédé de lecture par propagation pourrait être mis en oeuvre par des moyens logiques supplémentaires au niveau de chaque élément de mémoire pour réaliser la propagation de proche en proche dans le réseau lui-même, mais un mode de réalisation préférentiel consiste à placer des moyens logiques supplémentaires au niveau de chaque point d'accès.

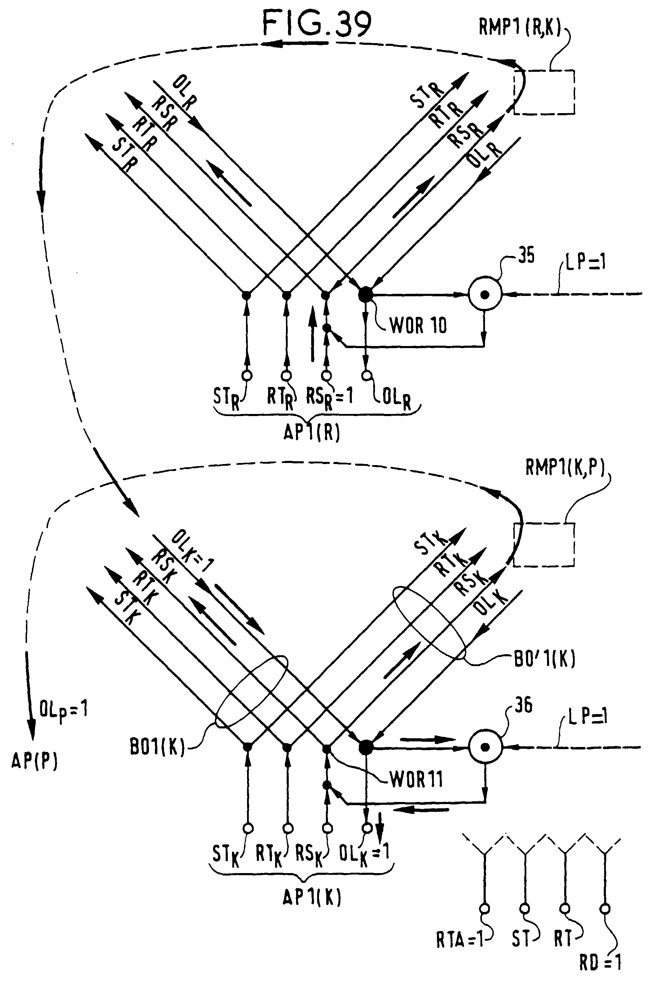

La figure 39 représente le schéma synoptique d'une variante de réalisation du point d'accès AP1(K), représenté sur la figure 6, cette variante comportant des moyens logiques supplémentaires, associés à chaque point d'accès et au bus de commande correspondant, pour réaliser une lecture par propagation. La figure 39 représente deux exemples de points d'accès, AP1(K) et AP1(R), correspondant respectivement aux objets R et K, pour décrire la propagation de la lecture de l'objet de référence R vers l'objet K puis vers l'objet P, conformément à la figure 38. Le point d'accès AP1(R) est muni d'une porte logique ET 35, et le point d'accès AP1(K) est muni d'une porte logique ET36. La porte 35 comporte une entrée reliée à une ligne bus LP commune à tous les points d'accès pour commander une lecture par propagation. Une autre entrée de la porte 35 est reliée au conducteur du point d'accès AP1(R) recevant les signaux de sortie de lecture $OL_R$; et une sortie est reliée au conducteur du point d'accès AP1(R) transmettant le signal $RS_R$, ce conducteur constituant un OU câblé WOR1O.

De même, le point d'accès AP1(K) est muni d'une porte logique ET36 ayant : une entrée reliée au bus LP de commande de lecture par propagation; une entrée reliée au conducteur du point d'accès AP1(K) transmettant les signaux $OL_K$; et une sortie reliée au conducteur du point d'accès AP1(K) transmettant le signal $RS_K$, ce conducteur constituant un OU câblé WOR11. Les portes 35 et 36 peuvent être situées parmi les moyens logiques LM qui fournissent des signaux de commande aux points d'accès du réseau d'éléments de mémoire de relation.

Sur la figure 39 des flèches en traits forts représentent la propagation des signaux importants dans l'exemple de lecture par propagation consistant notamment à identifier les objets K et P à partir de l'objet de référence R. Tout d'abord, le signal $RS_R$ =1 est appliqué au point d'accès AP(R) correspondant à l'objet de référence R.

Ce signal déclenche une lecture dans un élément de mémoire RMP(R, K), qui se traduit par l'apparition d'un signal $OL_K$ = 1 sur le bus orthogonal correspondant à l'objet K. Ce signal valide notamment la porte ET36 associée au point d'accès AP1(K). La porte 36 reçoit par ailleurs le signal LP=1 de commande de lecture par propagation. La porte 36 fournit donc un signal de valeur 1. Ce dernier constitue un signal de lecture $RS_K$ qui commande une lecture dans tous les éléments de mémoire susceptibles de mémoriser l'existence d'une relation entre l'objet K et d'autres objets à priori inconnus. Dans cet exemple, l'élément de mémoire RMP1(K, P) fournit un signal de sortie de lecture $OL_P$ = 1 qui indique que l'objet K est relié à l'objet P. Ce signal de sortie de lecture va activer à son tour une porte logique ET, non représentée, qui est associée à un point d'accès correspondant à l'objet P. Cette porte logique va émettre à son tour un signal de commande de lecture $RS_P$, mais dans cet exemple, cette lecture ne détectera aucun autre objet relié à l'objet P, si ce n'est l'objet K qui a déjà été trouvé. Les objets déterminés par cette lecture par propagation sont connus grâce aux signaux $OL_K$=1 et $OL_P$=1 qui sont fournis respectivement par les points d'accès AP1(K) et AP1(P).

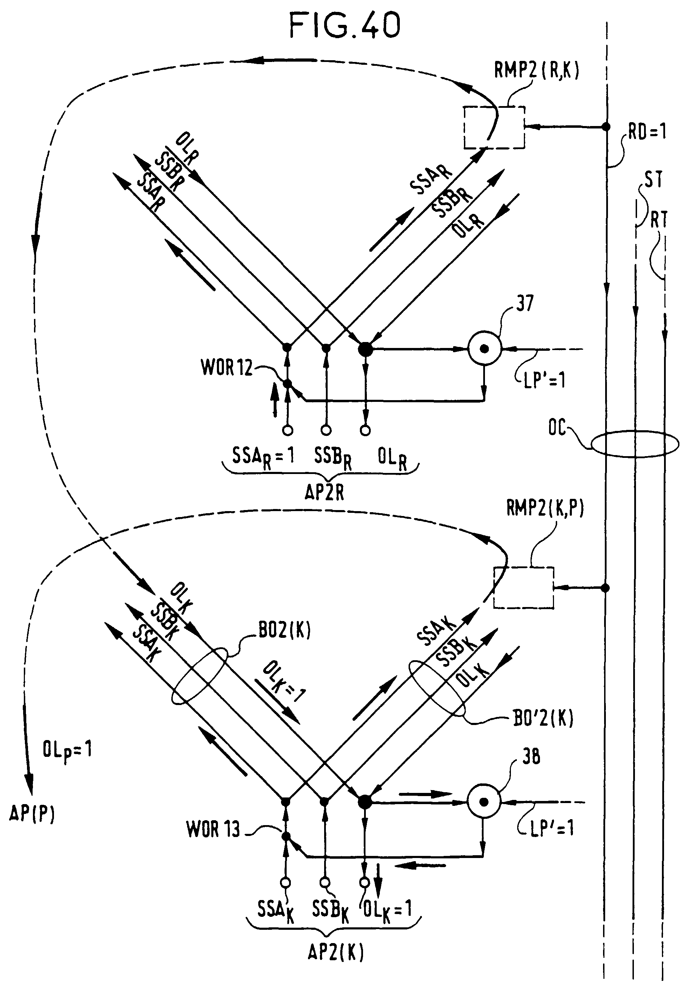

La figure 40 représente le schéma synoptique d'une variante de réalisation du point d'accès AP2(K) représenté sur la figure 11 cette variante comportant des moyens logiques supplémentaires pour réaliser la troisième opération complexe, une lecture par propagation. Elle représente en outre le point d'accès AP2(R) correspondant à l'objet R. Chacun de ces points d'accès est muni de moyens logiques constitués d'une porte logique ET. Le point AP2(2) comporte une porte logique ET37 ayant : une entrée reliée au conducteur transmettant les signaux $OL_R$; une autre entrée reliée à un bus qui est une ligne bus commune à tous les points d'accès et transmettant un signal LP'=1 pour commander une lecture par propagation; et une sortie reliée au conducteur du point d'accès AP2(R), transmettant le signal de commande de lecture $SSA_R$, ce conducteur constituant un OU câblé WOR12. De même, le point d'accès AP2(K) comporte une porte logique ET 38 ayant : une entrée reliée au conducteur du point d'accès AP2(K) transmettant les signaux $OL_K$; une autre entrée reliée à la ligne bus LP; et une sortie reliée au conducteur du point d'accès AP2(K) transmettant les signaux $OL_K$, ce conducteur constituant un OU câblé WOR13.

Sur cette figure 40 les flèches en traits forts représentent les signaux essentiels dans un exemple de fonctionnement correspondant à l'exemple de lecture par propagation des objets K et P à partir de l'objet de référence R. Une lecture par propagation à partir de l'objet R est déclenchée en appliquant simultanément un signal LP'=1 et un signal RD=1 sur le bus commun à tous les éléments de mémoire, et en appliquant un signal $SSA_R$=1, ou bien $SSB_R$=1, sur le point d'accès AP2(R) correspondant à l'objet de référence R. Ces signaux provoquent une lecture dans tous les éléments de mémoire qui sont connectés au bus orthogonal correspondant à l'objet R. En particulier, l'élément de mémoire RMP2(R, K) fournit un signal $OL_K$= 1 au bus orthogonal correspondant à l'objet K. Ce signal se propage jusqu'au point d'accès AP2(K) où il valide la porte 38 qui reçoit par ailleurs le signal LP'=1. La sortie de la porte 38 fournit un signal de valeur 1 qui constitue un signal de commande de lecture $SSA_K$=1 sur le bus orthogonal correspondant à l'objet K. Ce signal commande une lecture dans tous les éléments de mémoire connectés à ce bus. En particulier un élément de mémoire RMP2(K, P) fournit alors un signal $OL_P$=1 indiquant l'existence d'une relation entre l'objet K et l'objet P. Ce signal se propage jusqu'au point d'accès AP(P) où il valide une autre porte logique ET, non représentée, qui permet de propager la lecture à partir de l'objet P.

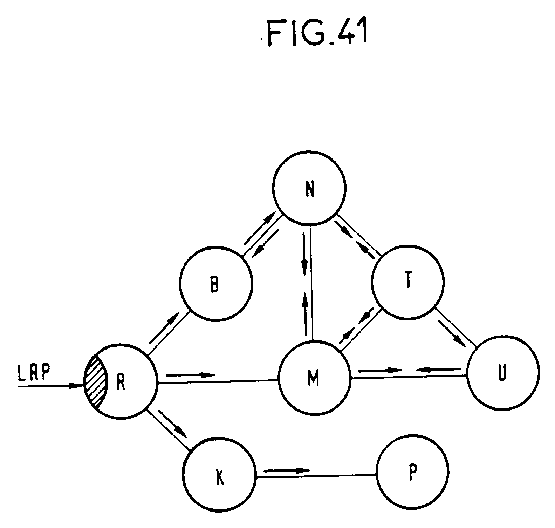

La figure 41 illustre par un exemple une quatrième opération complexe LRP consistant à libérer de proche en proche des relations par propagation. Les objets et les relations sont les mêmes que dans l'exemple représenté sur la figure 38. Cette libération consiste à propager d'un objet à un autre qui lui est relié, un signal de commande de libération qui est celui utilisé dans la première opération complexe, celle-ci permettant la libération de toutes les relations directes ou indirectes entre un objet donné et d'autres objets inconnus à priori. La troisième opération complexe (lecture par propagation) décrite précédemment est utilisée préalablement pour identifier les objets sur lesquels sera appliquée la première opération complexe (libération de toute relation). La quatrième opération complexe est donc une combinaison de la première et de la troisième opération complexe. Elle est mise en oeuvre de préférence par des moyens logiques supplémentaires qui sont placés au niveau des points d'accès plutôt que d'être répartis au niveau des éléments de mémoire.

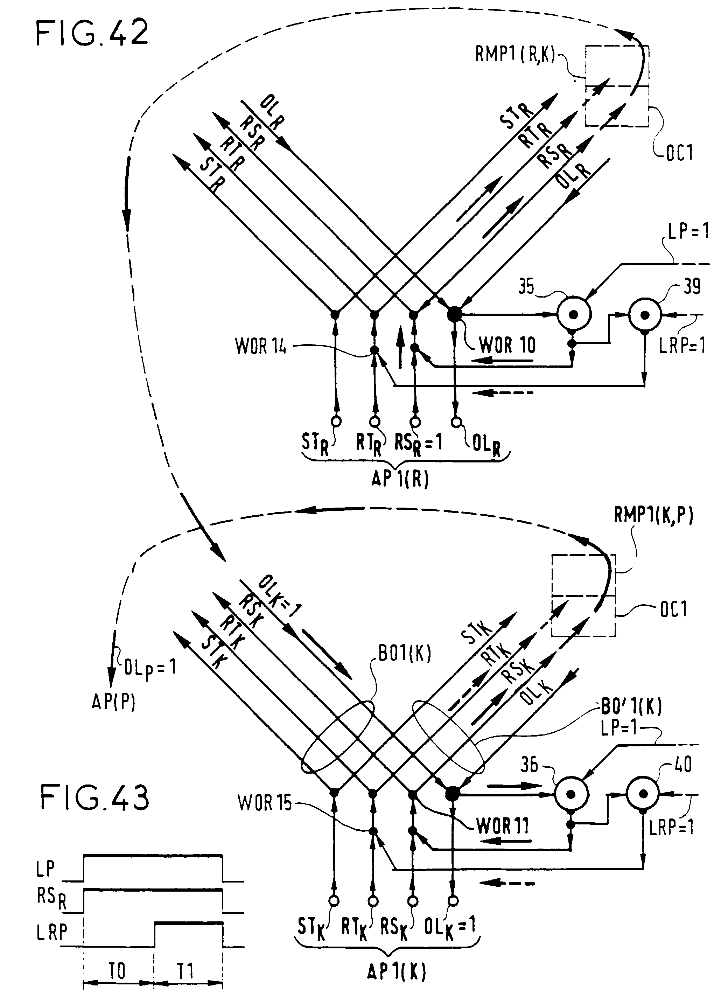

La figure 42 représente le schéma synoptique d'une variante de réalisation du point d'accès représenté sur la figure 6. A titre d'exemple, elle représente des points d'accès AP1(R) et AP1(K) correspondant aux objets R et K représentés sur la figure 39. Cette variante permet de réaliser la quatrième opération complexe, au moyen d'éléments RMP1-OC1 tels que celui représenté sur la figure 32 et décrit précédemment.

En plus des portes logiques ET35 et 36 décrites précédemment pour mettre en oeuvre la troisième opération complexe, deux portes logiques ET supplémentaires, 39 et 40, sont prévues. La porte 39 possède : une entrée reliée à la sortie de la porte 35, une entrée reliée à un bus commun à tous les points d'accès et acheminant un signal LRP de libération des relations par propagation, et une sortie reliée à un conducteur appartenant au point d'accès AP1(R), et transmettant le signal $RT_R$ commandant une remise à zéro. De même, la porte logique 40 possède : une entrée reliée à la sortie de la porte 36, une entrée reliée au bus commun transmettant le signal LRP, et une sortie reliée à un conducteur appartenant au point d'accès AP1(K) et transmettant le signal $RT_K$, ce conducteur constituant un OU câblé WOR15.

La quatrième opération complexe est réalisée en deux étapes conformément au chronogramme représenté sur la figure 43. Pendant un premier intervalle de temps TO, un signal LP=1 est appliqué au bus commun pour autoriser une lecture par propagation. Simultanément un signal $RS_R$=1 est appliqué au point d'accès AP(R) pour commander une première lecture dans les éléments de mémoire connectés au bus orthogonal correspondant à l'objet R. Les signaux essentiels pour la propagation de la lecture sont représentés par des flèches en traits forts et continus. Dans cet exemple, un élément de mémoire RMP1(R,K) contient une information 1 qui indique l'existence d'une relation entre l'objet R et l'objet K. La lecture par le signal $RS_R$=1 provoque l'émission d'un signal $OL_K$ = 1 sur le bus orthogonal correspondant à l'objet K. Ce signal est acheminé jusqu'au point d'accès AP1(K) et il valide la porte 36. La porte 36 fournit alors un signal $RS_K$=1 qui commande une lecture dans tous les éléments de mémoire qui sont connectés au bus orthogonal correspondant à l'objet K. En particulier, une lecture est réalisée dans l'élément de mémoire RMP1(K, P) qui contient une information 1 indiquant l'existence d'une relation entre l'objet K et l'objet P. Cet élément de mémoire émet alors un signal $OL_P$ =1 sur un bus orthogonal non représenté correspondant à l'objet P. Ce signal est transmis par ce bus jusqu'au point d'accès correspondant à l'objet P, où il déclenchera l'émission d'un autre signal de lecture sur le bus orthogonal correspondant à l'objet P. Dans cet exemple, la lecture ainsi déclenchée ne détectera l'existence d'aucune relation au-delà de la relation P-K qui a déjà été trouvée.

Par contre, la lecture par propagation fournira en outre une réponse positive sur les points d'accès correspondant respectivement aux objets B, M, N, T, U.

Puis, pendant un intervalle de temps T1, les signaux LP=1 et $RS_R$=1 sont maintenus, et un signal LRP=1 est appliqué sur le bus commun. Les signaux essentiels pour la propagation des libérations de relation sont représentés dans des flèches en traits forts et en pointillés. Le signal LRP=1 valide la porte 39. Celle-ci fournit un signal qui constitue un signal $RT_R$=1. Les signaux $RT_R$ =1 et RSR=1 sont appliqués simultanément aux moyens logiques OC1 qui sont associés à chacun des éléments de mémoire qui sont connectés au bus orthogonal correspondant à l'objet R, et en particulier l'élément RMP1(R, K). Ces deux signaux provoquent la remise à zéro de tous les éléments de mémoire qui sont connectés au bus orthogonal correspondant à l'objet R, en particulier l'élément RMP1(R, K). De manière analogue, la porte 40 est validée par le signal LRP=1 et il fournit un signal constituant un signal $RT_K$=1 sur le bus orthogonal correspondant à l'objet K. Tous les éléments de mémoire connectés sur ce bus orthogonal sont remis à zéro, en particulier l'élément RMP1(K, B). Le même procédé de remise à zéro est exécuté simultanément sur tous les bus orthogonaux correspondant aux objets R, K, P, M, N, T, U ayant été identifiés précédemment.

Pour un bon déroulement de la quatrième opération complexe, il est nécessaire que les signaux LP=1 et LRP=1 soient appliqués avec un décalage TO suffisant pour assurer que toutes les relations directes ou indirectes avec l'objet de référence soient identifiées, avant de commencer la libération de ces relations; sinon une commande de libération prématurée risquerait d'arrêter la propagation de l'identification des objets avant son terme. D'autre part, les signaux de sortie de lecture OL résultant de l'identification des objets doivent être maintenus pendant tout le processus de libération pour maintenir la validation des portes telles que les portes 35 et 36 représentées sur la figure 39. Cette condition peut nécessiter, ou non, de prévoir une bascule de maintien commandée par chacun de ces signaux OL, au niveau de chaque point d'accès, selon la structure et la technologie utilisées pour réaliser le dispositif de gestion de relations. Le signal de commande de remise à zéro RS=1 est alors élaboré à partir du signal fourni par la sortie de cette bascule et non pas directement à partir du signal de sortie de lecture OL.

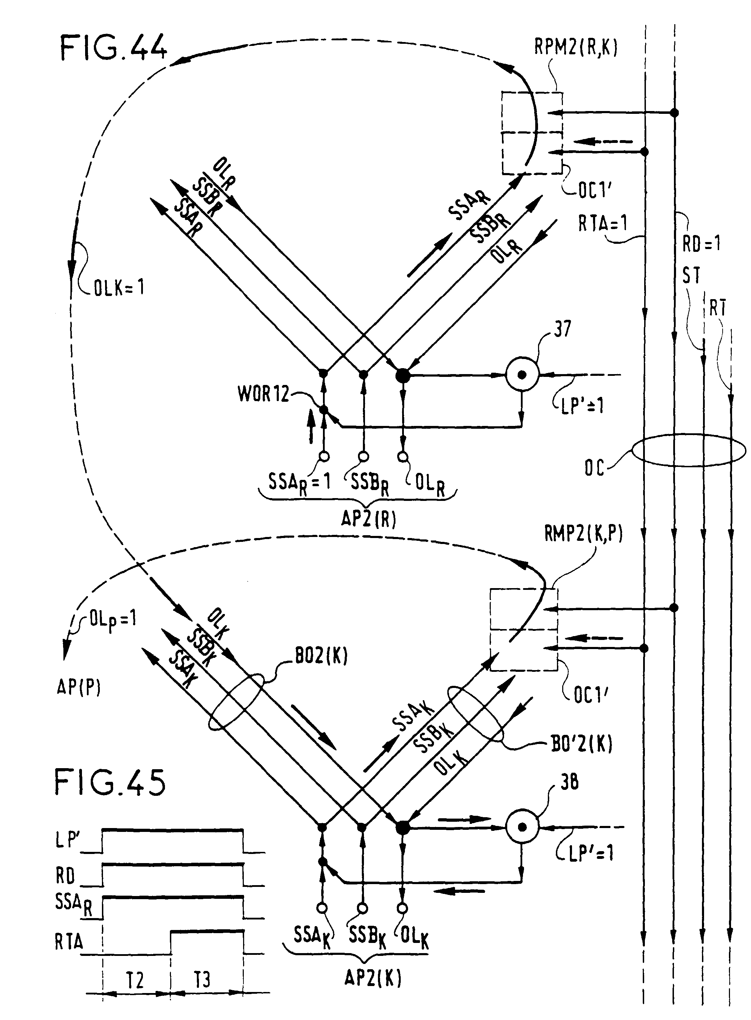

La figure 44 représente le schéma synoptique d'une variante de réalisation du point d'accès représenté sur la figure 12. A titre d'exemple elle représente des points d'accès correspondant aux objets R et K, cette variante comportant des moyens logiques supplémentaires permettant l'exécution de la quatrième opération complexe. Cette quatrième opération complexe est réalisée au moyen d'éléments RMP2(X, Y)- OC'1 tels que celui représenté sur la figure 33. Elle ne nécessite pas de moyens supplémentaires par rapport à la première et à la troisième opération complexes. La figure 42 représente le cheminement des signaux.

La figure 45 représente un chronogramme illustrant la réalisation de la quatrième opération complexe. Pour réaliser cette quatrième opération complexe à partir de l'objet de référence R, un signal LP'=1 est appliqué sur le bus commun à tous les points d'accès, un signal RD=1 est appliqué au bus de commande commun à tous les éléments de mémoire, et un signal $SSA_R$=1 est appliqué simultanément sur le point d'accès AP2(R). Le signal $SSA_R$=1 commande une lecture dans tous les éléments de mémoire qui sont connectés au bus orthogonal correspondant à l'objet R, en particulier dans l'élément RMP2(R, K). Cette lecture fournit un signal $OL_K$=1 sur le bus orthogonal correspondant à l'objet K. Ce signal est transmis jusqu'au point d'accès AP2(K) où il valide la porte 38. Celle-ci reçoit par ailleurs le signal de commande commun de lecture LP'=1. Elle fournit donc un signal de valeur 1 qui constitue un signal de commande de lecture $SSA_K$=1 sur le bus orthogonal correspondant à l'objet K. Ce signal commande une lecture dans tous les éléments de mémoire qui sont connectés sur le bus orthogonal correspondant à l'objet K, en particulier dans l'élément RMP2(K, P). Cette lecture fournit un signal $OL_P$=1 sur le bus orthogonal correspondant à l'objet P. Ce signal est transmis au point d'accès AP(P), non représenté sur la figure 43, où il valide une porte analogue à la porte 38. La lecture est propagée ainsi à tous les éléments de mémoire susceptibles de mémoriser une relation avec l'un des objets R, K, P, M, N, T, U.

Après un délai prédéterminé T2, un signal RTA=1 est appliqué pendant une durée T3 sur le bus de commande commun pour valider une opération de libération de relations dans les moyens logiques OC1' associés à chacun des éléments de mémoire, et qui reçoivent par ailleurs un signal SSA=1, c'est-à-dire dans les moyens logiques OC1' associés à des éléments de mémoire où une information 1 est effectivement en cours de lecture. Les flèches en traits discontinus représentent le cheminement du signal RTA=1 pour commander la libération des relations. Dans cet exemple, les moyens logiques OC1' qui sont associés à l'élément de mémoire RPM2(R, K) commandent une remise à zéro de la bascule de cet élément de mémoire parce qu'ils reçoivent simultanément le signal RTA=1 et le signal $SSA_R$=1 qui est fourni par la porte 37. De même, les moyens logiques OC1' associés à l'élément de mémoire RMP2(K, P) reçoivent simultanément les signaux RTA=1 et $SSA_K$=1 fournis par la porte 38, et commandent donc une remise à zéro de l'élément RMP2(K, P). Le même processus se déroule dans tous les éléments de mémoire contenant une information 1 et qui sont connectés aux bus orthogonaux correspondant aux objets R, K, P, M, N, T, U.

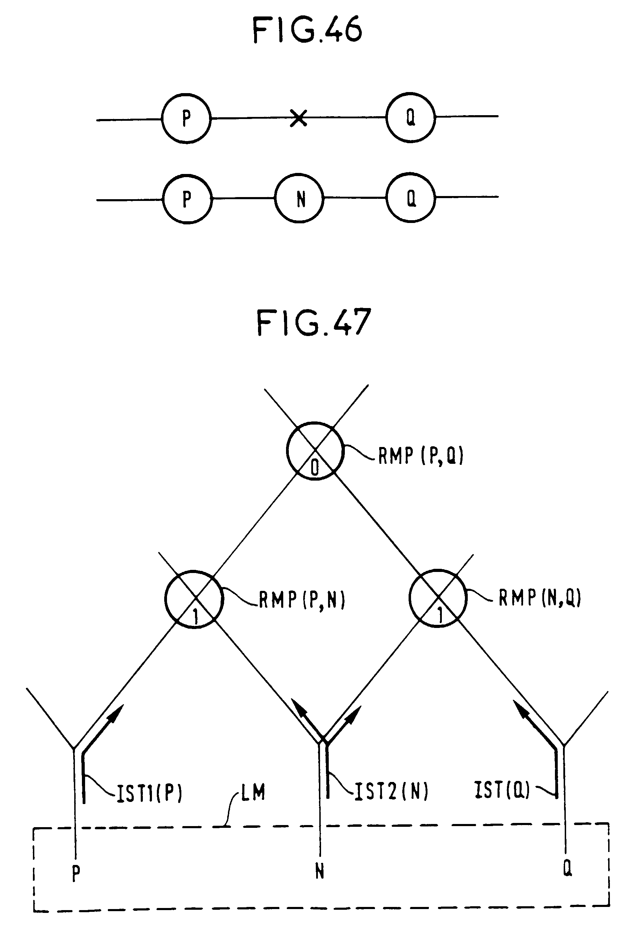

La figure 46 illustre par un exemple une cinquième opération complexe consistant à libérer une relation éventuelle entre deux objets P et Q, mais sans savoir s'il en existe une, puis établir deux nouvelles relations entre un troisième objet (N) donné et ces deux objets respectivement. Cette cinquième opération complexe est réalisée selon un procédé qui est indépendant du fait, qu'au préalable, il existe ou n'existe pas de relation entre P et Q.

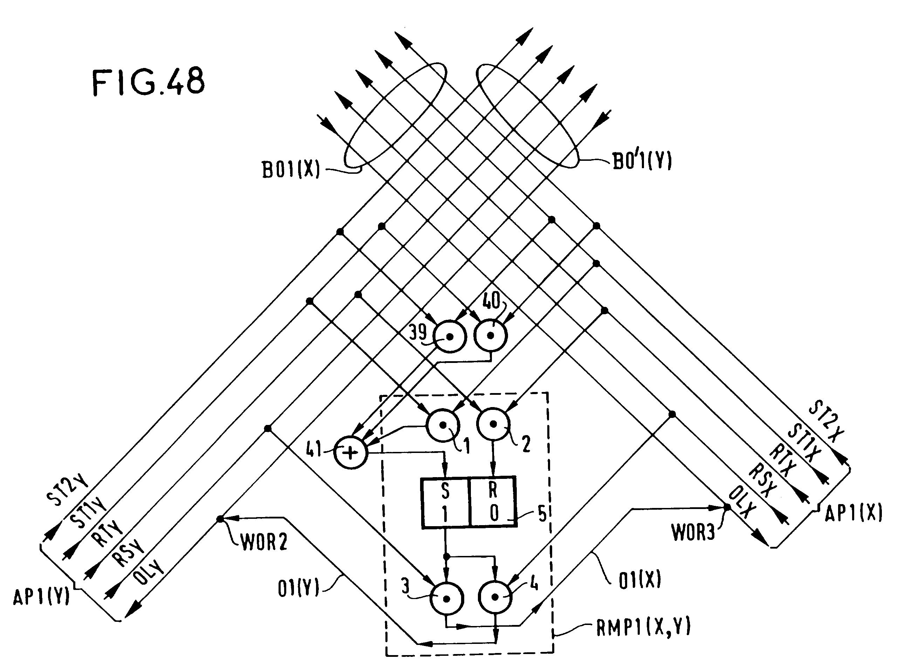

La figure 47 illustre la mise en oeuvre de cette cinquième opération complexe en montrant le procédé de sélections simultanées utilisé pour réaliser : l'écriture d'une valeur 0 dans l'élément RMP(P, Q), d'une valeur 1 dans l'élément RMP(P, N), et d'une valeur 1 dans l'élément RMP(N, Q). Ce procédé présente l'avantage d'une exécution simultanée sans nécessiter de propagations de signaux entre les éléments de mémoire, ni de décomposition de l'opération en deux étapes consécutives. Pour cela, les trois éléments de mémoire concernés sont sélectionnés au moyen de deux combinaisons différentes de deux types d'information de sélection : IST1 appelée information de sélection de type 1, et IST2 appelée information de sélection de type 2. Ces deux combinaisons d'informations de sélection sont liées implicitement à deux opérations d'écriture distinctes exécutables simultanément :

- une opération d'écriture d'une valeur 0 indiquant l'inexistence d'une relation entre les objets P et Q, dans l'élément RMP(P, Q), sous la commande de la combinaison IST1(P).IST1(Q);
- et une opération d'écriture d'une valeur 1 indiquant l'existence d'une relation entre les objets N et P, dans l'élément RMP(P, N), sous la commnande de la combinaison IST1(P).IST2(N), et d'une relation entre ces objets N et Q, dans l'élément RMP(N, Q), sous la commande de la combinaison IST2(N). IST1(Q).

Dans l'exemple considéré, pour réaliser cette cinquième opération complexe de libération d'une relation (éventuelle) entre deux objets et l'établissement simultané de nouvelles relations entre un troisième objet et ces deux objets, un élément de mémoire effectue l'opération d'écriture d'une valeur 0 s'il reçoit simultanément deux informations d'un même type, IST1, respectivement sur les deux bus à l'intersection desquels cet élément est situé (première combinaison IST1/IST1). Il effectue l'opération d'écriture d'une valeur 1 s'il reçoit simultanément deux informations de sélection de types différents, IST1 et IST2, respectivement sur les deux bus à l'intersection desquels cet élément est situé (deuxième combinaison IST1/IST2).

D'une façon plus générale, ce procédé permet de commander l'exécution simultanée de plusieurs opérations différentes sur divers éléments de mémoire de relation RMP dont les objets respectifs peuvent être quelconque, c'est-à-dire non nécessairement exclusifs entre eux, les différentes opérations simultanément exécutables appartenant à des sous-ensembles disjoints d'opérations. Pour cela :

- chaque bus individuel est susceptible de transporter plusieurs types de signal de sélection distincts, fournis par des moyens logiques LM couplés aux points d'accès de bus;
- et chaque élément de mémoire RMP dispose de moyens logiques pour associer sélectivement les différents types de signal de sélection reçus, aux différents sous-ensembles d'opérations possibles; cette association étant obtenue, pour chaque sous-ensemble d'opérations :

 -- soit directement par affectation implicite d'un signal de sélection spécifique, en particulier dans le cas d'une opération basée sur la sélection d'un seul des deux objets correspondants à cet élément (telle que la lecture à partir d'un objet ou bien l'écriture de l'existence ou l'inexistence de relation entre un objet et tout autre objet),
 -- soit par affectation implicite d'une combinaison spécifique de signaux de sélection regus sur les deux bus individuels reliés à cet élément, dans le cas d'une opération basée sur la sélection simultanée des deux objets correspondant à cet élément (telle que l'écriture de l'existence ou l'inexistence de relation entre ces deux objets).

Au-delà de l'exemple d'application que constitue la cinquième opération complexe, ce procédé généralisé permettant l'exécution simultanée de plusieurs opérations différentes a l'avantage de décupler la puissance de traitement du dispositif de gestion de relations.

Dans l'exemple considéré, pour réaliser la cinquième opération complexe, les informations de sélection et les informations de commande d'opération peuvent être structurées différemment selon le mode de réalisation de l'élément de mémoire. Les figures 48 à 51 représentent les schémas synoptiques de trois variantes de réalisation de quatre éléments de mémoire décrits précédemment : RMP1(X, Y), RMP1"(X, Y), RMP2(X, Y), et RMP2"(X, Y).

La figure 48 représente le schéma synoptique de l'exemple de réalisation RMP1(X, Y) muni de moyens supplémentaires pour réaliser cette cinquième opération complexe. Ces moyens supplémentaires comportent :

- un conducteur supplémentaire dans chaque bus individuel, la branche BO1(X) du bus correspondant à l'objet X comportant à titre d'exemple un conducteur supplémentaire pour transporter un signal $ST2_X$, le signal $ST_X$ étant référencé alors $ST1_X$;
- une porte ET, 39, à deux entrées et une sortie, une première entrée étant reliée au conducteur de la branche BO'1

(Y) transportant un signal $ST2_Y$, et la seconde entrée étant reliée au conducteur de la branche BO1(X) transportant le signal $ST1_X$;

- une porte ET, 40, à deux entrées et une sortie, une première entrée étant reliée au conducteur de la branche BO'1 (Y) transportant le signal $ST1_Y$ et la seconde entrée étant reliée au conducteur de la branche BO1(X) transportant le signal $ST2_X$;

- une porte OU,41, à trois entrées et une sortie, une première entrée étant reliée à la sortie de la porte 39, une deuxième entrée étant reliée à la sortie de la porte 40, et une troisième entrée étant reliée à la sortie de la porte ET 1, cette sortie n'étant plus reliée directement à l'entrée S de la bascule 5, et la sortie de la porte 41 étant reliée à l'entrée S.

L'écriture normale d'une valeur 1 est inchangée par rapport à ce qui a été décrit précédemment. Elle est réalisée si et seulement si :

$$ST1_X.ST1_Y = 1$$

L'écriture normale d'une valeur 0 est réalisée comme cela a été décrit précédemment, c'est-à-dire si et seulement si :

$$RT1_X.RT1_Y = 1$$

En particulier, pour écrire une valeur 0 dans l'élément RMP(P, Q), la condition logique a réaliser est :

$$RT1_P.RT1_Q = 1$$

Les signaux $RT1_P = 1$ et $RT1_Q=1$ constituent deux signaux de sélection qui sont identiques, et en outre ils constituent des signaux de commande d'une opération d'écriture d'une valeur 0.

Par contre, une écriture, dite spéciale, d'une valeur 1 dans l'élément RMP(N, Q) est réalisée si et seulement si :

$$ST1_N. ST2_P + ST2_N. ST1_P = 1$$

C'est-à-dire si les entrées de la porte 39, ou bien les entrées de la porte 40, reçoivent deux signaux de sélection de types différents, l'un étant de type ST1 et l'autre étant de type ST2.

De même une écriture, dite spéciale, d'une valeur 1 dans l'élément RMP(N, Q) est réalisée si et seulement si :

$$ST1_N.ST2_Q + ST2_N. ST1_Q = 1$$

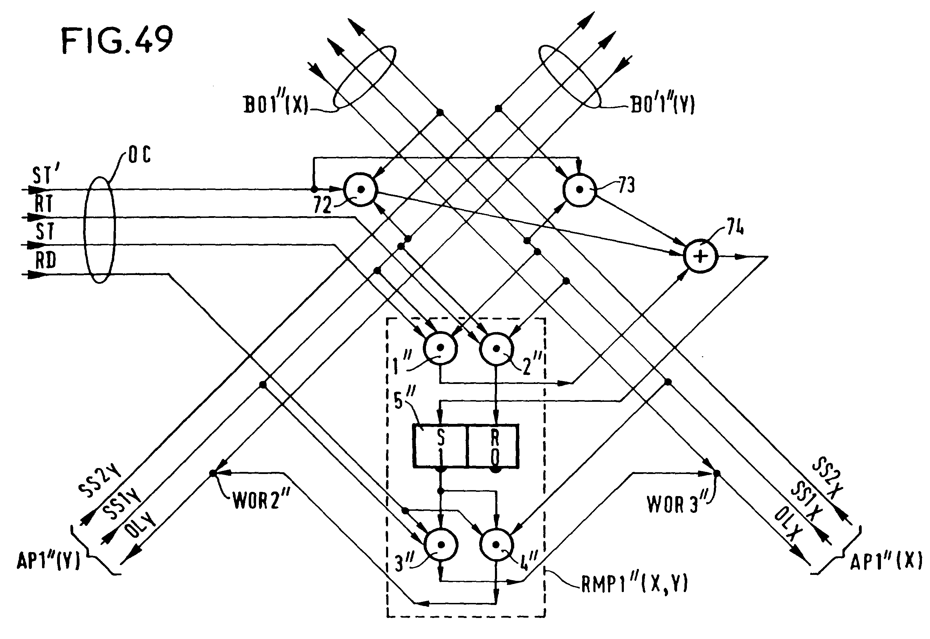

La figure 49 représente le schéma synoptique de l'exemple de réalisation RMP1''(X, Y) et des moyens supplémentaires qui lui sont adjoints pour permettre la cinquième opération complexe. Ces moyens supplémentaires comportent :

- un conducteur supplémentaire dans chaque bus individuel, à titre d'exemple la branche BO1''(X) du bus correspondant à l'objet X comporte un conducteur supplémentaire transportant un signal $SS2_X$, le signal $SS_X$ étant référencé désormais $SS1_X$;
- un conducteur supplémentaire dans le bus commun OC, pour transporter un signal ST' de commande d'écriture spéciale d'une valeur 1;
- une porte ET, 72, à trois entrées et une sortie, une première entrée étant reliée au conducteur du bus commun OC transportant le signal ST', une deuxième entrée étant reliée au conducteur de la branche BO1''(X) transportant le signal $SS2_X$, et une troisième entrée étant reliée au conducteur de la branche BO'1''(Y) transportant un signal $SS1_Y$;
- une porte ET, 73, à trois entrées et une sortie, une première entrée étant reliée à un conducteur de la branche BO'1''(Y) transportant le signal $SS2_Y$, une deuxième entrée étant reliée à un conducteur de la branche BO1''(X) transportant le signal $SS1_X$, et une troisième entrée étant reliée au conducteur du bus commun OC transportant le signal ST';

- une porte OU, 74, à trois entrées et une sortie, une première entrée étant reliée à la sortie de la porte 72, une deuxième entrée étant reliée à la sortie de la porte 73, et la troisième entrée étant reliée à la sortie de la porte ET 1", qui n'est plus reliée directement à l'entrée S de la bascule 5", la sortie de la porte 74 étant reliée à cette entrée S.

L'écriture normale d'une valeur 1 est réalisée de la façon décrite précédemment, c'est-à-dire si et seulement si :

$$SS1_X.SS1_Y = 1 \text{ et } ST = 1$$

L'écriture normale d'une valeur 0 est réalisée de la manière décrite précédemment, c'est-à-dire si et seulement si :

$$SS1_X.SS1_Y = 1 \text{ et } RT=1$$

Pour ces opérations normales, les informations de sélection sont du même type, SS1, sur les deux bus à l'intersection desquels est situé l'élément de mémoire.

Pour réaliser une écriture spéciale d'une valeur 1, les informations de sélection doivent être de deux types différents, respectivement SS1 et SS2. L'écriture spéciale d'une valeur 1 est réalisée si et seulement si :

$$SS1_N.SS2_P+SS2_N.SS1_P= 1 \text{ et } ST'=1 \text{ pour } RMP1"(P, N)$$

$$SS1_N.SS2_Q+SS2_N.SS1_Q = 1 \text{ et } ST'=1 \text{ pour } RMP1"(N, Q)$$

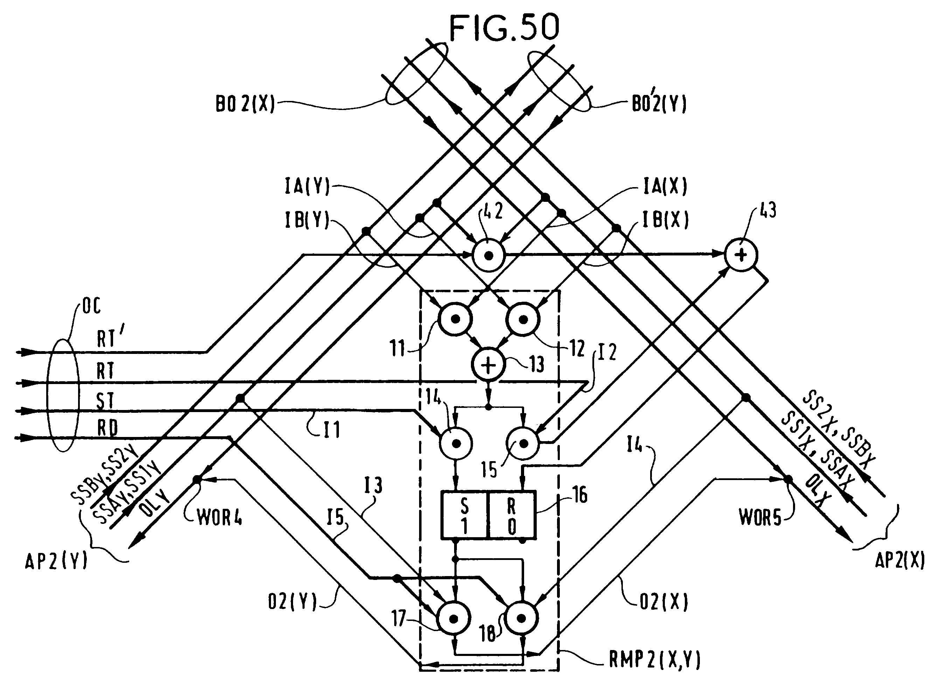

La figure 50 représente le schéma synoptique de l'exemple de réalisation RMP2(XY) muni de moyens supplémentaires pour permettre la réalisation de la cinquième opération complexe. Ces moyens supplémentaires comportent :

- un conducteur supplémentaire dans le bus commun OC, pour transporter un signal RT' de commande d'écriture spéciale d'une valeur 0;
- deux conducteurs supplémentaires dans chaque bus correspondant à un objet; à titre d'exemple, dans la branche BO2(X) du bus correspondant à l'objet X ces deux conducteurs supplémentaires transportent des signaux $SS1_X$ et $SS2_X$, mais un mode de réalisation préférentiel consiste à réutiliser les mêmes conducteurs que ceux utilisés respectivement pour transporter les signaux de sélection $SSA_X$ et $SSB_X$ permettant l'affectation de chaque objet dans l'un des sous-ensembles A ou B, ou dans les deux sous-ensembles A et B;
- une porte ET,42, ayant trois entrées et une sortie, une première entrée étant reliée au conducteur du bus commun OC transportant le signal RT', une deuxième entrée étant reliée à un conducteur de la branche BO'2(Y) transportant un signal $SS1_Y$ ainsi que le signal $SSA_Y$, et une troisième entrée étant reliée à un conducteur de la branche BO2(X) transportant le signal $SS1_X$ ainsi que le signal $SSA_X$;
- et une porte OU, 43, à deux entrées et une sortie, une première entrée étant reliée à la sortie de la porte 42, et la deuxième entrée étant reliée à la sortie de la porte ET 15, cette sortie n'étant plus reliée directement à l'entrée R de la bascule 16, la sortie de la porte 43 étant reliée à cette entrée R.

Une écriture normale est réalisée dans cet élément RMP2(X, Y) de la manière décrite précédemment, seules ont changé les références des signaux : L'élément doit recevoir deux informations de sélection de types différents : SS1 et SS2. L'écriture normale d'une valeur 1 est réalisée si et seulement si :

$$SS1_X.SS2_Y + SS2_X.SS1_Y = 1 \text{ et } ST = 1$$

L'écriture normale d'une valeur 0 est réalisée si et seulement si :

$$SS1_X. SS2_Y + SS2_X.SS1_Y = 1 \text{ et } RT = 1$$

L'écriture normale d'une valeur 1 dans un élément RMP2(N, P) est donc réalisée si et seulement si :

$$SS1_N \cdot SS2_P + SS2_N.SS1_P = 1 \text{ et } ST = 1$$

L'écriture normale d'une valeur 1 dans un élément RMP(N, Q) est réalisée si et seulement si :

$$SS1_{\cdot N}.SS2_Q + SS2_N.SS1_Q = 1 \text{ et } ST = 1$$

Une écriture spéciale d'une valeur 0 est réalisée si et seulement si :

$$SS1_P.SS1_Q = 1 \text{ et } RT' = 1$$

C'est-à-dire seulement si l'élément reçoit deux informations de sélection du même type : SS1.

La figure 51 représente le schéma synoptique de l'exemple de réalisation RMP2''(X, Y) muni de moyens supplémentaires permettant de réaliser la cinquième opération. Ces moyens supplémentaires comportent :

- quatre conducteurs supplémentaires dans chaque bus correspondant à un objet, pour transporter respectivement quatre signaux $ST1_X$, $ST2_X$, $RT1_X$, $RT2_X$ : par exemple pour l'objet X, ces quatre conducteurs supplémentaires peuvent être avantageusement confondus avec les quatre conducteurs transportant respectivement les signaux $STA_X$, $STB_X$, $RTA_X$, $RTB_X$, permettant l'affectation de l'objet à un groupe A ou B, ou aux deux groupes A et B à la fois;
- une porte ET,70, à deux entrées et à une sortie, une première entrée étant reliée à un conducteur de la branche BO'2''(Y) transportant le signal $RT1_Y$, et la seconde entrée étant reliée à un conducteur de la branche BO2''(X) transportant le signal $RT1_X$, et une sortie étant reliée à une entrée supplémentaire de la porte OU 64.

Une opération d'écriture normale est réalisée de la manière décrite précédemment, seules les références des signaux ont changées. Une écriture normale est réalisée si et seulement si deux informations de sélection, de même type, SS1, sont appliquées simultanément sur les deux bus à l'intersection desquels est situé l'élément de mémoire. L'écriture normale d'une valeur 1 est réalisée si et seulement si :

$$ST1_X.ST2_Y + ST2_X.ST1_X = 1$$

L'écriture normale d'une valeur 0 est réalisée si et seulement si :

$$RT1_X.RT2_Y + RT2_X.RT1_Y = 1$$

Une écriture spéciale d'une valeur 0 est réalisée si et seulement si l'élément de mémoire reçoit simultanément deux informations de sélection du même type, RT1, appliquées respectivement sur les deux bus à l'intersection desquels est situé l'élément de mémoire. L'écriture spéciale d'une valeur 0 est réalisée si et seulement si :

$$RT1_X.RT1_Y = 1$$

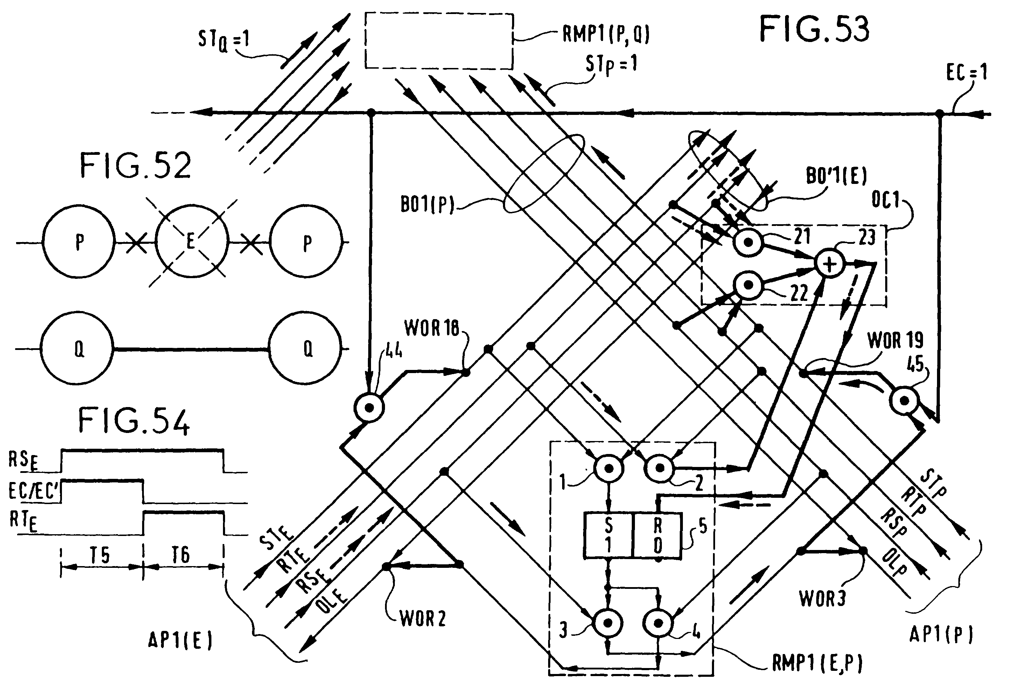

La figure 52 illustre une sixième opération complexe consistant à libérer des relations existant entre un objet donné et au plus deux autres objets dits adjacents dans une chaîne linéaire de relations entre objets, puis établir une relation directe entre ces deux objets adjacents. Il s'agit en fait d'éliminer un objet E connu, appelé objet à éliminer dans une chaîne linéaire d'objets P-E-Q, les objets P et Q étant inconnus à priori, et à établir automatiquement une relation directe entre les objets adjacents P et Q. En outre, la même opération doit pouvoir être effectuée dans le cas éventuel où l'objet E à éliminer n'est associé qu'à un seul objet adjacent au lieu de deux, sans que ceci soit connu à l'extérieur du dispositif (un objet E à éliminer est supposé avoir au moins un autre objet adjacent).

La figure 53 représente le schéma synoptique d'une variante du premier exemple de réalisation RMP1 d'un élément de mémoire de relation, cette variante permettant de réaliser cette sixième opération complexe.

Outre un élément de mémoire RMP1 et les moyens logiques OC1 permettant de réaliser la première opération complexe, cette variante comporte deux portes logiques ET 44 et 45. La structure et le fonctionnement de cette variante sont décrits ici pour l'élément de mémoire RMP1(E, P) mémorisant l'existence d'une relation entre l'objet E et un objet P. Naturellement le fonctionnement est identique pour l'élément de mémoire mémorisant la relation entre l'objet E et l'objet Q, et dans tout autre élément de mémoire qui mémoriserait l'existence d'une relation entre l'objet E et un autre objet quelconque. La sixième opération complexe est réalisée identiquement et en parallèle dans chacun de ces éléments de mémoire.

Dans cet exemple, la porte ET 44 comporte : une entrée reliée à un bus commun à tous les éléments de mémoire et transmettant un signal EC =1 qui commande cette sixième opération complexe; une entrée reliée à la sortie de la porte ET 44 de l'élément de mémoire RMP1(E, P); et une sortie reliée à un conducteur de la branche BO'1 (E) du bus orthogonal correspondant à l'objet E, transmettant le signal $ST_E$ de commande d'écriture d'une valeur 1, ce conducteur constituant un OU câblé WOR 18. De manière analogue, la porte 45 comporte : une entrée reliée au bus commun transmettant le signal EC=1; une entrée reliée à la sortie de la porte 3; et une sortie reliée au conducteur du bus orthogonal correspondant à l'objet P, transmettant le signal $ST_P$ de commande d'écriture d'une valeur 1 ce conducteur constituant un OU câblé WOR19.

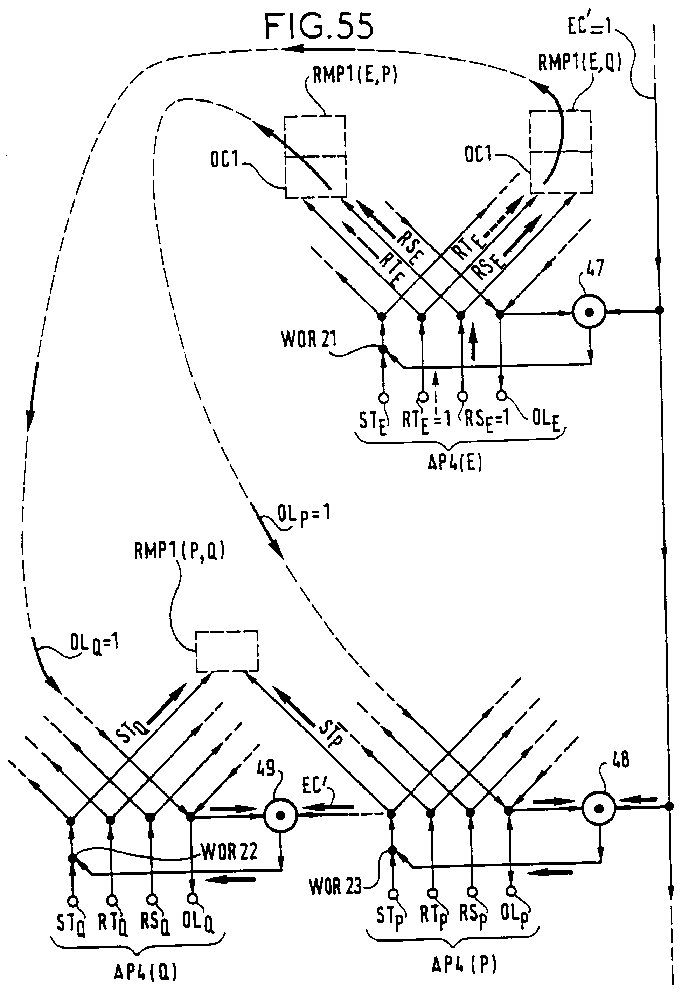

La figure 54 représente un chronograme illustrant le fonctionnement de l'exemple de réalisation représenté sur la figure 53. Pendant un premier intervalle de temps T5, le dispositif de gestion de relations lit les informations indiquant l'existence des relations, E-P et E-Q, partant de l'objet E; et mémorise l'établissement d'une relation P-Q. Ensuite, pendant un intervalle de temps T6, il mémorise la libération des relations E-P et E-Q.

Pendant l'intervalle T5, le signal $RS_E$=1 est appliqué à tous les éléments de mémoire connectés au bus orthogonal correspondant à l'objet E. Simultanément, le signal EC=1 est appliqué au bus commun à tous les éléments de mémoire. Les signaux essentiels pour la lecture des relations partant de E sont représentés par des flèches en traits continus. Les signaux essentiels pour l'établissement des relations telles que P-Q sont représentés par des flèches en traits continus.

Comme le montre la figure 53, le signal $RS_E$ valide la porte 3 pour transmettre un signal de sortie de lecture $OL_P$ sur le bus orthogonal correspondant à l'objet P. Ce signal a une valeur 1 puisque les objets P et E sont liés par une relation. Le signal EC=1 valide la porte 45 pour fournir un signal $ST_P$=1 au bus orthogonal correspondant à l'objet P, pour commander une écriture dans tous les éléments de mémoire qui sont connectés à ce bus orthogonal et qui reçoivent simultanément un autre signal de commande d'écriture RS par un autre bus orthogonal. Dans cet exemple, le fonctionnement de l'élément de mémoire RMP1(E, Q), non représenté, est analogue. Un signal $ST_Q$=1 est donc émis sur le bus orthogonal correspondant à l'objet Q. Par conséquent, un élément de mémoire RMP1(P, Q) reçoit simultanément les signaux $ST_P$=1 et $ST_Q$ =1. Donc il mémorise l'établissement d'une relation entre les objets P et Q. L'établissement d'une relation serait mémorisé de la même manière dans tout autre élément de mémoire correspondant à un couple d'objets ayant chacun une relation avec l'objet E.

Ensuite, pendant l'intervalle T6, le signal EC reprend la valeur 0, le signal $RS_E$=1 est maintenu, et le signal de commande $RT_E$=1 est appliqué au point d'accès AP1(E) correspondant à l'objet E. Les deux signaux $RS_E$=1 et $RT_E$=1 étant simultanés, ils constituent une commande pour réaliser la première opération complexe, c'est-à-dire la libération de toutes les relations établies entre l'objet E et d'autres objets. Ces deux signaux commandent les moyens logiques OC1 comme cela a été décrits précédemment, en remettant à zéro la bascule 5 de l'élément de mémoire RMP1(E, P).

La figure 55 représente le schéma synoptique d'une variante de réalisation du point d'accès représenté sur la figue 12. A titre d'exemple, elle représente trois points d'accès AP4(E), AP4(P), AP4(Q) correspondant aux objets E, P, et Q.

Dans cette variante, la sixième opération complexe est réalisée par des moyens logiques supplémentaires qui ne sont pas analogues aux portes 44 et 45 placées au niveau de chaque élément de mémoire, mais au moyen d'une porte placée au niveau de chaque point d'accès. Dans cet exemple, trois portes logiques ET, 47, 48, 49 sont placées respectivement près des points d'accès correspondant aux objets E, P, et Q. Chaque porte 47, 48, 49 possède une première entrée reliée à un bus commun à tous les points d'accès, transmettant un signal EC'=1 pour commander la réalisation de la sixième opération complexe.

La porte 47 possède une seconde entrée qui est reliée à un conducteur appartenant au bus orthogonal correspondant à l'objet E, et transmettant le signal de sortie de lecture $OL_E$. Une sortie de la porte 47 est reliée au conducteur de ce bus transmettant le signal $ST_E$, ce conducteur constituant un OU câblé WOR21. De même, la porte 48 possède une seconde entrée reliée à un conducteur appartenant au bus orthogonal correspondant à l'objet P et transmettant le signal $OL_P$. Une sortie de porte 48 est reliée au conducteur de ce bus transmettant le signal $ST_P$, ce conducteur constituant un OU câblé WOR23. De même, la porte 49 possède une seconde entrée reliée à un conducteur appartenant au bus orthogonal correspondant à l'objet Q, et transmettant le signal $OL_Q$. Une sortie de la porte 49 est reliée au conducteur de ce bus transmettant le signal $ST_Q$, ce conducteur constituant un OU câblé WOR22.

Les chronogrammes représentés sur la figure 54 sont encore valables pour illustrer le fonctionnement de la variante représentée sur la figure 55, à condition de remplacer l'appelation EC par EC'. Pendant l'intervalle T5, les signaux $RS_E$=1 et EC'=1 sont appliqués simultanément, respectivement sur le point d'accès AP4(E) correspondant à l'objet donné E, et sur le bus commun à tous les éléments de mémoire.

Le signal $RS_E$=1 commande une lecture dans tous les éléments de mémoire connectés au bus orthogonal correspondant à l'objet E, notamment les éléments RMP1(E, P) et RMP1(E, Q). Cette lecture fournit donc, dans cet exemple, un signal $OL_P$ =1 sur le bus orthogonal correspondant à l'objet P et un signal $OL_Q$=1 sur le bus orthogonal correspondant à l'objet Q. Ces deux signaux valident respectivement les portes 48 et 49 qui reçoivent par ailleurs le signal de commande EC'=1 commandant de réaliser la sixième opération complexe. La porte 48 fournit alors une information 1 qui constitue un signal $ST_P$ =1 sur le bus orthogonal correspondant à l'objet P. La porte 49 fournit une information 1 qui constitue un signal $ST_Q$=1 sur le bus orthogonal correspondant à l'objet Q. L'élément de mémoire RMP1(P, Q) qui est situé au croisement des bus orthogonaux correspondant aux objets P et Q reçoit donc simultanément deux signaux de commande d'écriture qui provoquent donc la mémorisation de l'établissement de la relation P-Q.

Pendant l'intervalle de temps T6, le signal EC' revient à la valeur O alors que le signal $RT_E$ =1 est appliqué au point d'accès correspondant à l'objet E. Le signal $RS_E$=1 est maintenu, par conséquent tous les éléments de mémoire connectés au bus orthogonal correspondant à l'objet E reçoivent simultanément les signaux $RS_E$=1 et $RT_E$=1. Ces derniers commandent, dans les moyens logiques OC1 associés respectivement à chacun de ces éléments de mémoire, l'élaboration d'un signal de remise à zéro. Cette remise à zéro est réalisée en particulier dans l'élément de mémoire RMP1(E, Q), ce qui mémorise la libération de la relation E-Q, et dans l'élément de mémoire RMP1(E, P) ce qui mémorise la libération de la relation E-P.

Selon une variante de réalisation, à la portée de l'Homme de l'Art, l'opération de libération pourrait être commandée, dans les dispositifs représentés sur les figures 53 et 55, par un signal spécifique, acheminé par un conducteur rajouté dans chaque bus individuel.

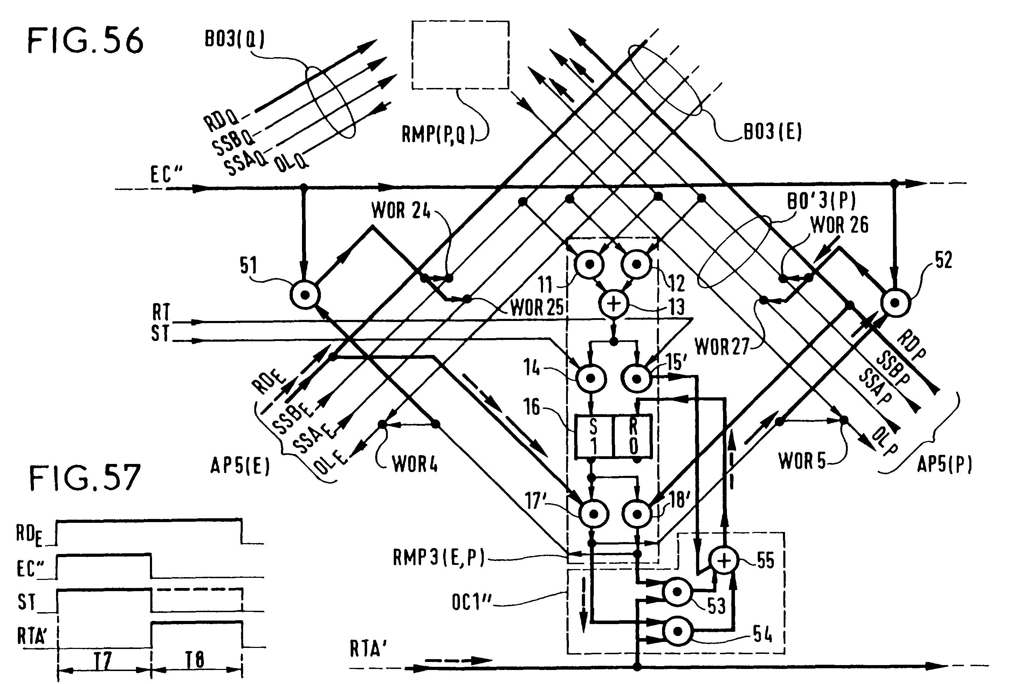

La figure 56 représente le schéma synoptique d'un troisième exemple de réalisation RMP3 d'un élément de mémoire de relation, pour le dispositif selon l'invention. Ce troisième exemple diffère du second exemple RMP2 représenté sur la figure 11 par le fait que :

- Le bus commun à tous les éléments de mémoire ne comporte plus de conducteur fournissant un signal RD pour commander une lecture éventuelle à tous les éléments de mémoire; par contre il comporte en plus conducteur transportant un signal de commande de lecture et propagation EC".
- Chaque bus orthogonal, correspondant à un objet P par exemple, comporte un conducteur supplémentaire $RD_P$ de commande de lecture à partir de l'objet P, en plus des conducteurs transmettant les signaux $SS_P$, $SS_P$ et $OL_P$ qui conservent les mêmes fonctions, sauf que le signal $SSA_P$ n'est pas utilisé pour la lecture.
- L'élément RMP3 est associé à des moyens logiques supplémentaires OC1" permettant de réaliser la première opération complexe de libération de toutes les relations existant entre un objet donné et tout objet quelconque (en particulier quand il y a deux objets adjacents à l'objet donné); et deux portes logiques ET,51 et 52, propres à la sixième opération complexe et permettant l'établissement automatique de liaisons entre les objets adjacents qui étaient reliés à cet objet donné.

Chaque élément de mémoire RMP3 comporte les mêmes portes 11, 12, 13, 14, et la même bascule 16 que dans le second exemple de réalisation RMP2, et ces composants ont les mêmes fonctions. Il comporte aussi des portes ET 15', 17' et 18' qui ont des fonctions légèrement différentes de celles des portes 15, 17 et 18. Les portes 17' et 18' ont chacune une première entrée reliée à la sortie 1 de la bascule 16 mais leur seconde entrée n'est plus reliée au bus commun pour recevoir un signal banalisé de commande de lecture, RD, ce dernier n'existant plus. Cette seconde entrée est reliée à un conducteur appartenant à un bus orthogonal et fournissant un signal de commande de lecture : $RD_E$ et $RD_P$ respectivement pour les objets E et P.

La figure 56 représente un élément RMP3(E, P) destiné à mémoriser une information indiquant l'existence ou l'inexistence d'une relation entre l'objet E et un objet P. La seconde entrée de la porte 17' est reliée à un conducteur appartenant au bus orthogonal BO3(E) correspondant à l'objet E, et fournissant le signal : $RD_E$. La seconde entrée de la porte 18' est reliée à un conducteur appartenant au bus orthogonal BO'3(P) correspondant à l'objet P, et fournissant un signal $RD_P$. Comme pour la porte 17, la sortie de la porte 17' est reliée à un conducteur appartenant au bus orthogonal BO'3(P) correspondant à l'objet P. Ce conducteur constitue un OU câblé WOR5, pour transmettre un signal de sortie de lecture $OL_P$. Comme pour la porte 18, la sortie de la porte 18' est reliée à un conducteur appartenant au bus orthogonal BO3(E) qui correspond à l'objet E, et constituant un OU câblé WOR4, pour transmettre un signal $OL_E$ de sortie de lecture.

Considérons les moyens logiques supplémentaires OC1" permettant de réaliser la première opération complexe. Ils comportent :

- une porte logique ET 53 ayant : une entrée reliée à la sortie de la porte ET 18', et une entrée reliée au conducteur appartenant au bus commun et fournissant un signal RTA' commandant la libération d'une pluralité de relations;

- une porte logique ET 54 ayant : une entrée reliée à la sortie de la porte ET17', et une entrée reliée au conducteur appartenant au bus commun et fournissant le signal RTA';
- et une porte logique OU 55 ayant : une entrée reliée à la sortie de la porte 53; une entrée reliée à la sortie de la porte 54; une entrée reliée à la sortie de la porte 15', cette sortie n'étant plus reliée directement à l'entrée R de la bascule 16; et une sortie reliée à l'entrée R de la bascule 16.

Considérons tout d'abord le fonctionnement de ces moyens supplémentaires OC1" permettant d'effectuer la première opération complexe consistant à libérer toutes les relations existant entre l'objet E et tout autre objet. Un signal $RD_E=1$ est appliqué au point d'accès AP5(E) correspondant à l'objet E, et un signal RTA'=1 est appliqué simultanément sur le bus commun à tous les éléments de mémoire. Dans tous les éléments de mémoire qui mémorisent l'existence d'une relation entre l'objet E et un autre objet, en particulier dans l'élément RMP3(E, P), la porte 17' est validée simultanément par le signal $RD_E=1$ et par l'information 1 fournie par la sortie de la bascule 16. La sortie de la porte 17' fournit donc une information 1 qui valide la porte 54. Cette dernière recevant le signal RTA'=1, fournit une information 1 à la porte OU 55. La sortie de la porte 55 commande une remise à zéro de la bascule 16. Elle mémorise désormais l'inexistence de la relation E-P.

Considérons maintenant les moyens supplémentaires, utilisés en plus des moyens OC1", pour réaliser la sixième opération complexe. Ces moyens comportent deux portes logiques ET,51 et 52.

La porte logique ET52 comporte :

- une entrée reliée à un conducteur appartenant au bus commun à tous les éléments de mémoire et fournissant un signal EC"=1 pour commander l'établissement d'une relation entre deux objets adjacents ayant une relation avec un objet donné à éliminer;
- une entrée reliée à la sortie de la porte 17';
- et une sortie qui est reliée à deux conducteurs appartenant au bus orthogonal BO'3(P) correspondant à l'objet P, et transmettant respectivement les signaux $SSA_P$ et $SSB_P$, ces deux conducteurs constituant respectivement deux OU câblés WOR27 et WOR26.

Pour ne pas court circuiter ces deux conducteurs, la liaison est réalisée par l'intermédiaire d'étages tampons qui ne sont pas représentés.

De même, la porte 51 comporte :

- une entrée reliée à un conducteur appartenant au bus commun transmettant le signal EC";
- une entrée reliée à la sortie de la porte 18';
- et une sortie reliée à deux conducteurs appartenant au bus orthogonal BO3(E) correspondant à l'objet E, et transmettant respectivement les signaux $SSA_E$ et $SSB_E$, ces deux conducteurs constituant respectivement deux OU câblés WOR25 et WOR24.

Pour ne pas court circuiter ces deux conducteurs, la liaison est réalisée par l'intermédiaire d'étages tampons qui ne sont pas représentés.

La figure 57 représente un chronogramme illustrant le fonctionnement de cette variante pour réaliser la sixième opération complexe, sur l'objet E. Pendant un premier intervalle de temps T7, une lecture avec propagation par les signaux SSA et SSB est réalisée dans tous les éléments de mémoire connectés au bus orthogonal correspondant à l'objet E, et une écriture est réalisée pour établir la relation P-Q entre les objets P et Q dans l'exemple représenté sur la figure 52. Puis, pendant un intervalle T8, on utilise la première opération complexe pour libérer les relations E-P et E-Q établies avec l'objet E. Les signaux essentiels correspondant à ces deux étapes sont représentés respectivement par des flèches en traits continus, et par des flèches en traits discontinus.

Pendant l'intervalle T7, le signal de commande de lecture $RD_E=1$ est appliqué au point d'accès AP5(E), et, simultanément, les signaux EC" = 1 et ST=1 sont appliqués sur le bus commun, alors que le signal RTA' est maintenu à zéro. Le signal $RD_E=1$ provoque une lecture dans tous les éléments de mémoire connectés au bus orthogonal BO3 (E) correspondant à l'objet E, notamment dans l'élément RMP3(E, P) dans lequel l'existence de la relation E-P est mémorisée. Le signal $OL_P= 1$ résultant de cette lecture valide la porte 52. Sa sortie produit donc des signaux $SSB_P=1$ et $SSA_P=1$ sur le bus orthogonal BO'3(A) correspondant à l'objet adjacent A.

Par conséquent, compte tenu de la présence active du signal ST, tout élément de mémoire qui est relié à ce bus orthogonal BO'3(P) et qui reçoit sur un autre bus orthogonal un signal SSB=1 ou SSA=1 mémorise alors l'existence d'une relation entre l'objet P et l'objet correspondant à cet autre bus orthogonal, à savoir l'autre objet adjacent Q. Dans cet exemple, le même processus peut se dérouler dans un autre élément de mémoire RMP3(E, Q), non représenté sur les figures, si un deuxième objet adjacent Q est relié à E. Il conduit à l'émission de signaux analogues $SSB_Q=1$ et $SSA_Q=1$ sur un bus orthogonal BO3(B) correspondant à l'autre objet adjacent Q. L'élément de mémoire RMB3(A, Q) est donc commandé pour mémoriser l'existence d'une nouvelle relation entre P et Q.

Pendant un second intervalle de temps T8, le signal $RD_E$=1 est maintenu, le signal EC" est ramené à zéro, le signal ST a un état indifférent, et le signal RTA'=1 est maintenant appliqué. Le signal RTA'=1 commande alors l'exécution d'une première opération complexe, décrite précédemment, et qui conduit à la libération des relations entre l'objet E et les autres objets adjacents, puisque le signal $RD_E$=1 est appliqué. Dans cet exemple, l'élément de mémoire RMP3(E, P) est donc remis à zéro, ainsi que l'élément de mémoire RMP3(E, Q), non représenté.

Dans le cas particulier d'un seul objet adjacent P (par exemple) relié à l'objet à éliminer E, le seul objet identifié, P, engendre des signaux $SSA_P$ et $SSB_P$ mais aucune nouvelle relation n'est établie avec P (ce qui est normal puisqu'aucun autre objet Q n'est relié à E). Ensuite, la relation E-P est normalement libérée, ce qui a pour effet d'éliminer l'objet E dans tous les cas.

La portée de l'invention n'est pas limitée aux exemples de réalisation décrits ci-dessus. Il est notamment possible de réaliser une lecture selon un procédé différent de celui, décrit ci-dessus, qui consiste à émettre un signal de sortie de lecture sur un seul bus qui est le bus correspondant à l'objet qui est déterminé par cette lecture. Un procédé différent consiste à émettre simultanément deux signaux de sortie de lecture, respectivement sur les deux bus correspondant aux deux objets qui sont liés par la relation considérée.

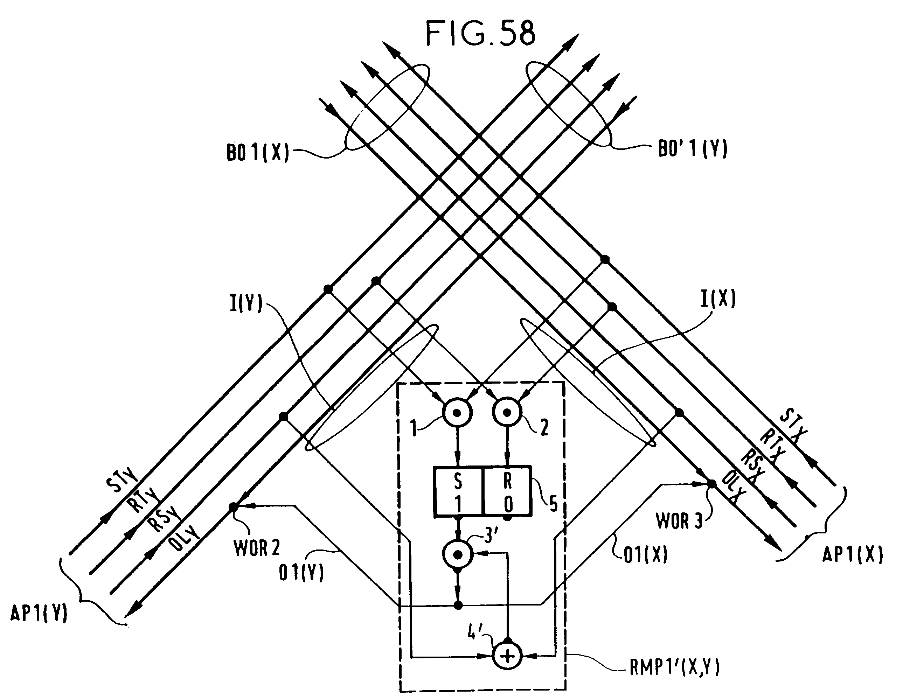

La figure 58 représente le schéma synoptique d'une variante RMP1' du premier exemple de réalisation, RMP1, pour émettre simultanément deux signaux de sortie de lecture. Cette variante comporte les mêmes éléments 1, 2, 5. Mais elle diffère par le fait :

- que les portes ET3 et 4 sont supprimées;
- qu'elle comporte une porte ET3' à deux entrées, première entrée étant reliée à la sortie 1 de la bascule 5 et une sortie étant reliée simultanément aux deux sorties O1(Y) et O1(X) de l'élément RMP1'(X, Y);
- et qu'elle comporte une porte OU 4' à deux entrées, une entrée étant reliée au conducteur de la branche BO'1(Y) fournissant le signal $RS_Y$, l'autre entrée étant reliée au conducteur du bus BO1(X) fournissant le signal $RS_X$, et sa sortie étant reliée à la seconde entrée de la porte ET3'.

La porte 3' transmet donc l'information contenue dans la bascule 5, vers les deux bus BO1(X) et BO1'(Y) simultanément, lorsqu'un signal de lecture $RS_X$ ou $RS_Y$ est appliqué sur l'un de ces bus.

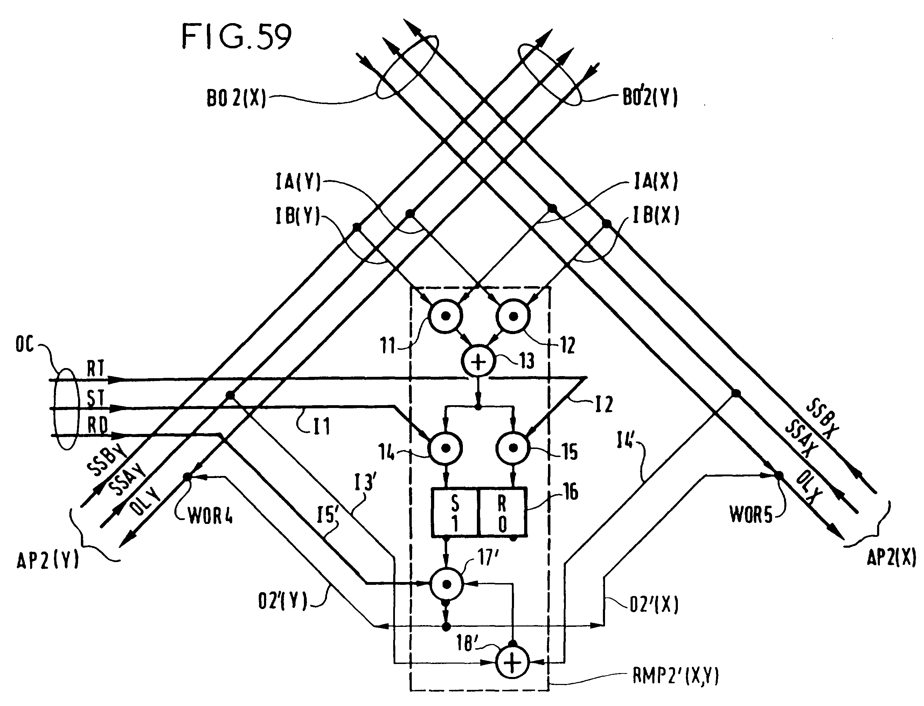

La figure 59 représente le schéma synoptique d'une variante RMP2' du second exemple de réalisation, RMP2, pour émettre simultanément deux signaux de sortie de lecture. Elle comporte les mêmes éléments 11 à 16. Mais elle diffère par le fait :

- que les portes ET17 et 18 sont supprimées;
- qu'elle comporte une porte ET17' à deux entrées, une première entrée étant reliée à la sortie 1 de la bascule 16, et une sortie étant reliée simultanément aux sorties O2(X) et O2(Y) de l'élément RMP2'(X,Y);
- et qu'elle comporte une porte OU18' à deux entrées, une entrée étant reliée au conducteur du bus BO2(X) qui fournit le signal $SSA_X$, une entrée étant reliée au conducteur du bus BO2(Y) qui fournit le signal $SSA_Y$, et une sortie qui est reliée à la seconde entrée de la porte ET17'.

La porte 17' transmet donc l'information contenue dans la basculde 16, vers les deux bus BO2(X), BO'2(Y) simultanément, lorsqu'un signal de lecture $SSA_X$ ou $SSA_Y$ est appliqué sur l'un de ces bus.

Les variantes du premier et du deuxième exemple de réalisation pour réaliser des opérations complexes, décrites précédemment, sont modifiables de manière analogue pour mettre en oeuvre ce procédé de lecture.

## Revendications

1. Dispositif de gestion de relations entre des objets identifiables individuellement dans un champ d'adressage fini, caractérisé en ce que, pour tout couple de deux objets distincts (X et Y), appelés premier objet et second objet, et pour chaque relation susceptible d'associer ces deux objets, il comporte un élément de mémoire dit de relation (RMP) pour mémoriser une information dite de relation indiquant soit l'existence, soit l'inexistence, de cette relation;

   en ce que ces éléments de mémoire de relation sont structurés en un réseau (SN;TN;TN') à au moins deux dimensions, à l'aide d'une pluralité de bus susceptibles d'acheminer des signaux de sélection d'objet et des signaux de commande d'opération, chaque élément étant situé au point d'intersection de deux bus (CC(X),LC(Y)) dits individuels, chaque bus individuel correspondant respectivement à un objet et étant susceptible de transporter au moins un signal dit de sélection de cet objet;

   en ce que chaque élément comporte un circuit logique (1 à 5,OC1;11 à 18,OC1') pouvant recevoir au moins un signal de sélection et pouvant recevoir au moins un signal de commande d'opération, pour écrire ou lire une information de relation dans cet élément;

et en ce qu'il comporte des moyens logiques (LM) couplés à des points d'accès des bus, pour leur fournir des signaux de commande d'opération, pour leur fournir des signaux de sélection d'objet, et pour recevoir d'eux des informations de relation lues dans les éléments de mémoire de relation.

**2.** Dispositif selon la revendication 1, pour gérer des relations non nécessairement symétriques entre deux objets distincts (X et Y) dans un ensemble d'objets comportant N objets,
caractérisé en ce que les bus individuels d'objet comportent :

- N bus de commande de colonne (CC(1),...,CC(N)), correspondant respectivement aux N objets, et commandant respectivement N colonnes d'éléments;
- N bus de commande de ligne (LC(1),...,LC(N)), correspondant aux N objets, et commandant respectivement N lignes d'éléments; chaque bus de commande de ligne ayant un point d'intersection avec chaque bus de commande de colonne;

et en ce que ce dispositif de gestion de relation comporte N.(N-1) éléments de mémoire (RMP(X,Y)) pour chaque relation susceptible de relier deux objets distincts (X et Y) parmi N; ces éléments étant situés en des points d'intersection des bus de commande de colonne et des bus de commande de ligne, à l'exception des points d'intersection situés sur une diagonale du réseau.

**3.** Dispositif selon la revendication 1, pour gérer des relations symétriques dans un ensemble d'objets comportant N d'objets,
caractérisé en ce qu'il comporte N bus individuels, correspondant respectivement aux N objets, chaque bus individuel comportant une première et une seconde branche (BO(K),BO'(K)) ayant une extrémité commune; et chaque bus individuel ayant un point d'intersection avec chacun des autres bus parmi ces N bus individuels;
en ce que le dispositif de gestion de relation comporte $\frac{N.(N-1)}{2}$ éléments de mémoire de relation (RMP(i,k)), pour chaque relation symétrique susceptible d'associer deux objets distincts dans cet ensemble de N objets;
en ce que les éléments de mémoire (RMP(i, k)) mémorisant les informations de relation entre l'objet de rang i=1 à K-1, et les objets de rang K, pour K choisi entre 1 et N, sont situés en des points d'intersection de la première branche (BO(K)) du bus individuel correspondant à cet objet de rang K, et de la seconde branche (BO'(i)) de chaque bus individuel correspondant respectivement aux objets de rang i= 1 à K-1;
et en ce que les éléments de mémoire RMP(j,K) mémorisant des informations de relation entre l'objet de rang K et les objets de rang j = K+1 à N sont situés en des points d'intersection de la seconde branche (BO'(K)) du bus individuel correspondant à cet objet de rang K, et de la première branche (BO(j)) de chaque bus individuel correspondant respectivement aux objets de rang j= K+1 à N.

**4.** Dispositif selon la revendication 1, caractérisé en ce que le circuit logique d'un élément situé à l'intersection d'un bus individuel correspondant à un premier objet (X) et d'un bus individuel correspondant à un second objet (Y), comporte des moyens (3,4;17,18) pour autoriser la lecture d'une information de relation mémorisée dans cet élément, s'il reçoit au moins un signal de sélection ($RS_X;SSA_X$) transporté par le bus individuel correspondant au premier objet, et pour autoriser la lecture cette information s'il reçoit au moins un signal de sélection ($RS_Y;SSA_Y$) transporté par le bus individuel correspondant au second objet; l'information lue étant restituée au moins sur le bus individuel (BO'1(Y);BO'2(Y)) correspondant au second objet (Y) dans le premier cas, et étant restituée au moins sur le bus individuel (BO1(X); BO2(X)) correspondant au premier objet (X) dans le second cas.

**5.** Dispositif selon la revendication 1, caractérisé en ce que pour permettre une opération d'écriture d'une information de relation dans un élément susceptible de mémoriser une information indiquant l'existence ou l'inexistence d'une relation entre entre un premier et un second objet, en sélectionnant explicitement ces deux objets, le circuit logique de cet élément comporte en outre des moyens (1,2;11,12) notamment pour autoriser l'écriture d'une information de relation entre ce premier objet (X) et ce second objet (Y), s'il reçoit simultanément au moins un signal de sélection ($ST_X;RT_X$) transporté par le bus individuel correspondant au premier objet (X), et au moins un signal de sélection (respectivement $ST_Y;RT_Y$) transporté par le bus individuel correspondant au second objet (Y).

**6.** Dispositif selon la revendication 1, caractérisé en ce que chaque bus individuel (BO2(K),BO'2(K)) correspondant à un objet (K) est susceptible de transporter au moins deux signaux de sélection permettant de sélectionner cet objet en affectant cet objet à au moins un groupe parmi deux groupes (A, B) d'objets considérés pour une opération d'écriture;

et en ce que le circuit logique de chaque élément de mémoire comporte des moyens (11 à 15) pour autoriser une opération d'écriture dans cet élément si, simultanément :

- au moins un signal de sélection relatif à un premier groupe ($SSA_X$ ou $SSB_X$) est présent sur le bus individuel (BO2(X)) correspondant au premier objet (X);
- et au moins un signal de sélection relatif à un second groupe ($SSB_Y$ ou $SSA_Y$) est présent sur le bus individuel (BO'2(Y)) correspondant au second objet (Y).

7. Dispositif selon la revendication 6, caractérisé en ce que les moyens logiques (LM) couplés aux points d'accès comportent :

-- des moyens (LA) pour fournir une première combinaison (STA=1 et STB=0; ou RTA=1 et RTB=0; SSA=1 et SSB=0) de valeurs des signaux de sélection, à chaque bus individuel correspondant à un objet qui doit être affecté exclusivement à un premier groupe (A) pour une opération d'écriture donnée;
-- des moyens (LB) pour fournir une seconde combinaison (STA=0 et STB=1;RTA=0 et RTB1;SSA=0 et SSB=1) de valeurs des signaux de sélection, à chaque bus individuel correspondant à un objet qui doit être affecté exclusivement à l'autre groupe (B), pour cette opération d'écriture;
-- des moyens (LAB) pour fournir une troisième combinaison (STA=1 et STB=1; ou RTA=1 et RTB=1;SSA=1 et SSB=1) de valeurs des signaux de sélection, à chaque bus individuel correspondant à un objet qui doit être affecté à la fois au premier (A) et au second groupe (B), pour cette opération d'écriture;

et en ce que, pour effectuer une opération d'écriture d'une information indiquant l'existence ou l'inexistence d'une relation susceptible d'associer chaque premier objet d'un premier sous-ensemble (S1) d'objets prédéterminés à chaque second objet d'un second sous-ensemble (S2) d'objets prédéterminés, sans effectuer la même opération entre les objets (A1,A2;1,7) appartenant exclusivement au premier sous-ensemble, ni effectuer la même opération entre les objets (B1, B2, B3; 2, 5, 8) appartenant exclusivement au second sous-ensemble, les moyens logiques (LM) fournissent :

- la première combinaison de valeurs aux bus individuels correspondant aux objets appartenant exclusivement au premier ou au second sous-ensemble, l'un de ces deux sous-ensembles étant choisi arbitrairement (S1 ou S2) pour affecter ces objets à un premier groupe (A) exclusivement;
- la seconde combinaison de valeurs aux bus individuels correspondant aux objets appartenant exclusivement à l'autre sous-ensemble (S2, respectivement S1), pour affecter ces objets à un second groupe (B) exclusivement;
- et la troisième combinaison de valeurs aux bus individuels correspondant aux objets éventuels appartenant aux deux sous-ensembles à la fois (S1 et S2) pour affecter ces objets à la fois au premier et au second groupe (A et B).

8. Dispositif selon la revendication 1, caractérisé en ce que chaque bus individuel (BO1(X),BO'1(Y);BO2"(X);BO'2" (Y)) est susceptible de transporter en outre au moins un signal de sélection d'objet et de commande d'opération (RTx/STx/RSx,RTy/STy/RSy;RTAx et et RTBx/STAx et STBx/RDx,RTAy et RTBy/STAy et STBy/RDy) et le circuit logique de chaque élément (RMP1(X,Y);RMP2"(X,Y)) comporte des moyens (1,2;61 à 69) pour autoriser une opération s'il reçoit :

- au moins un signal de sélection et de commande d'opération fourni par l'un des deux bus individuels à l'intersection desquels cet élément est situé, dans le cas d'une opération basée sur la sélection d'un seul objet, l'autre objet étant quelconque;
- ou au moins deux signaux de sélection d'objet et de commande d'opération, simultanément, fournis respectivement par les deux bus individuels à l'intersection desquels cet élément est situé, dans le cas d'une opération basée sur la sélection de deux objets.

9. Dispositif selon la revendication 8, caractérisé en ce que chaque bus individuel (BO1(X);BO2"(X)), correspondant à un objet (X), est susceptible de transporter :

- au moins un signal ($ST_X$;$STA_X$ ou $STB_X$) de sélection d'un objet et de commande d'écriture d'une information (1) indiquant l'existence d'une relation entre cet objet et un autre objet;
- au moins un signal ($RT_X$;$RTA_X$ ou $RTB_X$) de sélection d'un objet et de commande d'écriture d'une information (0) indiquant l'inexistence d'une relation entre cet objet et un autre objet;

- au moins un signal ($RS_X$;$RD_X$) de sélection d'un objet et de commande de lecture d'une information indiquant l'existence ou l'inexistence d'une relation entre cet objet et un autre objet;
- et au moins un signal de sortie de lecture ($OL_X$;$OLA_X$,$OLB_X$), à transporter jusqu'à un point d'accès à ce bus.

10. Dispositif selon la revendication 1, caractérisé en ce qu'il comporte un bus (OC) dit de commande d'opération, commun à tous les éléments (RMP1"(X,Y),RMP2(X,Y)) et susceptible de transporter au moins un signal banalisé de commande d'opération (RT,ST,RD);
et en ce que le circuit logique de chaque élément (RMP1"(X, Y); RMP2(X, Y)) comporte en outre des moyens (1" à 4";14,15,17,18) pour autoriser une opération s'il reçoit simultanément au moins un signal (RT;ST;RD) de commande d'opération transporté par le bus commun, et au moins un signal de sélection ($SS_X$;$SS_Y$;$SSA_X$;$SSA_Y$) transporté par au moins un bus individuel.

11. Dispositif selon la revendication 10, caractérisé en ce que :

- chaque bus individuel (BO1"(X),BO2(X)),correspondant à un objet (X), est susceptible de transporter :

-- au moins un signal ($SS_X$;$SSA_X$,$SSB_X$) de sélection d'objet, pour sélectionner cet objet (X);
-- et au moins un signal ($OL_X$;$OLA_X$,$OLB_X$) de sortie de lecture, à transporter jusqu'à un point d'accès de ce bus;

- et en ce que le bus (OC) commun à tous les éléments (RMP1"(X,Y),RMP2(X,Y)) est susceptible de transporter au moins :

-- un signal commun (ST) de commande d'une opération d'écriture d'une information (1) indiquant l'existence d'une relation entre cet objet (X) et un autre objet;
-- un signal commun (RT) de commande d'une opération d'écriture d'une information (0) indiquant l'inexistence d'une relation entre cet objet (X) et un autre objet;
-- et un signal commun (RD) de commande d'une opération de lecture d'une information indiquant l'existence ou l'inexistence d'une relation entre cet objet (X) et un autre objet.

12. Dispositif selon la revendication 1, permettant une première opération complexe consistant à écrire une même information d'existence ou d'inexistence de relation entre un objet donné (X) et tous les autres objets simultanément, caractérisé :
en ce que lesdits bus (B01(X);B02(X);RTA) sont susceptibles d'acheminer vers tous les éléments (RMP1; RMP2) susceptibles de mémoriser une information de relation entre un objet donné (X) et tous les autres objets, une combinaison de signaux ($RS_X$=1 et $RT_X$=1;$SSA_X$=1 et $SSA_Y$=1 et $RT_A$=1) propre à l'objet donné et propre à cette première opération complexe, pour sélectionner cet objet donné et pour commander la réalisation de cette première opération complexe;
en ce que les moyens logiques (LM) couplés aux points d'accès des bus comportent des moyens pour émettre cette combinaison de signaux sur ces bus;
et en ce que le circuit logique de chaque élément (RMP1(X,Y) ; RMP2(X,Y)) comporte des moyens (OC1; OC'1) pour autoriser l'écriture d'une information de relation dans cet élément, s'il reçoit cette combinaison de signaux.

13. Dispositif selon la revendication 1, permettant de commander l'exécution simultané de plusieurs opérations différentes appartenant respectivement à des sous-ensembles disjoints d'opérations possibles, caractérisé en ce que :

- chaque bus individuel (BO(N),BO'(N); BO(P),BO'(P);BO(Q),BO'(Q)) est susceptible de transporter plusieurs signaux de sélection distincts (IST1(P),IST2(N), IST1(Q)) fournis par les moyens logiques (LM) couplés aux points d'accès de ces bus;
- et le circuit logique de chaque élément (RMP(P,N));RMP(P,Q);RMP(N,Q)) comporte des moyens pour autoriser l'exécution de toutes les opérations appartenant à un sous-ensemble lorsque ce circuit reçoit :

-- soit un signal de sélection (IST1;IST2) transporté par l'un des deux bus individuels à l'intersection desquels cet élément est situé, ce signal de sélection étant affecté en propre à ce sous-ensemble d'opérations, dans le cas d'un sous-ensemble d'opérations basées sur la sélection d'un seul objet;
-- soit par une combinaison de deux signaux différents de sélection, (IST1 et IST2) transportés respectivement par les deux bus individuels à l'intersection desquels cet élément est situé, cette combinaison de

37

deux signaux de sélection étant affectée en propre à ce sous-ensemble d'opérations, dans le cas d'un sous-ensemble d'opérations basées sur la sélection simultanée de deux objets.

14. Dispositif selon la revendication 13, permettant l'exécution simultanée d'une première et d'une seconde opération d'écriture différentes, pour des relations entre deux objets sélectionnés, chacune de ces opérations d'écriture appartenant à un sous-ensemble distinct d'opérations possibles, caractérisé en ce que :

- chaque bus individuel (BO(P),BO'(P);BO(N),BO'(N); BO(Q), BO'(Q)) est susceptible de transporter au moins deux types de signaux de sélection distincts (IST1,IST2);
- et le circuit logique de chaque élément comporte des moyens pour autoriser :

-- la première opération d'écriture lorsqu'il reçoit une première combinaison (IST1(P).IST1(Q)=1) constituée de deux signaux de sélection fournis respectivement par les deux bus individuels à l'intersection desquels cet élément (RMP(P,Q)) est situé ;
-- la seconde opération d'écriture lorsqu'il reçoit une seconde combinaison (ITS1(P).ITS2(N)+ IST2(P).IST1 (N)=1;IST1(Q).IST2(N)+IST2(Q).IST1(N)=1) constituée fournis respectivement par les deux bus individuels à l'intersection desquels cet élément (RMP(P,N); RMP(N,Q)) est situé.

15. Dispositif selon la revendication 12, caractérisé en ce que, pour ladite première opération complexe, chaque bus individuel (B01(X)) correspondant à un objet donné (X) est susceptible de transporter ladite combinaison de signaux ($RS_X$= 1 et $RT_X$=1) propre à l'objet donné (X) et propre à la première opération complexe;
en ce que les moyens logiques (LM) couplés aux points d'accès des bus individuels comportent des moyens pour fournir au bus individuel (BO1(X)) correspondant à chaque objet donné (X) ladite combinaison de signaux;
et en ce que le circuit logique (1 à 5) de chaque élément de mémoire (RMP1(X,Y)) comporte en outre des moyens (OC1) autorisant l'écriture d'une information (0) indiquant l'inexistence d'une relation, dans cet élément si ladite combinaison de signaux ($RT_Y$=1 et $RS_Y$=1, ou $RT_X$=1 et $RS_X$=1) est transportée par l'un des deux bus individuels (BO1(X);BO'1(Y)) à l'intersection desquels cet élément est situé.

16. Dispositif selon la revendication 12, caractérisé en ce que ladite combinaison de signaux propre à un objet donné et propre à la première opération complexe est constituée d'un signal ($SSA_X$=1;$SS1_X$=1) de sélection de l'objet donné, acheminé par le bus individuel (B02(X);BO'3(P)) correspondant à cet objet donné, et par un signal de commande de libération (RTA=1;RTA'=1) transporté par un bus (OC) commun à tous les éléments de mémoire;
en ce que les moyens logiques (LM) couplés aux points d'accès des bus comportent des moyens pour appliquer simultanément ce signal de commande de libération (RTA=1;RTA'=1) sur le bus commun, et un signal de sélection ($SSA_X$=1;$RD_P$=1) sur le bus individuel correspondant à chaque objet donné;
en ce que le circuit logique (11 à 18; 11 à 18') de chaque élément de mémoire de relation (RMP2(X,Y); RMP3 (E,P)) comporte en outre des moyens (OC1';OC1") autorisant l'écriture d'une information (0) indiquant l'inexistence d'une relation, dans cet élément de mémoire, si ce signal de commande de libération (RTA=1;RTA'=1) est appliqué sur ce bus commun, et si, simultanément, un signal de sélection approprié ($SSA_X$=1;$RD_P$=1) est appliqué sur l'un des deux bus individuels (BO2(X), BO'2(Y); BO3(X), BO'3(Y)) à l'intersection desquels cet élément de mémoire est situé.

17. Dispositif selon la revendication 13, caractérisé en ce que, pour permettre une deuxième opération complexe consistant en deux lectures simultanées (La,Lb) de toutes les informations de relation indiquant l'existence ou l'inexistence de relations établies entre au moins un objet (L) et tout autre objet pour une première lecture (La), et entre au moins un autre objet (M) et tout autre objet pour une lecture (Lb), les objets identifiés étant répartis en deux groupes distincts (A et B) appelés groupes de sortie relatifs aux deux lectures (La,Lb) respectivement,

- le bus individuel (BO1(X),BO'1(X);BO2(X),BO'2(X)) correspondant à chaque objet (X) est susceptible de transmettre un premier signal de sélection ($RSA_X$;$SSA_X$), et de transmettre un second signal de sélection ($RSB_X$; $SSB_X$), ces deux signaux étant distincts et propres à cette deuxième opération complexe; et est susceptible de transmettre un premier signal de sortie de lecture ($OLA_X$), et de transmettre un second signal de sortie de lecture ($0LB_X$), ces deux signaux de sortie de lecture étant propres à cette deuxième opération complexe;
- les moyens logiques (LM) comportent des moyens pour fournir ce premier signal de sélection, et des moyens pour fournir ce second signal de sélection, aux bus individuels; ce premier et ce second signal étant fournis respectivement aux bus individuels correspondant respectivement à chaque objet (L) à partir duquel une première lecture (La) est à effectuer, et à chaque objet (M) à partir duquel une seconde lecture (Lb) est à effectuer; et comportent des moyens pour recevoir les deux signaux de sortie de lecture susceptibles d'être transportés par chaque bus individuel;

- et le circuit logique de chaque élément de mémoire (RMP1(X,Y); RMP2(X,Y)) relatif à un premier objet (X) et à un second objet (Y), comporte en outre des moyens (OC2;C'2) pour autoriser quatre lectures, simultanées ou non, de cet élément :

  -- une première lecture (La) à partir du premier objet (X) si le premier signal de sélection ($RSA_X;SSA_X$) est transporté par le bus individuel correspondant au premier objet (X);
  -- une deuxième lecture (Lb) à partir du premier objet (X) si le second signal de sélection ($RSB_X;SSB_X$) est transporté par le bus individuel correspondant au premier objet (X);
  -- une première lecture (La) à partir du second objet (Y) si le premier signal de sélection ($RSA_Y;SSA_Y$) est transporté par le bus individuel correspondant au second objet (Y);
  -- une second lecture (Lb) à partir du second objet (Y) si le second signal de sélection ($RSB_Y;SSB_Y$) est transporté par le bus individuel correspondant au second objet (Y).

**18.** Dispositif selon la revendication 17, caractérisé en ce que le premier et le second signal de sélection ($RSA_X,RSB_X$) constituent aussi chacun un signal de commande d'opération de lecture;

et en ce que le circuit logique de chaque élément de mémoire (RMP2(X,Y)) comporte des moyens (OC2) pour effectuer les quatres lectures possibles mentionnées en revendication 17, selon les deux signaux de sélection ($RSA_X,RSB_X$) de sélection et de commande d'opération de lecture qui sont reçus par ce circuit.

**19.** Dispositif selon la revendication 17, caractérisé en ce que :

- un bus (OC) commun à tous les éléments est susceptible de transporter un signal banalisé de commande de lecture (RD) commun pour la première et la seconde lecture (La,Lb);
- les moyens logiques (LM) comportent des moyens pour fournir en outre ce signal banalisé de commande de lecture (RD), au bus commun (OC);
- le circuit logique de chaque élément de mémoire (RMP2(X,Y)) comporte en outre des moyens (OC'2) pour effectuer les quatre lectures mentionnées en revendication 17, seulement s'ils reçoivent en outre ce signal banalisé de commande de lecture (RD).

**20.** Dispositif selon la revendication 4, caractérisé en ce que, pour permettre une troisième opération complexe consistant en une lecture par propagation à partir d'un objet donné (R) afin d'identifier tous les objets ayant une relation directe ou indirecte avec cet objet,

- il comporte un bus commun à tous les points d'accès (AP1(K);AP2(K)) des bus de sélection, et susceptible de transporter un signal de commande d'opération (LP=1;LP'=1) propre à cette troisième opération complexe;
- les moyens logiques (LM) couplés aux points d'accès des bus individuels comportent, pour chaque bus individuel (BO1(K),BO'1(K);BO2(K),BO'2(K)) correspondant à un objet (K), des moyens logiques (36, 38) fournissant à ce bus au moins un signal de sélection ($RS_K=1;SSA_K=1$), si un signal de sortie de lecture ($OL_K=1$) est présent sur ce bus et si le signal de commande d'opération (LP=1;LP'=1) propre à la troisième opération complexe est présent sur le bus commun à tous les points d'accès.

**21.** Dispositif selon la revendication 20, caractérisé en ce qu'un signal de sélection ($RS_K=1$) fourni par les moyens logiques (36), couplés aux points d'accès des bus de sélection, constitue aussi un signal de commande d'opération de lecture pour les éléments (RMP1(K, P)).

**22.** Dispositif selon la revendication 20, caractérisé en ce que :

- il comporte en outre un bus (OC) commun à tous les éléments (RMP1"(X,Y);RMP2(X,Y)) et susceptible de transporter au moins un signal banalisé de commande d'opération (RD = 1);
- le circuit logique de chaque élément (RMP1"(X,Y); RMP2(X,Y)) comporte en outre des moyents (3",4";17,18) pour autoriser une lecture seulement s'ils reçoivent un signal banalisé de commande de lecture (RD=1);
- et les moyens logiques (LM) couplés aux points d'accès des bus individuels fournissent en outre un signal banalisé (RD=1) de commande de lecture, à ce bus (OC) commun à tous les éléments, simultanément avec le signal de sélection ($SSA_K=1$).

**23.** Dispositif selon la revendication 20 et l'une des revendications 15 ou 16, caractérisé en ce que, pour permettre une quatrième opération complexe consistant à identifier et libérer, par propagation, des relations directes ou indirectes entre un objet donné (R) et tout autre objet, les moyens logiques (LM) fournissent :

- un signal de sélection ($RS_R$=1;$SSA_R$=1) au bus correspondant à l'objet donné (R);
- un signal de commande d'opération (LP=1;LP'=1) propre à la troisième opération complexe, au bus commun à tous les points d'accès des bus de sélection, afin d'identifier tous les objets ayant une relation directe ou indirecte avec l'objet donné (R);

  et en ce que, ensuite, les moyens logiques (LM) :

- reçoivent des signaux de sortie de lecture ($OL_K$=1) identifiant chaque objet (K) ayant une relation avec l'objet donné (R);
- puis fournissent un signal de sélection ($RS_K$=1 et $RT_K$=1;$SSA_K$=1) au bus individuel de chaque objet (K) ainsi identifié;
- et fournissent, au moins aux éléments mémorisant l'existence d'une relation entre l'objet donné (R) et les objets (K) ainsi identifiés, une combinaison de signaux de sélection et de commande de libération ($RS_K$=1 et $RT_K$=1; RTA=1) afin d'inscrire dans chacun de ces éléments une information (0) indiquant l'inexistence d'une relation.

**24.** Dispositif selon la revendication 23, caractérisé en ce que les moyens logiques (LM) comportent :

- des moyens (36) pour fournir au bus individuel (BO1(K), BO'1(K)) de chaque objet identifié un signal de sélection ($RS_K$=1) pendant un premier et un second intervalle de temps (T0,T1); ce signal de sélection constituant aussi un signal de commande de lecture;
- et des moyens (36,40) pour fournir ensuite au bus individuel (BO1(K), BO'1(K)) de chaque objet identifié un signal de commande ($RT_K$=1) pendant le second intervalle de temps seulement (T1); la combinaison de ce signal de sélection ($RS_K$=1) et de ce signal de commande ($RT_K$=1), pendant le second intervalle de temps (T1), commandant l'inscription d'une information (0) indiquant l'inexistence d'une relation.

**25.** Dispositif selon la revendication 23, caractérisé en ce que le bus (0C) commun à tous éléments, est susceptible de transporter un signal de commande banalisé (RTA=1) propre à la première opération complexe; et en ce que les moyens logiques (LM) comportent :

- des moyens (38) pour fournir au bus individuel (BO2(K),BO'2(K)) de chaque objet identifié un signal de sélection ($SSA_K$=1) pendant un premier et un second intervalle de temps (T2,T3);
- des moyens pour fournir au bus (OC) commun à tous les éléments un signal de commande de lecture (RD=1) pendant le premier et le second intervalle de temps (T2,T3);
- des moyens pour fournir au bus (OC) commun à tous les éléments un signal banalisé (RTA=1), pendant le second intervalle de temps (T3) seulement, afin d'inscrire une information (0) indiquant l'inexistence d'une relation.

**26.** Dispositif selon la revendication 14, pour réaliser une cinquième opération complexe consistant à libérer une relation éventuelle (P-Q) entre un premier objet (P) et un éventuel deuxième objet (Q), et établir simultanément une nouvelle relation (P-N) et une nouvelle relation (N-Q) entre un troisième objet (N) et ces deux objets (P, N) respectivement,
  caractérisé en ce que les moyens logiques (LM) couplés aux points d'accès des bus comportent des moyens pour fournir simultanément :

- un signal de sélection d'un premier type (RT1,ST1,SS1) aux bus individuels du premier et du deuxième objet (P, Q),
- et un signal de sélection d'un second type (RT2,ST2, SS2) au bus individuel du troisième objet (N);

  et en ce que le circuit logique de chaque élément (RMP1; RMP1"; RMP2; RMP2") comporte des moyens (1 à 4;39 à 41;1" à 41";72 à 74;11 à 18,42,43;61 à 69) pour exécuter simultanément :

- une première opération d'écriture consistant à écrire une information (0) indiquant l'inexistence d'une relation, lorsqu'il reçoit une première combinaison de deux signaux ($RT1_P.RT1_Q$=1;$SS1_P.SS1_Q$=1) constituée de deux signaux du premier type (RT1;SS1), sur les deux bus individuels à l'intersection desquels il est situé;
- et une seconde opération d'écriture consistant à écrire une information (1) indiquant l'existence d'une relation, lorsqu'il reçoit une seconde combinaison de signaux de sélection ($ST1_N.ST2_P+ST2_N.ST1_P=1;SS1_N.SS2_P+$ $S2_N.SS1_P=1$, ou $ST1_N.ST2_Q+ST2_N.ST1_Q=1;SS1_N.SS2_Q+SS2_N.SS1_Q=1$) constituée d'un signal du premier type (ST1;SS1) et d'un signal du second type (ST2;SS2), respectivement sur les deux bus de sélection à l'intersection desquels il est situé.

27. Dispositif selon la revendication 12, permettant une sixième opération complexe consistant à libérer des relations existant entre un objet (E) donné, appelé objet à éliminer, et au plus deux autres objets dits adjacents (P,Q), dans une chaîne linéaire de relations entre objets, et établir une relation directement entre ces deux objets (P,Q),
   caractérisé en ce que, pour commander consécutivement, pendant une premier intervalle de temps (T5;T7),

   -- une première opération consistant à lire dans les éléments (RMP(E,P),RMP(E,Q)) mémorisant des informations indiquant l'existence éventuelle de relations entre l'objet à éliminer (E) et tout autre objet,
   -- puis une seconde opération consistant à inscrire une information indiquant l'existence d'une relation, dans un élément de mémoire (RMP(P,Q)) relatif à deux objets adjacents (P,Q) éventuellement identifiés par la première opération,

   - les moyens logiques (LM) couplés aux points d'accès des bus comportent des moyens fournissant pour la première opération, un premier signal de sélection et de commande d'opération ($RS_E=1;RD_E=1$), appliqué sur le bus individuel de l'objet à éliminer (E), pour commander une lecture dans les éléments mémorisant les relations entre l'objet à éliminer (E) et tous les autres objets;
   - ledit dispositif de gestion comporte en outre des moyens logiques (44,45;51,52;47 à 49) pour propager un autre signal de sélection relatif à la seconde opération, couplés aux bus individuels et fournissant au bus individuel d'un objet (P,Q) un second signal de sélection et de commande d'opération ($ST_P;SSA_P$ et $SSB_P$) si ce bus transporte un signal de sortie lecture ($OL_P$), pour commander l'écriture d'une information (1) indiquant l'existence d'une relation entre deux objets adjacents (P,Q) identifiés par la première opération;

   et en ce que, pour libérer, dans un deuxième intervalle de temps (T6;T8), les relations existant entre l'objet à éliminer (E) et les objets adjacents (P,Q), il comporte des moyens (OC1;OC'1) selon la revendication 12, permettant de réaliser la première opération complexe, de libération de toute relation avec un objet.

28. Dispositif selon la revendication 27, caractérisé :
   en ce qu'il comporte un bus commun à tous les éléments de mémoire, et transmettant un signal dit de commande de propagation (EC=1) propre à cette sixième opération complexe, pendant un premier intervalle de temps (T5);
   en ce que le premier signal de sélection et de commande d'opération est constitué par un signal ($RS_E=1$) de commande de lecture à partir de l'objet à éliminer (E), appliqué pendant le premier intervalle de temps (T5);
   en ce que le second signal de sélection et de commande d'opération est constitué par le signal de commande de libération($RS_E=1$ et $RT_E=1$) propre à la première opération complexe, appliqué pendant le second intervalle de temps (T6), pour libérer les relations entre l'objet à éliminer (E) et tous les autres objets;
   en ce que le circuit logique (1 à 5;OC1) de chaque élément de mémoire de relation (RMP1(E,P)) comporte en outre :

   - des moyens logiques (45) pour produire un signal ($ST_P=1$; $ST_Q=1$) de commande d'écriture d'une information (1) indiquant l'existence d'une relation (P-Q), sur chaque bus individuel (BO1(P);BO1(Q)) correspondant à un objet adjacent (P;Q) auquel cet élément est connecté, si :

      -- le signal commun de commande de propagation (EC=1) propre à cette sixième opération est présent sur ce bus commun de commande;
      -- et, simultanément, un signal de commande de lecture ($RS_E=1$) est présent sur le bus individuel (BO'1(E)) correspondant à l'objet à éliminer (E);
      -- et l'information de relation lue dans cet élément indique l'existence d'une relation;

   - des moyens (1) pour écrire une information (1) indiquant l'existence d'une relation (P-Q) lorsque ce circuit logique reçoit simultanément deux signaux ($ST_P=1$ et $ST_Q=1$) de commande d'écriture d'une information (1) indiquant l'existence d'une relation, respectivement sur les deux bus individuels auxquels il est relié;
   - des moyens (OC1) pour écrire une information (0) indiquant l'inexistence d'une relation (P-E; E-Q) lorsqu'il reçoit le signal de sélection et de commande d'opération ($RS_E=1$ et $RT_E=1$) propre à la première opération complexe, pour permettre de libérer une relation avec l'objet à éliminer (E).

**29.** Dispositif selon la revendication 27, caractérisé en ce qu'il comporte un bus commun à tous les points d'accès et susceptible de transmettre un signal commun dit de commande de propagation (EC'=1) propre à cette sixième opération complexe;

en ce que les moyens logiques (LM) couplés aux points d'accès des bus de commande comportent :

- des moyens pour, pendant un premier intervalle de temps (T5), émettre le signal commun de commande (EC'=1) propre à cette sixième opération complexe, et émettre un signal ($RS_E$=1) de sélection et de commande de lecture sur le bus individuel correspondant à l'objet à éliminer (E);
- pour chaque bus individuel correspondant à un objet, des moyens (48; 49) pour fournir un signal ($ST_P$=1; $ST_Q$=1) de sélection et de commande d'écriture d'une information (1) indiquant l'existence d'une relation, si ce signal (EC'=1) propre à la sixième opération complexe est actif et si, simultanément, un signal de sortie de lecture ($OL_P$=1; $OL_Q$=1) indiquant l'existence d'une relation entre l'objet à éliminer (E) et au moins un objet adjacent (P,Q) est actif sur ce bus individuel;
- des moyens pour, pendant un second intervalle de temps (T6), ne plus émettre le signal (EC'=1) propre à la sixième opération complexe, mais émettre le signal de libération ($RS_E$=1; $RT_E$=1) propre à la première opération complexe et commandant l'écriture d'une information (0) indiquant l'inexistence d'une relation, sur le bus correspondant à l'objet à éliminer (E), pour libérer toutes les relations entre l'objet à éliminer (E) et les autres objets (P, Q);

et en ce que le circuit logique (1 à 5; 0C1) de chaque élément de mémoire de relation RMP1(E,P) comporte en outre :

- des moyens (1) pour écrire une information (1) indiquant l'existence d'une relation (P-Q) lorsqu'il reçoit simultanément deux signaux ($ST_P$=1 et $ST_Q$=1) individuels de sélection et de commande d'écriture d'une information (1) indiquant l'existence d'une relation, respectivement sur les deux bus individuels à l'intersection desquels il est relié;
- des moyens (OC1) pour écrire une information (0) indiquant l'inexistence d'une relation (P-E; E-Q) lorsqu'il reçoit le signal de commande de libération ($RS_E=_1$ et $RT_E$=1) propre à la première opération complexe, pour libérer une relation avec l'objet à éliminer (E).

**30.** Dispositif selon la revendication 27, caractérisé en ce qu'il comporte un bus commun à tous les éléments de mémoire, et susceptible de transmettre un signal de commande dit d'identification et de propagation (EC''=1), propre à cette sixième opération complexe, et un signal de commande dit de libération (RTA'=1);

en ce que le circuit logique (11 à 18',OC''1) de chaque élément de mémoire de relation (RMP3(E,P)) comporte :

-- des moyens logiques (51, 52) pour fournir un signal ($SSB_E$=$SSA_E$=1; $SSB_P$=$SSA_P$=1) dit de propagation de commande d'écriture d'une information (1) indiquant l'existence d'une relation, sur l'un (BO'3(P)) des deux bus individuels à l'intersection desquels cet élément est situé, si un signal de sortie de lecture ($OL_P$=1) indiquant l'existence d'une relation est fourni à ce bus par cet élément, et si simultanément le signal de commande d'identification et de propagation (EC''=1) propre à cette sixième opération complexe est appliqué;
-- des moyens (OC1'') écrivant une information (0) indiquant l'inexistence d'une relation, dans cet élément de mémoire, si le signal de commande de libération (RTA'=1) est appliqué sur le bus commun, et si simultanément, un signal de sélection et de commande de lecture ($RD_E$=1) est appliqué sur l'un des bus individuels à l'intersection desquels est situé cet élément;

et en ce que les moyens logiques (LM) couplés aux points d'accès des bus de commande comportent des moyens pour :

- activer pendant un premier intervalle de temps (T7), simultanément :

-- le signal de commande d'identification et de propagation (EC''=1) propre à cette sixième opération complexe, sur le bus commun;
-- le signal de sélection et de commande de lecture ($RD_E$=1) sur le bus individuel correspondant à un objet à éliminer (E);
-- le signal de commande d'écriture (ST=1), sur le bus commun, pour écrire une information (1) indiquant l'existence d'une relation entre deux objets (P, Q) adjacents à l'objet à éliminer;

- activer pendant un second intervalle de temps (T8), simultanément :

-- le signal de sélection et de commande de lecture ($RD_E=1$) sur le bus individuel correspondant à l'objet à éliminer (E);
-- et le signal de commande de libération (RTA'=1) sur le bus commun, pour écrire une information (0) indiquant l'inexistence de toute relation entre l'objet à éliminer (E) et tous les autres objets.

**31.** Dispositif selon la revendication 4, caractérisé en ce que lorsque le circuit logique (1,2,3', 4',5;11 à 16,17',18') d'un élément de mémoire (RMP1', RMP2'), réalise une opération de lecture, il restitue une information de relation simultanément sur le bus individuel (BO1(X); BO2(X)) correspondant au premier objet, et sur le bus individuel (BO'1 (Y); BO'2(Y)) correspondant au second objet, s'il reçoit un signal de sélection par au moins un de ces deux bus individuels, ainsi qu'un signal de commande de lecture.

**32.** Dispositif selon la revendication 1 caractérisé en ce que, pour restituer à un point d'accès (AP(X)) relatif à un objet (X) au moins un signal de sortie de lecture indiquant l'existence ou l'inexistence d'au moins une relation avec cet objet (X), chaque élément de mémoire (RMP1(X,Y), RMP2(X,Y)) comporte :

- une sortie (01(X);02(X)) relative au premier objet (X) et qui est reliée à au moins un conducteur du bus (BO1 (X); BO2(X)) correspondant au premier objet (X); toutes les sorties relatives au premier objet (X) étant reliées ensemble et constituant un OU câblé (WOR3;WOR5) transmettant au moins un signal de sortie de lecture vers le point d'accès (AP(X)) relatif à ce premier objet;
- une sortie (O1(Y); 02(Y)) relative au second objet (Y) et qui est reliée à au moins un conducteur du bus (BO'1 (Y); BO'2(Y)) correspond au second objet (Y); toutes les sorties relatives au second objet étant reliées ensemble et constituant un OU câblé (WOR2; WOR4) transmettant au moins un signal de sortie de lecture vers le point d'accès (AP(Y)) relatif au second objet.

**33.** Dispositif selon la revendication 1, caractérisé en ce que pour limiter une lecture aux relations concernant les objets (X5,X6,X7) appartenant à un sous-ensemble connu (S1), les moyens logiques (LM) comportent en outre des moyens logiques de filtrage (L3,LB3) couplés aux sorties (OL) d'élément de mémoire relatives à ces objets et ne prenant en compte que le signaux fournis par ces sorties, lors d'une opération de lecture.

**Patentansprüche**

**1.** Vorrichtung zur Verwaltung von Beziehungen zwischen einzeln identifizierbaren Objekten in einem endlichen Adressfeld, dadurch gekennzeichnet, dass sie für jedes Paar von zwei verschiedenen Objekten (X und Y), als erstes Objekt und als zweites Objekt bezeichnet, und für jede Beziehung, die diese beiden Objekte verknüpfen könnte, ein Speicherelement, als Beziehungsspeicherelement (RMP) bezeichnet, umfasst, um eine sogenannte Beziehungsinformation zu speichern, die das Bestehen oder Nichtbestehen dieser Beziehung angibt;

und dass diese Beziehungsepeicherelemente als ein Gitter (SN; TN; TN') in wenigstens zwei Dimensionen mit Hilfe einer Mehrzahl von Bussen strukturiert sind, die in der Lage sind, Objektauswahlsignale und Operationsbefehlssignale zu befördern, wobei jedes Element am Schnittpunkt zweier sogenannter individueller Busse (CC(X), LC(Y)) liegt, wobei jeder individuelle Bus jeweils einem Objekt entspricht und in der Lage ist, wenigstens ein sogenanntes Auswahlsignal dieses Objekts zu transportieren;

dass jedes Element eine Logikschaltung (1 bis 5 OC1; 11 bis 18, OC1') umfasst, die wenigstens ein Auswahlsignal empfangen kann und wenigstens ein Operationsbefehlssignal empfangen kann, um eine Beziehungsinformation in diesem Element zu lesen oder zu schreiben;

und dass sie Logikmittel (LM) umfasst, die an Zugangspunkte der Busse gekoppelt sind, um ihnen Operationsbefehlssignale zu liefern, um ihnen Objektauswahlsignale zu liefern, und um von ihnen in den Beziehungspeicherelementen gelesene Beziehungsinformationen zu empfangen.

**2.** Vorrichtung nach Anspruch 1, zum Verwalten nicht notwendigerweise symmetrischer Beziehungen zwischen zwei verschiedenen Objekten (X und Y) in einer Menge von Objekten, die N Objekte umfasst, dadurch gekennzeichnet, dass die individuellen Objektbusse umfassen:

- N Spaltensteuerbusse (CC(1),..., CC(N)), die jeweils den N Objekten entsprechen und jeweils N Spalten von Elementen steuern;
- N Zeilensteuerbusse (LC(1), ..., LC(N)), die den N Objekten entsprechen und jeweils N Zeilen von Elementen steuern; wobei jeder Zeilensteuerbus einen Schnittpunkt mit jedem Spaltensteuerbus hat;

und dass diese Beziehungsverwaltungsvorrichtung N(N-1) Speicherelemente (RMP(X, Y)) umfasst, für jede Beziehung , die zwei verschiedene Objekte (X und Y) unter N verknüpfen kann; wobei diese Elemente an Schnittpunkten der Spaltensteuerbusse und der Zeilensteuerbusse angeordnet sind, mit Ausnahme der Schnittpunkte, die auf einer Diagonalen des Gitters angeordnet sind.

3. Vorrichtung nach Anspruch 1, zum Verwalten von symmetrischen Beziehungen in einer Menge von Gegenständen, die N Gegenstände umfasst, dadurch gekennzeichnet, dass sie N individuelle Busse umfasst, die jeweils den N Objekten entsprechen, wobei jeder individuelle Bus einen ersten und einen zweiten Zweig (BO(K), BO'(K)) mit einem gemeinsamen Ende aufweist und jeder individuelle Bus einen Schnittpunkt mit jedem der anderen unter diesen N individuellen Bussen hat;
dass die Beziehungsverwaltungsvorrichtung N(N-1)/2 Beziehungsspeicherelemente (RMP(I, K)) für jede symmetrische Beziehung umfasst, die zwei verschiedene Objekte in dieser Menge von N Objekten verknüpfen kann;
dass die Speicherelemente (RMP(i, k)), die die Beziehungsinformationen zwischen dem Objekt vom Rang I=1 bis K-1 und den Objekten vom Rang K, wobei K zwischen 1 und N gewählt ist, an Schnittpunkten des ersten Zweiges (BO(K)) des individuellen Busses, der diesem Objekt vom Rang K entspricht, und des zweiten Zweiges (BO'(I)) jedes individuellen Busses angeordnet sind, der jeweils den Objekten vom Rang i=1 bis K-1 entspricht;
und dass die Speicherelemente RMP(j, K), die Beziehungsinformationen zwischen dem Objekt vom Rang K und den Objekten vom Rang j=K+1 bis N an Schnittpunkten des zweiten Astes (BO'(K)) des dem Objekt vom Rang K entsprechenden individuellen Busses und des ersten Zweiges (BO(j)) jedes jeweils den Objekten vom Rang j=K+1 bis N entsprechenden individuellen Busses angeordnet sind.

4. Vorrichtung nach Anspruch 1, dadurch gekennzeichnet, dass die Logikschaltung eines am Schnittpunkt eines einem ersten Objekt (X) entsprechenden individuellen Busses und eines einem zweiten Objekt (Y) entsprechenden individuellen Busses Mittel (3, 4; 17, 18) umfasst, zum Zulassen des Lesens einer in diesem Element gespeicherten Beziehungsinformation, wenn sie wenigstens ein Auswahlsignal ($RS_X$; $SSA_X$) empfängt, das von dem dem ersten Objekt entsprechenden individuellen Bus transportiert wird, und zum Zulassen des Lesens dieser Information, wenn sie wenigstens ein Auswahlsignal ($RS_X$; $SSA_Y$) empfängt, das von dem dem zweiten Objekt entsprechenden individuellen Bus transportiert wird; wobei die gelesene Information im ersten Fall wenigstens auf dem individuellen Bus (BO'1(Y); BO'2(Y)) wiedergegeben wird, der dem zweiten Objekt (Y) entspricht, und in dem zweiten Fall wenigstens auf dem individuellen Bus (BO1(X); BO2(X)) wiedergegeben wird, der dem ersten Objekt (X) entspricht.

5. Vorrichtung nach Anspruch 1, dadurch gekennzeichnet, dass zum Ermöglichen einer Operation des Schreibens einer Beziehungsinformation in ein Element, das eine Beziehungsinformation betreffend das Bestehen oder Nichtbestehen einer Beziehung zwischen einem ersten und einem zweiten Objekt speichern kann, indem diese zwei Objekte explizit ausgewählt werden, die Logikschaltung dieses Elements ferner Mittel (1, 2; 11, 12) umfasst, um insbesondere das Schreiben einer Beziehungsinformation zwischen diesem ersten Objekt (X) und diesem zweiten Objekt (Y) zuzulassen, wenn sie gleichzeitig wenigstens ein Auswahlsignal ($ST_X$, $RT_X$) empfängt, das von dem dem ersten Objekt (X) entsprechenden individuellen Bus transportiert wird, und wenigstens ein Auswahlsignal ($ST_Y$ bzw. $RT_Y$) empfängt, das von dem dem zweiten Objekt (Y) entsprechenden individuellen Bus transportiert wird.

6. Vorrichtung nach Anspruch 1, dadurch gekennzeichnet, dass jeder individuelle Bus (BO2(K), BO'2(K)), der einem Objekt (K) entspricht, in der Lage ist,
wenigstens zwei Auswahl signale zu transportieren, die es ermöglichen, dieses Objekt auszuwählen, indem dieses Objekt wenigstens einer Gruppe unter zwei Gruppen (A, B) von für eine Schreiboperation betrachteten Objekten zugeordnet wird;
und dass die Logikschaltung jedes Speicherelements Mittel (11 bis 15) umfasst, um eine Schreiboperation in diesem Element zuzulassen, wenn gleichzeitig:

- wenigstens ein Auswahlsignal betreffend eine erste Gruppe ($SSA_X$ oder $SSB_X$) auf dem dem ersten Objekt (X) entsprechenden individuellen Bus (BO2(X)) vorhanden ist;
- und wenigstens ein Auswahlsignal betreffend eine zweite Gruppe ($SSB_Y$ oder $SSA_Y$) auf dem dem zweiten Objekt (Y) entsprechenden individuellen Bus (BO'2(Y)) vorhanden ist.

7. Vorrichtung nach Anspruch 6, dadurch gekennzeichnet, dass die an die Zugangspunkte gekoppelten Logikmittel (M) umfassen:

-- Mittel (LA) zum Liefern einer ersten Kombination (STA=1 und STB=0; oder RTA=1 und RTB=0; SSA=1 und SSB=0) von Werten der Auswahlsignale an jeden individuellen Bus, der einem Objekt entspricht, das ausschließlich einer ersten Gruppe (A) für eine gegebene Schreiboperation zugeordnet werden soll;

-- Mittel (LB) zum Liefern einer zweiten Kombination (STA=0 und STB=1; RTA=1 und RTB=1; SSA=0 und SSB=1) von Werten der Auswahlsignale an jeden individuellen Bus, der einem Objekt entspricht, das ausschließlich der anderen Gruppe (B) für diese Schreiboperation zugeordnet werden soll;

-- Mittel (LAB) zum liefern einer dritten Kombination (STA=1 und STB=1; oder RTA=1 und RTB=1; SSA=1 und SSB=1) von Werten der Auswahlsignale an jeden individuellen Bus, der einem Objekt entspricht, das gleichzeitig der ersten (A) und der zweiten Gruppe (B) für diese Schreiboperation zugeordnet werden soll;

und dass zum Durchführen einer Schreiboperation einer Information, die die Existenz oder Nichtexistenz einer Beziehung angibt, die jedes erste Objekt einer ersten Untermenge (S1) von vorgegebenen Objekten mit jedem zweiten Objekt einer zweiten Untermenge (S2) von vorgegebenen Objekten verknüpfen kann, ohne die gleiche Operation zwischen den Objekten (A1, A2; 1, 7) durchzuführen, die ausschließlich zur ersten Untermenge gehören, und die gleiche Operation auch nicht zwischen den Objekten (B1, B2, B3; 2, 5, 8) durchzuführen, die ausschließlich zur zweiten Untermenge gehören, die Logikmittel (LM) liefern:

- die erste Kombination von Werten an die individuellen Busse, die den ausschließlich zur ersten oder zur zweiten Untermenge gehörenden Objekten entsprechen, wobei eine dieser zwei Untermengen (S1 oder S2) willkürlich ausgewählt wird, um diese Objekte einer ersten Gruppe (A) ausschließlich zuzuordnen;

- die zweite Kombination von Werten an die individuellen Busse, die den ausschließlich zur anderen Untermenge (S2 beziehungsweise S1) gehörenden Objekten entsprechen, um diese Objekte einer zweiten Gruppe (B) ausschließlich zuzuordnen;

- und die dritte Kombination von Werten an die individuellen Busse, die den eventuellen Objekter entsprechen, die gleichzeitig zu beiden Untermengen (S1 und S2) gehören, um diese Objekte gleichzeitig der ersten und der zweiten Gruppe (A und B) zuzuordnen.

8. Vorrichtung nach Anspruch 1, dadurch gekennzeichnet, dass jeder individuelle Bus (BO1(X), BO'1(Y); BO2"(X); BO'2"(Y)) in der Lage ist, ferner wenigstens ein Objektauswahl- und Operationsbefehlssignal (RTx/STx/RSx, RTy/STy/RSy; RTAx und RTBx/STAx und STBx/RDx, RTAy und RTBy/STAy und STBy/RDdy) zu transportieren, und dass die Logikschaltung jedes Elements (RMP1(X,Y); RMP2"(X, Y)) Mittel (1, 2; 61 bis 69) umfasst, um eine Operation zuzulassen, wenn sie empfängt:

- wenigstens ein Auswahl- und Operationsbefehlssignal, das von einem der zwei individuellen Busse geliefert wird, an deren Schnittpunkt dieses Elements angeordnet ist, im Fall einer auf der Auswahl eines einzigen Objekts basierenden Operation wobei das andere Objekt beliebig ist;

- oder wenigstens zwei Objektauswahl- und Operationsbefehlssignale gleichzeitig, die jeweils von den zwei individuellen Bussen geliefert werden, an deren Schnittpunkt dieses Element angeordnet ist, im Fall einer auf der Auswahl von zwei Objekten basierenden Operation.

9. Vorrichtung nach Anspruch 8, dadurch gekennzeichnet, dass jeder individuelle Bus (BO1(X); BO2"(X)), der einem Objekt (X) entspricht, in der Lage ist, zu transportieren:

- wenigstens ein Signal ($ST_X$; $STA_X$ oder $STB_X$) zur Auswahl eines Objekts und als Befehl zum Schreiben einer Information (1), die das Bestehen einer Beziehung zwischen diesem Objekt und einem anderen Objekt angibt;

- wenigstens ein Signal ($RT_X$; $RTA_X$ oder $RTB_X$) zur Auswahl eines Objekts und als Befehl zum Schreiben einer Information (0), die das Nichtbestehen einer Beziehung zwischen diesem Objekt und einem anderen Objekt angibt;

- wenigstens ein Signal ($RS_X$; $RD_X$) zur Auswahl eines Objekts und als Befehl zum Lesen einer Information, die das Bestehen oder Nichtbestehen einer Beziehung zwischen diesem Objekt und einem anderen Objekt angibt;

- und wenigstens ein Lese-Ausgangssignal ($OL_X$; $OLA_X$, $OLB_X$), das bis zu einem Zugangspunkt zu diesem Bus zu transportieren ist.

10. Vorrichtung nach Anspruch 1, dadurch gekennzeichnet, dass sie einen sogenannten Operationsbefehlsbus (OC) umfasst, der allen Elementen (RMP1"(X, Y), RMP2(X, Y)) gemeinsam ist und in der Lage ist, wenigstens ein banalisiertes Operationsbefehlssignal (RT, ST, RD) zu transportieren; und dass die Logikschaltung jedes Elements (RMP1"(X, Y); RMP2(X, Y)) ferner Mittel (1" bis 4"; 14, 15, 17, 18) umfasst, um eine Operation zuzulassen, wenn sie gleichzeitig wenigstens ein von den gemeinsamen Bus transportiertes Operationsbefehlssignal (RT; ST; RD) und wenigstens ein von wenigstens einem individuellen Bus transportiertes Auswahlsignal ($SS_X$; $SS_Y$; $SSA_X$; $SSA_Y$) empfängt.

**11.** Vorrichtung nach Anspruch 10, dadurch gekennzeichnet, dass

- jeder individuelle Bus (BO1"(X), BO2(X)), der einem Objekt (X) entspricht, in der Lage ist, zu transportieren:

 -- wenigstens ein Objektauswahlsignal ($SS_X$; $SSA_X$, $SSB_X$) zum Auswählen dieses Objekts (X);
 -- und wenigstens ein Leseausgangssignal ($OL_X$; $OLA_X$, $OLB_X$), das bis zu einem Zugangspunkt dieses Busses zu transportieren ist;

- und dass der allen Elementen (RMP1"(X, Y), RMP2(X, Y)) gemeinsame Bus (OC) in der Lage ist, wenigstens zu transportieren:

 -- ein gemeinsames Operationsbefehlssignal (ST) zum Schreiben einer Information (1), die das Bestehen einer Beziehung zwischen diesem Objekt (X) und einem anderen Objekt angibt;
 -- ein gemeinsames Operationsbefehlssignal (RT) zum Schreiben einer Information (0), die das Nichtbestehen einer Beziehung zwischen diesem Objekt (X) und einem anderen Objekt angibt;
 -- und ein gemeinsames Operationsbefehlssignal (RD) zum Lesen einer Information, die das Bestehen oder Nichtbestehen einer Beziehung zwischen diesem Objekt (X) und einem anderen Objekt angibt.

**12.** Vorrichtung nach Anspruch 1, die eine erste komplexe Operation ermöglicht, die darin besteht, eine gleiche Information über das Bestehen oder Nichtbestehen einer Beziehung zwischen einem gegeben Objekt (X) und allen anderen Objekten gleichzeitig zu schreiben, dadurch gekennzeichnet,
dass die Busse (B01(X); B02(X); RTA) in der Lage sind, an alle Elemente (RMP1; RMP2), die in der Lage sind, eine Beziehungsinformation zwischen einem gegeben Objekt (X) und einem anderen Objekt zu speichern, eine Kombination von Signalen ($RS_X$=1 und $RT_X$=1; $SSA_X$=1 und $SSA_Y$=1 und $RT_A$=1) zu liefern, die zu dem gegeben Objekt und zu dieser ersten komplexen Operation gehört, um dieses gegebene Objekt auszuwählen und die Ausführung dieser ersten komplexen Operation zu befehlen;
dass die Logikmittel (LM), die an die Zugangspunkte der Busse gekoppelt sind, Mittel zum Senden dieser Kombination von Signalen auf den Bussen aufweisen; und dass die Logikschaltung jedes Elements (RMP1(X, Y); RMP2(X, Y)) Mittel (OC1; OC'1) umfasst, um das Schreiben einer Beziehungsinformation in dieses Element zuzulassen, wenn es diese Kombination von Signalen empfängt.

**13.** Vorrichtung nach Anspruch 1, die es ermöglicht, die gleichzeitige Ausführung von mehreren verschieden Operationen zu befehlen, die jeweils zu disjunkten Untermengen von möglichen Operationen gehören, dadurch gekennzeichnet, dass:

- jeder individuelle Bus (BO(N), BO'(N); BO(P), BO'(P); BO(Q), BO'(Q)) in der Lage ist, mehrere verschiedene Auswahlsignale (IST1(P); IST(N), IST1(Q)) zu transportieren, die von den an die Zugangspunkte dieser Busse gekoppelten Logikmitteln (LM) geliefert werden;

und dass die Logikschaltung jedes Elements (RMP(P, N); RMP(P, Q); RMP(N, Q)) Mittel umfasst, um die Ausführung aller zu einer Untermenge gehörenden Operationen zuzulassen, wenn diese Schaltung empfängt:

 -- ein Auswahlsignal (IST1; IST2), das von einem der zwei individuellen Busse transportiert wird, an deren Schnittpunkt dieses Element angeordnet ist, wobei dieses Auswahlsignal dieser Untermenge von Operationen eigens zugewiesen ist, im Fall einer Untergruppe von Operationen, die auf der Auswahl eines einzigen Objekts basieren;
 -- oder eine Kombination von zwei verschiedenen Auswahlsignalen (IST1 und IST2), die jeweils von den zwei individuellen Bussen transportiert werden, an deren Schnittpunkt dieses Element angeordnet ist, wobei diese Kombination von zwei Auswahlsignalen dieser Untermenge von Operationen eigens zugewiesen ist, im Fall einer Untermenge von Operationen, die auf der gleichzeitigen Auswahl von zwei Objekten basieren.

**14.** Vorrichtung nach Anspruch 13, die die gleichzeitige Ausführung einer ersten und einer davon verschiedenen zweiten Schreiboperation erlaubt, für Beziehungen zwischen zwei ausgewählten Objekten, wobei jede dieser Schreiboperationen zu einer anderen Untermenge von möglichen Operationen gehört, dadurch gekennzeichnet, dass:

- jeder individuelle Bus (BO(P), BO'(P); BO(N), BO'(N); BO(Q); BO'(Q)) in der Lage ist, wenigstens zwei unterschiedliche Arten von Auswahlsignalen (IST1, IST2) zu transportieren;
- und die Logikschaltung jedes Elements Mittel umfasst, um zuzulassen:

-- die erste Schreiboperation, wenn sie eine erste Kombination (IST1(P).IST1(Q)=1) empfängt, die durch zwei Auswahlsignale gebildet ist, die jeweils von den zwei individuellen Bussen geliefert werden, an deren Schnittpunkt dieses Element (RMP(P, Q)) angeordnet ist;
-- die zweite Schreiboperation, wenn sie eine zweite Kombination (ITS1(P).ITS2(N)+IST2(P).IST1(N)=1; IST1(Q).IST2(N)+IST2(Q).IST1(N)=1) empfängt, die [durch Auswahlsignale] gebildet ist, die jeweils von den zwei individuellen Bussen geliefert werden, an deren Schnittpunkt dieses Element (RMP(P, N); RMP (N, Q)) angeordnet ist.

15. Vorrichtung nach Anspruch 12, dadurch gekennzeichnet, dass für die erste komplexe Operation jeder einem gegeben Objekt (X) entsprechende individuelle Bus (BO1(X)) in der Lage ist, die dem gegebenen Objekt (X) und der ersten komplexen Operation zugehörige Kombination von Signalen ($RS_X$=1 und $RT_X$=1) zu transportieren;
dass die an die Zugangspunkte der individuellen Busse gekoppelten Logikmittel (LM) Mittel umfassen, um an den jedem gegebenen Objekt (X) entsprechenden individuellen Bus (BO1(X)) die Kombination von Signalen zu liefern;
und dass die Logikschaltung (1 bis 5) jedes Speicherelemente (RMP1(X, Y)) ferner Mittel (OC1) umfasst, die das Schreiben einer Information (0), die das Nichtbestehen einer Beziehung anzeigt, in dieses Element zulassen, wenn die Kombination von Signalen ($RT_Y$=1 und $RS_Y$=1, oder $RT_X$=1 und $RS_X$=1) von einem der zwei individuellen Busse (BO1(X); BO'1(Y)) transportiert wird, an deren Schnittpunkt dieses Element angeordnet ist.

16. Vorrichtung nach Anspruch 12, dadurch gekennzeichnet, dass die Kombination von Signalen, die zu einem gegebenen Objekt und zu der ersten komplexen Operation gehört, aus einem Signal ($SSA_X$=1; $SS1_X$=1) zur Auswahl des gegebenen Objekts gebildet ist, das von dem individuellen Bus (BO2(X); BO3(P)) befördert wird, der diesem gegeben Objekt entspricht, und aus einem Freigabebefehlssignal (RTA=1; RTA'=1) besteht, das von einem Bus (OC) transportiert wird, der allen Speicherelementen gemeinsam ist;
und dass die an die Zugangspunkte der Busse gekoppelten Logikmittel (LM) Mittel umfassen, um gleichzeitig dieses Freigabebefehlssignal (RTA=1; RTA'=1) auf den gemeinsamen Bus und ein Auswahlsignal ($SSA_X$=1; $RD_P$=1) auf dem dem gegebenen Objekt entsprechenden individuellen Bus zu legen;
und dass die Logikschaltung (11 bis 18; 11 bis 18') jedes Beziehungsspeicherelements (RMP2(X, Y); RMP3 (E, P)) ferner Mittel (OC1'; OC1") umfasst, die das Schreiben einer Information (0), die das Nichtbestehen einer Beziehung angibt, in dieses Speicherelement zulassen, wenn dieses Freigabebefehlssignal (RTA=1; RTA'=1) auf diesen gemeinsamen Bus gelegt wird und wenn gleichzeitig ein passendes Auswahlsignal ($SSA_X$=1; $RD_P$=1) auf einen der zwei individuellen Busse (BO2(X), BO'2(Y); BO3(X), BO'3(Y)) gelegt wird, an deren Schnittpunkt dieses Speicherelement angeordnet ist.

17. Vorrichtung nach Anspruch 13, dadurch gekennzeichnet, dass, um eine zweite komplexe Operation zu ermöglichen, die aus zwei gleichzeitigen Lesevorgängen (La, Lb) aller Beziehungsinformationen besteht, die das Bestehen oder Nichtbestehen von zwischen wenigstens einem Objekt (L) und jedem anderen Objekt etablierten Beziehungen für einen ersten Lesevorgang (La) und zwischen wenigstens einem anderen Objekt (M) und jedem anderen Objekt für etablierte Beziehungen einen Lesevorgang (Lb) angeben, wobei die identifizierten Objekte auf zwei verschiedene Gruppen (AB) verteilt sind, die mit Bezug auf die zwei Lesevorgänge (La, Lb) jeweils als Ausgangsgruppen bezeichnet werden,

- der individuelle Bus (BO1(X), BO'1(X); BO2(X), BO'2(X)), der jedem Objekt (X) entspricht, in der Lage ist, ein erstes Auswahlsignal ($RSA_X$; $SSA_X$) zu übertragen und ein zweites Auswahlsignal ($RSB_X$; $SSB_X$) zu übertragen, wobei diese zwei Signale verschieden sind und zu dieser zweiten komplexen Operation gehören; und in der Lage ist, ein erstes Lese-Ausgangssignal ($OLA_X$) zu übertragen und ein zweites Lese-Ausgangssignal ($OLB_X$) zu übertragen, wobei diese zwei Lese-Ausgangssignale dieser zweiten komplexen Operation zu eigen sind;
- die Logikmittel (LM) Mittel zum Liefern dieses ersten Auswahlsignals und Mittel zum Liefern dieses zweiten Auswahlsignals an die individuellen Busse umfassen; wobei dieses erste und dieses zweite Signal jeweils an diejenigen individuellen Busse geliefert werden, die jeweils jedem Objekt (L), von dem aus ein erster Lesevorgang (La) ausgeführt werden soll, und jedem Objekt (M), von dem aus ein zweiter Lesevorgang (Lb) ausgeführt werden soll, entsprechen; und Mittel umfassen, um die zwei Lese-Ausgangssignale zu empfangen, die von jedem individuellen Bus transportierbar sind;
- und die Logikschaltung jedes Speicherelements (RMP1(X,Y); RMP2(X,Y)) mit Bezug auf ein erstes Objekt (X) und ein zweites Objekt (Y) ferner Mittel (OC2; C'2) umfasst, um vier gleichzeitige oder ungleichzeitige Lesevorgänge dieses Elements zuzulassen:

-- einen ersten Lesevorgang (La) ab dem ersten Objekt (X), wenn das erste Auswahlsignal (RSA$_X$; SSA$_X$) von dem individuellen Bus transportiert wird, der dem ersten Objekt (X) entspricht;

-- einen zweiten Lesevorgang (Lb) ab dem ersten Objekt (X), wenn das zweite Auswahlsignal (RSB$_X$; SSB$_X$) von dem individuellen Bus transportiert wird, der dem ersten Objekt (X) entspricht;

-- einen ersten Lesevorgang (La) ab dem zweiten Objekt (Y), wenn das erste Auswahlsignal (RSA$_Y$; SSA$_Y$) von dem individuellen Bus transportiert wird, der dem zweiten Objekt (Y) entspricht;

-- einen zweiten Lesevorgang (Lb) ab dem zweiten Objekt (Y), wenn das zweite Auswahlsignal (RSB$_Y$; SSB$_Y$) von dem individuellen Bus transportiert wird, der dem zweiten Objekt (Y) entspricht.

18. Vorrichtung nach Anspruch 17, dadurch gekennzeichnet, dass das erste und das zweite Auswahlsignal (RSA$_Y$, RSB$_X$) jeweils auch ein Leseoperations-Befehlssignal darstellen; und dass die Logikschaltung jedes Speicherelements (RMP2(X,Y)) Mittel (OC2) umfasst, um die vier in Anspruch 17 erwähnten möglichen Lesevorgänge entsprechend den zwei Auswahlsignalen (RSA$_X$, RSB$_X$) und Leseoperations-Befehlssignalen auszuführen, die von dieser Schaltung empfangen werden.

19. Vorrichtung nach Anspruch 17, dadurch gekennzeichnet, dass:

- ein allen Elementen gemeinsamer Bus in der Lage ist, ein gemeinsames banalisiertes Lesebefehlssignal (RD) zu transportieren, das für den ersten und den zweiten Lesevorgang (La, Lb) gemeinsam ist;

- die Logikmittel (LM) Mittel umfassen, um ferner dieses banalisierte Lesebefehlssignal (RD) an den gemeinsamen Bus (OC) zu liefern;

- die Logikschaltung jedes Speicherelements (RMP2(X, Y)) ferner Mittel (OC'2) umfasst, um die vier in Anspruch 17 erwähnten Lesevorgänge nur auszuführen, wenn sie ferner dieses banalisierte Lesebefehlssignal (RD) empfängt.

20. Vorrichtung nach Anspruch 4, dadurch gekennzeichnet, dass, um eine dritte komplexe Operation zu ermöglichen, die aus einem Lesevorgang durch Ausbreitung ab einem gegeben Objekt (R) besteht, um alle Objekte zu identifizieren, die mit diesem Objekt eine direkte oder indirekte Beziehung haben,

- sie einen Bus umfasst, der allen Zugangspunkten (AP1(K); AP2(K)) der Auswahlbusse gemeinsam ist und in der Lage ist, ein Operationsbefehlssignal (LP=1; LP'=1) zu transportieren, das dieser dritten komplexen Operation zu eigen ist;

- die an die Zugangspunkte der individuellen Busse gekoppelten Logikmittel (LM) für jeden individuellen Bus (BO1(K), BO'1(K); BO2(K), BO'2(K)), der einem Objekt (K) entspricht, Logikmittel (36, 38) aufweisen, die diesem Bus wenigstens ein Auswahlsignal (RS$_K$=1; SSA$_K$=1) liefern, wenn ein Lese-Ausgangssignal (OL$_K$=1) auf diesem Bus vorhanden ist, und wenn das Operationsbefehlssignal (LP=1; LP'=1), das der dritten komplexen Operation zu eigen ist, auf dem allen Zugangspunkten gemeinsamen Bus vorhanden ist.

21. Vorrichtung nach Anspruch 20, dadurch gekennzeichnet, dass ein Auswahlsignal (RS$_K$=1), das durch die an die Zugangspunkte der Auswahlbusse gekoppelten Logikmittel (36) geliefert wird, auch ein Leseoperations-Befehlssignal für die Elemente (RMP1(K, P)) darstellt.

22. Vorrichtung nach Anspruch 20, dadurch gekennzeichnet, dass:

- sie ferner einen allen Elementen (RMP1"(X,Y); RMP2(X,Y)) gemeinsamen Bus (OC) umfasst, die in der Lage ist, wenigstens ein banalisiertes Operationsbefehlssignal (RD=1) zu transportieren;

- die Logikschaltung jedes Elements (RMP1"(X,Y); RMP2(X,Y)) ferner Mittel (3"4"; 17, 18) zum Zulassen eines Lesevorgangs nur dann, wenn sie ein banalisiertes Lesebefehlssignal (RD=1) empfangen, umfasst;

- und dass die an die Zugangspunkte der individuellen Busse gekoppelten Logikmittel (LM) ferner ein banalisiertes Lesebefehlssignal (RD=1) an diesen allen Elementen gemeinsamen Bus (OC) gleichzeitig mit dem Auswahlsignal (SSA$_K$=1) liefern.

23. Vorrichtung nach Anspruch 20 und einem der Ansprüche 15 oder 16, dadurch gekennzeichnet, dass, um eine vierte komplexe Operation zu ermöglichen, die darin besteht, durch Verbreitung direkte oder indirekte Beziehungen zwischen einem gegebenen Objekt (R) und jedem anderen Objekt zu identifizieren und freizugeben, die Logikmittel (LM) liefern:

- ein Auswahlsignal ($RS_R$=1; $SSA_R$=1) an den einem gegeben Objekt (R) entsprechenden Bus;
- ein Operationsbefehlssignal (LP=1; LP'=1), das der dritten komplexen Operation zu eigen ist, an den allen Zugangspunkten der Auswahlbusse gemeinsamen Bus, um alle Objekte zu identifizieren, die eine direkte oder indirekte Beziehung mit dem gegebenen Objekt (R) haben;

und dass anschließend die Logikmittel (LM):

- Lese-Ausgangssignale ($OL_K$=1) empfangen, die jedes Objekt (K) identifizieren, das eine Beziehung mit dem gegebenen Objekt (R) hat;
- dann ein Auswahlsignal ($RS_K$=1 und $RT_K$=1; $SSA_K$=1) an den individuellen Bus jedes so identifizierten Objekts (K) liefern;
- und wenigstens an die Elemente, die das Bestehen einer Beziehung zwischen dem gegebenen Objekt (R) und den so identifizierten Objekten (K) speichern, eine Kombination von Auswahl- und Freigabebefehlssignalen ($RS_K$=1 und $RT_K$=1; RTA=1) liefern, um in jedes dieser Elemente eine Information (0) einzutragen, die das Nichtbestehen einer Beziehung angibt.

24. Vorrichtung nach Anspruch 23, dadurch gekennzeichnet, dass die Logikmittel (LM) umfassen:

- Mittel (36), um an den individuellen Bus (BO1(K), BO'1(K)) jedes identifizierten Objekts ein Auswahlsignal ($RS_K$=1) während eines ersten und eines zweiten Zeitintervalls (T0, T1) zu liefern, wobei dieses Auswahlsignal auch ein Lesebefehlssignal darstellt;
- und Mittel (36, 40), um anschließend an den individuellen Bus (Bo1(K), BO'1(K)) jedes identifizierten Objekts ein Steuersignal ($RT_K$=1) während nur des zweiten Zeitintervalls (T1) zu liefern, wobei die Kombination dieses Auswahlsignals ($RS_K$=1) und dieses Befehlssignals ($RT_K$=1) während des zweiten Zeitintervalls (T1) das Eintragen einer Information (0), die das Nichtbestehen einer Beziehung angibt, befiehlt.

25. Vorrichtung nach Anspruch 23, dadurch gekennzeichnet, dass der allen Elementen gemeinsame Bus (OC) in der Lage ist, ein banalisiertes Befehlssignal (RTA=1) zu übertragen, das der ersten komplexen Operation zu eigen ist; und dass die Logikmittel (LM) umfassen:

- Mittel (38), um an den individuellen Bus (BO2(K), BO'2(K)) jedes identifizierten Objekts ein Auswahlsignal ($SSA_K$=1) während eines ersten und eines zweiten Zeitintervalls (T2, T3) zu liefern;
- Mittel, um an den allen Elementen gemeinsamen Bus (OC) ein Lesebefehlssignal (RD=1) während des ersten und des zweiten Zeitintervalls (T2, T3) zu liefern;
- Mittel, um an den allen Elementen gemeinsamen Bus (OC) ein banalisiertes Signal (RTA=1) nur während des zweiten Zeitintervalls (T3) zu liefern, um eine Information (0) einzutragen, die das Nichtbestehen einer Beziehung angibt.

26. Vorrichtung nach Anspruch 14 zur Durchführung einer fünften komplexen Operation, die darin besteht, eine eventuelle Beziehung (P-Q) zwischen einem ersten Objekt (P) und einem eventuellen zweiten Objekt (Q) freizugeben und gleichzeitig eine neue Beziehung (P-N) und eine neue Beziehung (N-Q) zwischen einem dritten Objekt (N) und jeweils diesen zwei Objekten (P, N) zu etablieren, dadurch gekennzeichnet, dass die an die Zugangspunkte der Busse gekoppelten Logikmittel (LM) Mittel umfassen, um gleichzeitig zu liefern:

- ein Auswahlsignal einer ersten Art (RT1, ST1, SS1) an die individuellen Busse des ersten und des zweiten Objekts (P, Q),
- und ein Auswahlsignal einer zweiten Art (RT2, ST2, SS2) an den individuellen Bus des dritten Objekts (N);

und dass die Logikschaltung jedes Elements (RMP1; RMP1"; RMP2; RMP2") Mittel (1 bis 4; 39 bis 41; 1" bis 41"; 72 bis 74; 11 bis 18, 42, 43; 61 bis 69) umfasst, um gleichzeitig auszuführen:

- eine erste Schreiboperation, die darin besteht, eine Information (0), die das Nichtbestehen einer Beziehung angibt, zu schreiben wenn sie eine erste Kombination von zwei Signalen ($RT1_P.RT1Q$=1; $SS1_P.SS1_Q$=1), die aus zwei Signalen der ersten Art (RT1; SS1) besteht, auf den zwei individuellen Bussen empfängt, an deren Schnittpunkt sie angeordnet ist;

- und eine zweite Schreiboperation, die darin besteht, eine Information (1), die das Bestehen einer Beziehung angibt, zu schreiben, wenn sie eine zweite Kombination von Auswahlsignalen ($ST1_N.ST2_P+ST2_N.ST1_P=1$; $SS1_N.SS2_P+S2_N.SS1_P=1$ oder $ST1_N.ST2_Q+ST2_N.ST1_Q=1$; $SS1_N.SS2_Q+SS2_N.SS1_Q=1$), die aus einem Signal der ersten Art (ST1; SS1) und einem Signal der zweiten Art (ST2; SS2) gebildet ist, jeweils auf den zwei Auswahlbussen empfängt, an deren Schnittpunkt sie angeordnet ist.

**27.** Vorrichtung nach Anspruch 12, die eine sechste komplexe Operation ermöglicht, die darin besteht, Beziehungen, die zwischen einem gegeben Objekt (E), als zu eliminierendes Objekt bezeichnet, und höchstens zwei anderen sogenannten benachbarten Objekten (P, Q) in einer linearen Kette von Beziehungen zwischen Objekten freizugeben und eine direkte Beziehung zwischen diesen zwei Objekten (P, Q) zu etablieren, dadurch gekennzeichnet, dass, um nacheinander während eines ersten Zeitintervalls (T5; T7)

-- eine erste Operation, die darin besteht, in den Elementen (RMP(E, P), RMP(E, Q)), die Informationen speichern, die das eventuelle Bestehen von Beziehungen zwischen dem zu eliminierenden Objekt (E) und jedem anderen Objekt angeben, zu lesen,
-- dann eine zweite Operation, die darin besteht, eine Information, die das Bestehen einer Beziehung angibt, in ein Speicherelement (RMP(P, Q)) einzutragen, das sich auf zwei gegebenenfalls durch die erste Operation identifizierte benachbarte Objekte (P, Q) bezieht,

zu befehlen,

- die an die Zugangspunkte der Busse gekoppelten Logikmittel (LM) Mittel umfassen, die für die erste Operation ein erstes Auswahl- und Operationsbefehlssignal ($RS_E=1$; $RD_E=1$) liefern, das auf den individuellen Bus des zu eliminierenden Objekts (E) gegeben wird, um einen Lesevorgang in den Elementen zu befehlen, die die Beziehungen zwischen dem zu eliminierenden Objekt (E) und allen anderen Objekten speichern;
- die Verwaltungsvorrichtung ferner Logikmittel (44, 45; 51, 52; 47 bis 49) zum Verbreiten eines anderen auf die zweite Operation bezogenen Auswahlsignals aufweisen, die an die individuellen Busse gekoppelt sind, um an den individuellen Bus eines Objekts (P, Q) ein zweites Auswahl- und Operationssbefehlssignal ($ST_P$; $SSA_P$ und $SSB_P$) zu liefern, wenn dieser Bus ein Lese-Ausgangssignal ($OL_P$) transportiert, um das Schreiben einer Information (1) zu befehlen, die das Bestehen einer Beziehung zwischen zwei benachbarten, durch die erste Operation identifizierten Objekten (P, Q) angibt;

und dass, um in einem zweiten Zeitintervall (T6; T8) die zwischen dem zu eliminierenden Objekt (E) und den benachbarten Objekten (P, Q) bestehenden Beziehungen freizugeben, sie Mittel (OC1; OC'1) nach Anspruch 12 umfasst, die es ermöglichen, die erste komplexe Operation der Freigabe jeder Beziehung zu einem Objekt durchzuführen.

**28.** Vorrichtung nach Anspruch 27, dadurch gekennzeichnet, dass sie einen allen Speicherelementen gemeinsamen Bus aufweist, der ein sogenanntes Verbreitungsbefehlssignal (EC=1), das dieser sechsten komplexen Operation zu eigen ist, während eines ersten Zeitintervalls (T5) überträgt;
und dass das erste Auswahl- und Operationsbefehlssignal durch ein Befehlssignal ($RS_E=$)1 zum Lesen ab dem zu eliminierenden Objekt (E) gebildet ist, das während des ersten Zeitintervalls (T5) angelegt wird;
und dass das zweite Auswahl- und Operationsbefehlssignal durch das Freigabebefehlssignal ($RS_E=1$ und $RT_E=1$) gebildet ist, das der ersten komplexen Operation zu eigen ist und während des zweiten Zeitintervalls (T6) angelegt wird, um die Beziehungen zwischen dem zu eliminierenden Objekt (E) und allen anderen Objekten freizugeben;
und dass die Logikschaltung (1 bis 5; OC1) jedes Beziehungsspeicherelements (RMP1(E, P)) ferner aufweist:

- Logikmittel (45) zum erzeugen eines Befehlssignals ($ST_P=1$; $ST_Q=1$) zum Schreiben einer Information (1), die das Bestehen einer Beziehung (P-Q) angibt, auf jedem individuellen Bus (BO1(P); BO1(Q)), der einem benachbarten Objekt (P; Q) entspricht, an den dieses Element angeschlossen ist, wenn:

  -- das gemeinsame Verbreitungsbefehlssignal (EC=1), das dieser sechsten Operation zu eigen ist, auf diesem gemeinsamen Befehlsbus vorhanden ist;
  -- und gleichzeitig ein Lesebefehlssignal ($RS_E=1$) auf dem individuellen Bus (BO'1(E)) vorhanden ist, der dem zu eliminierenden Objekt (E) entspricht;
  -- und die in diesem Element gelesene Information das Bestehen einer Beziehung angibt;

- Mittel (1) zum Schreiben einer Information (1), die das Bestehen einer Beziehung (P-Q) angibt, wenn diese Logikschaltung gleichzeitig zwei Befehlssignale ($ST_P$=1 und $ST_Q$=1) zum Schreiben einer Information (1),die das Bestehen einer Beziehung angibt, jeweils auf den zwei individuellen Bussen, an die sie angeschlossen ist, empfängt;

- Mittel (OC1) zum Schreiben einer Information (0), die das Nichtbestehen einer Beziehung (P-E; E-Q) angibt, wenn sie das Auswahl- und Operationsbefehlssignal ($RS_E$=1 und $RT_E$=1) empfängt, das der ersten komplexen Operation zu eigen ist, um die Freigabe einer Beziehung mit dem zu eliminierenden Objekt (E) zu ermöglichen.

29. Vorrichtung nach Anspruch 27, dadurch gekennzeichnet, dass sie einen allen Zugangspunkten gemeinsamen Bus umfasst, der in der Lage ist, ein sogenanntes Verbreitungsbefehlssignal (EC'=1) zu übertragen, das dieser sechsten komplexen Operation zu eigen ist; und dass die an die Zugangspunkte der Befehlsbusse gekoppelten Logikmittel (LM) umfassen:

- Mittel, um während eines ersten Zeitintervalls (T5) das gemeinsame Befehlssignal (EC'=1) zu senden, das dieser sechsten komplexen Operation z eigen ist, und ein Auswahl- und Lesebefehlssignal ($RS_E$=1) auf dem dem zu eliminierenden Objekt (E) entsprechenden individuellen Bus zu senden;

- für jeden einem Objekt entsprechenden individuellen Bus Mittel (48; 49), um ein Auswahl- und Befehlssignal ($ST_P$=1; $ST_Q$=1) zum Schreiben einer Information (1) zu liefern, die das Bestehen einer Beziehung angibt, wenn das Signal (EC'=1), das der sechsten komplexen Operation zu eigen ist, aktiv ist, und gleichzeitig ein Leseausgangssignal ($OL_P$=1; $OL_Q$=1), das das Bestehen einer Beziehung zwischen dem zu eliminierenden Objekt (E) und wenigstens einem benachbarten Objekt (P, Q) angibt, auf diesem individuellen Bus aktiv ist;

- Mittel, um während eines zweiten Zeitintervalls (T6) das Signal (EC'=1), das der sechsten komplexen Operation zu eigen ist, nicht mehr zu senden, aber das Freigabesignal ($RS_E$=1; $RT_E$=1), das der ersten komplexen Operation zu eigen ist und das Schreiben einer Information (0) befiehlt, die das Nichtbestehen einer Beziehung angibt, auf dem dem zu eliminierenden Objekt (E) entsprechenden Bus zu senden, um alle Beziehungen zwischen dem zu eliminierenden Objekt (E) und den anderen Objekten(P, Q) freizugeben;

und dass die Logikschaltung (1 bis 5; OC1) jedes Beziehungsspeicherelements (RMP1(E, P) ferner umfasst:

- Mittel (1) zum Schreiben einer Information (1), die das Bestehen einer Beziehung (P-Q) angibt, wenn sie gleichzeitig individuelle Auswahl- und Befehlssignale ($ST_P$=1 und $ST_Q$=1) zum Schreiben einer Information (1), die das Bestehen einer Beziehung angibt, jeweils auf den zwei individuellen Bussen empfängt, an deren Schnittpunkt sie angeschlossen ist;

- Mittel (OC1) zum Schreiben einer Information (0), die das Nichtbestehen einer Beziehung (P-E; E-Q) angibt, wenn sie ein Freigabebefehlssignal ($RS_E$=1 und $RT_E$=1), das der ersten komplexen Operation zu eigen ist, empfängt, um eine Beziehung mit dem zu eliminierenden Objekt (E) freizugeben.

30. Vorrichtung nach Anspruch 27, dadurch gekennzeichnet, dass sie einen allen Speicherelementen gemeinsamen Bus aufweist, der in der Lage ist, ein sogenanntes Identifikations- und Verbreitungsbefehlssignal (EC"=1), das dieser sechsten komplexen Operation zu eigen ist, und ein sogenanntes Freigabebefehlssignal (RTA'=1) zu übertragen;

und dass die Logikschaltung (11 bis 18', OC"1) jedes Beziehungsspeicherelements (RMP3(E,P)) aufweist:

-- Logikmittel (51, 52) zum Liefern eines sogenannten Befehlsverbreitungssignals ($SSB_E$ = $SSA_E$ = 1; $SSB_P$ = $SSA_P$ = 1) zum Schreiben einer Information (1), die das Bestehen einer Beziehung angibt, auf einem (BO'3 (P)) der zwei individuellen Busse, an deren Schnittpunkt dieses Element angeordnet ist, wenn ein Leseausgangssignal ($OL_P$=1), dass das Bestehen einer Beziehung angibt, durch dieses Element an den Bus geliefert wird und wenn gleichzeitig das Identifikations- und Verbreitungsbefehlssignal (EC"=1), das dieser sechsten komplexen Operation zu eigen ist, angelegt wird;

-- Mittel (OC1"), die eine Information (0), die das Nichtbestehen einer Beziehung angibt, in dieses Speicherelement schreiben, wenn das Freigabebefehlssignal (RTA'=1) auf dem gemeinsamen Bus angelegt wird und wenn gleichzeitig ein Auswahl- und Lesebefehlssignal ($RD_E$=1) auf einem der individuellen Busse angelegt wird, an deren Schnittpunkt dieses Element angeordnet ist;

und dass die an die Zugangspunkte der Befehlsbusse gekoppelten Logikmittel (LM) Mittel aufweisen, um:

- während eines ersten Zeitintervalls (T7) gleichzeitig zu aktivieren:

-- das Identifikations- und Ausbreitungsbefehlssignal (EC"=1), das dieser sechsten komplexen Operation zu eigen ist, auf dem gemeinsamen Bus;

-- das Auswahl- und Lesebefehlssignal ($RD_E$=1) auf dem einem zu eliminierenden Objekt (E) entsprechenden individuellen Bus;

-- das Schreibbefehlssignal (ST=1) auf dem gemeinsamen Bus zum Schreiben einer Information (1), die das Bestehen einer Beziehung zwischen zwei dem zu eliminierenden Objekt benachbarten Objekten (P, Q) angibt;

- während eines zweiten Zeitintervalls (T8) gleichzeitig zu aktivieren:

-- das Auswahl- und Lesebefehlssignal ($RD_E$=1) auf dem dem zu eliminierenden Objekt (E) entsprechenden individuellen Bus;

-- und das Freigabebefehlssignal (RTA'=1) auf dem gemeinsamen Bus zum Schreiben einer Information (0), die das Nichtbestehen jeglicher Beziehung zwischen dem zu eliminierenden Objekt (E) und allen anderen Objekten angibt.

**31.** Vorrichtung nach Anspruch 4, dadurch gekennzeichnet, dass wenn die Logikschaltung (1, 2, 3', 4', 5; 11 bis 16, 17', 18') eines Speicherelements (RMP1', RMP2') eine Leseoperation ausführt, sie eine Beziehungsinformation gleichzeitig auf dem dem ersten Objekt entsprechenden individuellen Bus (BO1(X); BO2(X)) und dem dem zweiten Objekt entsprechenden individuellen Bus (BO'1(Y); BO'2(Y)) wiedergibt, wenn sie ein Auswahlsignal über wenigstens einen dieser zwei individuellen Busse sowie ein Lesebefehlssignal empfängt.

**32.** Vorrichtung nach Anspruch 1, dadurch gekennzeichnet, dass zum Wiedergeben wenigstens eines Leseausgangssignals, dass das Bestehen oder Nichtbestehen wenigstens einer Beziehung mit diesem Objekt (X) angibt, an einem auf ein Objekt (X) bezogenen Zugangspunkt (AP(X)), jedes Speicherelement (RMP1(X, Y), RMP2(X, Y)) aufweist:

- einen Ausgang (O1(X); O2(X)), der auf das erste Objekt (X) bezogen ist und mit wenigstens einem Leiter des dem ersten Objekt (X) entsprechenden Busses (BO1(X); BO2(X)) verbunden ist, wobei alle auf ein erstes Objekt (X) bezogenen Ausgänge gemeinsam verbunden sind und eine verdrahtete Oder-Verknüpfung (WOR3; WOR5) bilden, die wenigstens ein Leseausgangssignal zu dem auf dieses erste Objekt bezogenen Zugangspunkt (AP(X)) überträgt;

- einen auf ein zweites Objekt (Y) bezogenen Ausgang (O1(Y); O2(Y)), der mit wenigstens einem dem zweiten Objekt (Y) entsprechenden Leiter des Busses (BO'1(Y); BO'2(Y)) verbunden ist; wobei alle auf das zweite Objekt bezogenen Ausgänge mit einander verbunden sind und eine verdrahtete Oder-Verknüpfung (WOR2; WOR4) bilden, die wenigstens ein Lese-Ausgangssignal zu dem auf das zweite Objekt bezogenen Zugangspunkt (OP(Y)) überträgt.

**33.** Vorrichtung nach Anspruch 1, dadurch gekennzeichnet, dass, um einen Lesevorgang auf die Beziehungen zu beschränken, die die zu einer bekannten Untermenge (S1) gehörenden Objekte (X5, X6, X7) betreffen, die Logikmittel (LM) ferner Filterlogikmittel (L3, LB3) aufweisen, die an die auf diese Objekte bezogenen Speicherelementausgänge (OL) gekoppelt sind und nur die von diesen Ausgängen gelieferten Signale bei einer Leseoperation berücksichtigen.

**Claims**

**1.** Apparatus for managing relationships between individually identifiable objects in a finite address field,

characterized in that for each pair of two distinct objects (X and Y), referred to as a first object and a second object, and for each relationship that may associate these two objects, the apparatus includes a "relationship" memory element (RMP) for storing "relationship" information indicating the existence or the non-existence of said relationship;

in that said relationship memory elements are structured in an array (SN; TN; TN') having at least two dimensions by means of a plurality of buses capable of conveying object selection signals and operation control signals, each element being situated at a cross-point between two "individual" buses (CC(X), LC(Y)), each individual bus corresponding to a respective object and being suitable for conveying at least one "selection" signal for selecting said object;

in that each element includes a logic circuit (1 to 5, OC1; 11 to 18, OC1') capable of receiving at least one selection signal and capable of receiving at least one operation control signal to write or read relationship information in said element; and

in that the apparatus includes logic means (LM) coupled to bus access points to supply them with operation control signals, to supply them with object selection signals, and to receive from them relationship information read in the relationship memory elements.

2. Apparatus according to claim 1, for managing relationships that are not necessarily symmetrical between two distinct objects (X and Y) in a set of objects comprising N objects.

characterized in that the individual object buses comprise:

- · N column control buses (CC(1), ..., CC(N)), corresponding respectively to the N objects, and respectively controlling N columns of elements;
- · N row control buses (LC(1), .... LC(N)), corresponding to the N objects, and respectively controlling N rows of elements; each row control bus having a cross-point with each column control bus; and

in that the relationship management apparatus comprises N(N-1) memory elements (RMP(X,Y)) for each relationship capable of relating two out of N distinct objects (X and Y); said elements being situated at cross-points between the column control buses and the row control buses, with the exception of cross-points situated on a diagonal of the array.

3. Apparatus according to claim 1, for managing symmetrical relationships in a set of objects comprising N objects,

characterized in that it comprises N individual buses corresponding respectively to the N objects, each individual bus having a first branch and a second branch (BO(K), BO'(K)) sharing a common end; and each individual bus having a cross-point with each of the other buses of said N individual buses;

in that the relationship management apparatus includes ½(N-1) relationship memory elements (RMP(i,k)), for each symmetrical relationship that may associate two distinct objects in said set of N objects;

in that the memory elements (RMP(i,k)) storing the relationship information between the objects of rank i=1 to K-1 and the object of rank K, for K lying in the range 1 to N, are situated at cross-points between the first branch (BO(K)) of the individual bus corresponding to said object of rank K, and the second branches (BO'(i)) of the respective individual buses corresponding to the objects of ranks i=1 to K-1; and

in that the memory elements RMP(j,K) storing relationship information between the object of rank K and the objects of ranks j=K+1 to N are situated at cross-points between the second branch (BO'(K)) of the individual bus corresponding to said object of rank K, and the first branches (BO(j)) of the respective individual buses corresponding to the objects of ranks j=K+1 to N.

4. Apparatus according to claim 1, characterized in that the logic circuit of an element situated at the cross-point of an individual bus corresponding to a first object (X) and an individual bus corresponding to a second object (Y) comprises means (3, 4; 17, 18) for authorizing the reading of relationship information stored at said element, if it receives at least one selection signal ($RS_X$, $SSA_X$) conveyed by the individual bus corresponding to the first object, and for authorizing the reading of said information if it receives at least one selection signal ($RS_Y$, $SSA_Y$) conveyed by the individual bus corresponding to the second object; the information read being restored at least on the individual bus (BO'1(Y); BO'2(Y)) corresponding to the second object (Y) in the first case, and being restored at least on the individual bus (BO1(X); BO2(X)) corresponding to the first object (X) in the second case.

5. Apparatus according to claim 1, characterized in that to enable an operation of writing relationship information in an element capable of storing information indicating the existence or the non-existence of a relationship between a first object and a second object, by explicitly selecting said two objects, the logic circuit of said element further includes means (1, 2; 11, 12) specifically for authorizing the writing of relationship information concerning a relationship between said first object (X) and said second object (Y) if it simultaneously receives at least one selection signal ($ST_X$; $RT_X$) conveyed by the individual bus corresponding to the first object (X), and at least one selection signal (respectively $ST_Y$; $RT_Y$) conveyed by the individual bus corresponding to the second object (Y).

6. Apparatus according to claim 1, characterized in that each individual bus (BO2(K), BO'2(K)) corresponding to an object (K) is suitable for conveying at least two selection signals making it possible to select the object by assigning the object to at least one group from two groups (A, B) of objects concerned by a writing operation;

and in that the logic circuit of each memory element includes means (11 to 15) for authorizing a writing operation in the element if, simultaneously:

- at least one selection signal relating to a first group ($SSA_X$ or $SSB_X$) is present on the individual bus (BO2(X)) corresponding to the first object (X); and
- at least one selection signal relating to a second group ($SSB_Y$ or $SSA_Y$) is present on the individual bus (BO'2(Y)) corresponding to the second object (Y).

7. Apparatus according to claim 6, characterized in that the logic means (LM) coupled to the access points include:

- means (LA) for supplying a first combination (STA=1 and STB=0; or RTA=1 and RTB=0; SSA=1 and SSB=0) of values of the selection signals to each individual bus corresponding to an object which is to be assigned exclusively to a first group (A) for a given writing operation;
- means (LB) for supplying a second combination (STA=0 and STB=1; RTA=0 and RTB1; SSA=0 and SSB=1) of values of the selection signals to each individual bus corresponding to an object which is to be assigned exclusively to the other group (B) for said given writing operation; and
- means (LAB) for supplying a third combination (STA=1 and STB=1; or RTA=1 and RTB=1; SSA=1 and SSB=1) of values of the selection signals to each individual bus corresponding to an object which is to be assigned both to the first group (A) and to the second group (B) for said given writing operation;

and in that, to write information indicating the existence or the non-existence of a relationship capable of associating each first object in a first subset (S1) of predetermined objects with each second object in a second subset (S2) of predetermined objects, without performing the same writing operation for relationships between the objects (A1, A2; 1, 7) belonging exclusively to the first subset, or performing the same operation for relationships between the objects (B1, B2, B3; 2, 5, 8) belonging exclusively to the second subset, the logic means (LM) supply:

the first combination of values to the individual buses corresponding to the objects belonging exclusively to the first subset or to the second subset, one of the two subsets being chosen arbitrarily (S1 or S2) so as to assign these objects exclusively to a first group (A);

the second combination of values to the individual buses corresponding to the objects belonging exclusively to the other subset (S2 or S1) so as to assign these objects exclusively to a second group (B); and

the third combination of values to the individual buses corresponding to any objects belonging simultaneously to both of the subsets (S1 and S2), so as to assign these objects both to the first group (A) and to the second group (B).

8. Apparatus according to claim 1, characterized in that each individual bus (BO1(X), BO'1(Y); BO2"(X); BO'2"(Y)) is also suitable for conveying at least one object selection and operation control signal ($RT_X$/$ST_X$/$RS_X$, $RT_Y$/$ST_Y$/$RS_Y$; $RTA_X$ and $RTB_X$/$STA_X$ and $STB_X$/$RD_X$, $RTA_Y$ and $RTB_Y$/$STA_Y$ and $STB_Y$/$RD_Y$), and

the logic circuit of each element (RMP1(X,Y); RMP2"(X,Y)) includes means (1, 2; 61 to 69) for authorizing an operation if it receives:

- at least one selection and operation control signal supplied by one of the two individual buses at a cross-point where the element is situated, for an operation based on selecting a single object, the other object being arbitrary; or
- at least two object selection and operation control signals simultaneously supplied respectively by the two individual buses at the cross-point where said element is situated for an operation based on selecting two objects.

9. Apparatus according to claim 8, characterized in that each individual bus (BO1(X); BO2"(X)) corresponding to an object (X) is suitable for conveying:

- at least one signal ($ST_X$; $STA_X$ or $STB_X$) for selecting an object and controlling writing of information (1) indicating the existence of a relationship between said object and another object;
- at least one signal ($RT_X$; $RTA_X$, or $RTB_X$) for selecting an object and for controlling writing of information (0) indicating the non-existence of a relationship between said object and another object;
- at least one signal ($RS_X$; $RD_X$) for selecting an object and controlling reading of information indicating the existence or the non-existence of a relationship between said object and another object; and
- at least one read output signal ($OL_X$; $OLA_X$, $OLB_X$) for conveying to an access point of the bus.

10. Apparatus according to claim 1, characterized in that it includes an "operation control" bus (OC) common to all of the elements (RMP1"(X,Y), RMP2(X,Y)) and suitable for conveying at least one non-specific operation control signal (RT, ST, RD); and

in that the logic control circuit of each element (RMP1"(X,Y); RMP2(X,Y)) further includes means (1" to 4"; 14, 15, 17, 18) for authorizing an operation if it receives simultaneously at least one operation control signal (RT; ST; RD) conveyed by the common bus, and at least one selection signal ($SS_X$; $SS_Y$; $SSA_X$; $SSA_Y$) conveyed by at least one individual bus.

**11.** Apparatus according to claim 8, characterized in that:

· each individual bus (BO1"(X), BO2(X)) corresponding to an object (X) is suitable for conveying:

- at least one object selection signal ($SS_X$; $SSA_X$, $SSB_X$) for selecting said object (X); and
- at least one read output signal ($OL_X$; $OLA_X$, $OLB_X$) for conveying to an access point of said bus; and

· in that the bus (OC) common to all of the elements (RMP1"(X,Y), RMP2(X,Y)) is suitable for conveying at least:

- a common signal (ST) for controlling an operation of writing information (1) indicating the existence of a relationship between said object (X) and another object;
- a common signal (RT) for controlling an operation of writing information (0) indicating the non-existence of a relationship between said object (X) and another object; and
- a common signal (RD) for controlling an operation of reading information indicating the existence or the non-existence of a relationship between said object (X) and another object.

**12.** Apparatus according to claim 1, making a first complex operation possible consisting in writing common information indicating the existence or the non-existence of relationships between a given object (X) and all of the other objects simultaneously; said apparatus being characterized:

in that said buses (BO1(X); BO2(X); RTA) are capable of conveying a combination of signals ($RS_X$=1 and $RT_X$=1; $SSA_X$=1 and $SSA_Y$=1 and $RT_A$=1) to all of the elements (RMP1; RMP2) that are capable of storing relationship information concerning relationships between a given object (X) and all of the other objects, which combination of signals is specific to the given object and specific to the first complex operation, so as to select the given object and so as to cause the first complex operation to be performed;

in that the logic means (LM) coupled to the access points of the buses include means for transmitting the combination of signals over the buses;

and in that the logic circuit of each element (RMP1(X,Y); RMP2(X,Y)) includes means (OC1; OC'1) for authorizing writing of relationship information in the element, if the logic circuit receives said combination of signals.

**13.** Apparatus according to claim 1, making it possible to cause a plurality of different operations to be performed simultaneously, the operations respectively belonging to subsets of disjoint possible operations, said apparatus being characterized in that:

· each individual bus (BO(N), BO'(N); BO(P), BO'(P); BO(Q), BO'(Q)) is suitable for conveying a plurality of distinct selection signals (IST1(P), IST2(N), IST1(Q)) supplied by the logic means (LM) coupled to the access points of the buses; and

· the logic circuit of each element (RMP(P,N)); RMP(P,Q); RMP(N,Q) includes means for authorizing performance of all of the operations belonging to a subset when the circuit receives:

- either a selection signal (IST1; IST2) conveyed by one of the two individual buses that intersect each other at the element, which signal is allocated specifically to the subset of operations, in the case of a subset of operations based on selecting a single object;
- or a combination of two different selection signals (IST1 and IST2) respectively conveyed by the two individual buses that intersect each other at the element, the combination of two selection signals being allocated specifically to the subset of operations, in the case of a subset of operations based on simultaneously selecting two objects.

**14.** Apparatus according to claim 13, making it possible for a first write operation and a different second write operation to be performed simultaneously, for relationships between two selected objects, each of the write operations belonging to a distinct subset of possible operations, said apparatus being characterized in that:

· each individual bus (BO(P), BO'(P); BO(N), BO'(N); BO(Q), BO'(Q)) is suitable for conveying at least two distinct types of selection signal (IST1, IST2); and

· the logic circuit of each element includes means for authorizing:

- the first write operation when the logic circuit receives a first combination (IST1(P).IST1(Q)=1) made up of two selection signals respectively supplied by the two individual buses that intersect each other at the element (RMP(P,Q)); and
- the second write operation when the logic circuit receives a second combination (ITS1(P).ITS2(N)+ IST2 (P).IST1(N)=1; IST1(Q).IST2(N)+ IST2(Q).IST1(N)=1) made up of two selection signals respectively supplied by the two individual buses that intersect each other at the element (RMP(P,N); RMP(N,Q)).

15. Apparatus according to claim 12, characterized in that, for said first complex operation, each individual bus (BO1 (X)) corresponding to a given object (X) is capable of conveying said combination of signals ($RS_X$=1 and $RT_X$=1) specific to the given object (X) and specific to the first complex operation;

in that the logic means (LM) coupled to the access points of the individual buses include means for supplying said combination of signals to the individual bus (BO1(X)) corresponding to each given object (X);

and in that the logic circuit (1 to 5) of each memory element (RMP1(X,Y)) further includes means (OC1) authorizing writing of information (0), indicating the non-existence of a relationship, in the element if said combination of signals ($RT_Y$=1 and $RS_Y$=1, or $RT_X$=1 and $RS_X$=1) is conveyed by one of the two individual buses (BO1 (X); BO'1(Y)) that intersect each other at the element.

16. Apparatus according to claim 12, characterized in that said combination of signals specific to a given object and specific to the first complex operation is made up firstly of a selection signal ($SSA_X$=1; $SS1_X$=1) for selecting a given object and conveyed via the individual bus (BO2(X); BO'3(P)) corresponding to the given object, and secondly of a releasing control signal (RTA=1; RTA'=1) conveyed by a bus (OC) that is common to all of the memory elements;

in that the logic means (LM) coupled to the access points of the buses include means for simultaneously applying the releasing control signal (RTA=1; RTA'=1) to the common bus, and a selection signal ($SSA_X$=1; $RD_P$=1) to the individual bus corresponding to each given object;

in that the logic circuit (11 to 18; 11 to 18') of each relationship memory element (RMP2(X,Y); RMP3(E,P)) further includes means (OC1'; OC1") authorizing writing of information (0), indicating the non-existence of a relationship, in the memory element if the releasing control signal (RTA=1; RTA'=1) is applied to the common bus, and if, simultaneously, an appropriate selection signal ($SSA_X$=1; $RD_P$=1) is applied to one of the two individual buses (BO2(X), BO'2(Y); BO3(X), BO'3(Y)) that intersect each other at the memory element.

17. Apparatus according to claim 13, characterized in that, to make a second complex operation possible consisting in two simultaneous read operations (La, Lb) for reading all of the relationship information indicating the existence or the non-existence of relationships established between at least one object (L) and any other object for a first read operation (La), and between at least one other object (M) and any other object for a second read operation (Lb), the identified objects being split up into two distinct groups (A and B) referred to as "output groups" relating respectively to the two read operations (La, Lb);

· the individual bus (BO1(X), BO'1(X); BO2(X), BO'2(X)) corresponding to each object (X) is suitable for transmitting a first selection signal ($RSA_X$; $SSA_X$), and for transmitting a second selection signal ($RSB_X$; $SSB_X$), the two signals being distinct and specific to the second complex operation; and the individual bus is suitable for transmitting a first read output signal ($OLA_X$), and for transmitting a second read output signal ($OLB_X$), the two read output signals being specific to the second complex operation;

· logic means (LM) including means for supplying the first selection signal, and means for supplying the second selection signal to the individual buses; the first signal and the second signal being supplied respectively to the individual buses corresponding respectively to each object (L) from which a first read operation (La) is to be performed, and to each object (M) from which a second read operation (Lb) is to be performed; and the logic means include means for receiving the two read output signals that may be conveyed by each individual bus; and

· the logic circuit of each memory element (RMP1(X,Y); RMP2(X,Y)) relating to a first object (X) and to a second object (Y) further includes means (OC2; C'2) for authorizing four read operations, that may or may not be simultaneous, for reading the element:

- a first read operation (La) from the first object (X) if the first selection signal ($RSA_X$; $SSA_X$) is conveyed by the individual bus corresponding to the first object (X);
- a second read operation (Lb) from the first object (X) if the second selection signal ($RSB_X$; $SSB_X$) is conveyed by the individual bus corresponding to the first object (X);

- a first read operation (La) from the second object (Y) if the first selection signal ($RSA_Y$; $SSA_Y$) is conveyed by the individual bus corresponding to the second object (Y); and
- a second read operation (Lb) from the second object (Y) if the second selection signal ($RSB_Y$; $SSB_Y$) is conveyed by the individual bus corresponding to the second object (Y).

18. Apparatus according to claim 17, characterized in that each of the first and second selection signals ($RSA_X$, $RSB_X$) also constitutes a read operation control signal;

and in that the logic circuit of each memory element (RMP2(X,Y)) includes means (OC2) for performing the four possible read operations mentioned in claim 17, depending on the two selection and read operation control signals ($RSA_X$, $RSB_X$) that are received by the circuit.

19. Apparatus according to claim 17, characterized in that:

· a bus (OC) that is common to all of the elements is suitable for conveying a non-specific read control signal (RD) that is common to the first and second read operations (La, Lb);
· the logic means (LM) include means for further supplying the non-specific read control signal (RD) to the common bus (OC); and
· the logic circuit of each memory element (RMP2(X,Y)) further includes means (OC'2) for performing the four read operations mentioned in claim 17, only if they further receive the non-specific read control signal (RD).

20. Apparatus according to claim 4, characterized in that, to make a third complex operation possible consisting in reading by propagation from a given object (R) so as to identify all of the objects having direct or indirect relationships with the given object;

· said apparatus includes a bus that is common to all the access points (AP1(K); AP2(K)) of the selection buses, and that is suitable for conveying an operation control signal (LP=1; LP'=1) specific to the third complex operation; and
· the logic means (LM) coupled to the access points of the individual buses include, for each individual bus (BO1(K), BO'1(K); BO2(K), BO'2(K)) corresponding to an object (K), logic means (36, 38) supplying at least one selection signal ($RS_K$=1; $SSA_K$=1) to the bus if a read output signal ($OL_K$=1) is present on the bus, and if the operation control signal (LP=1; LP'=1) specific to the third complex operation is present on the bus that is common to all of the access points.

21. Apparatus according to claim 20, characterized in that a selection signal ($RS_K$=1) supplied by the logic means (36) coupled to the access points of the selection buses also constitutes a read operation control signal for the elements (RMP1(K, P)).

22. Apparatus according to claim 20, characterized in that:

· it further includes a bus (OC) that is common to all of the elements (RMP1"(X,Y); RMP2(X,Y)) and that is suitable for conveying at least one non-specific operation control signal (RD=1);
· the logic circuit of each element (RMP1"(X,Y); RMP2(X,Y)) further includes means (3", 4"; 17, 18) for authorizing a reading operation only if they receive a non-specific read control signal (RD=1); and
· the logic means (LM) coupled to the access points of the individual buses further supply a non-specific read control signal (RD=1) to the bus (OC) that is common to all of the elements, simultaneously with the selection signal ($SSA_K$=1).

23. Apparatus according to claim 20 and claim 15 or 16, characterized in that, to make a fourth complex operation possible consisting in identifying and releasing, by propagation, direct or indirect relationships between a given object (R) and any other object, the logic means (LM) supply:

· a selection signal ($RS_R$=1; $SSA_R$=1) to the bus corresponding to the given object (R); and
· an operation control signal (LP=1; LP'=1) specific to the third complex operation, to the bus that is common to all of the access points of the selection buses, so as to identify all of the objects that have direct or indirect relationships with the given object (R);

and in that, the logic means (LM) then:

- receive read output signals ($OL_K$=1) identifying each object (K) that has a relationship with the given object (R);
- they then supply a selection signal ($RS_K$=1 and $RT_K$=1; $SSA_K$=1) to the individual bus of each object (K) identified in this way; and
- they supply, at least to the elements storing information indicating the existence of relationships between the given object (R) and the objects (K) identified in this way, a combination of selection and releasing control signals ($RS_K$=1 and $RT_K$=1; RTA=1) so as to write in each of the elements information (0) indicating the non-existence of a relationship.

**24.** Apparatus according to claim 23, characterized in that the logic means (LM) include:

- means (36) for supplying a selection signal ($RS_K$=1) to the individual bus (BO1(K), BO'1(K)) of each identified object during both a first time interval (T0) and a second interval (T1); the selection signal also constituting a read control signal; and
- means (36; 40) for then supplying a control signal ($RT_K$=1) to the individual bus (BO1(K), BO'1(K)) of each identified object during the second time interval only (T1); the combination of the selection signal ($RS_K$=1) and of the control signal ($RT_K$=1) during the second time interval (T1) causing information (0) to be written indicating the non-existence of a relationship.

**25.** Apparatus according to claim 23, characterized in that the bus (OC) that is common to all of the elements is suitable for conveying a non-specific control signal (RTA=1) that is specific to the first complex operation;
and in that the logic means (LM) include:

- means (38) for supplying a selection signal ($SSA_K$=1) to the individual bus (BO2(K), BO'2(K)) of each identified object during both a first time interval (T2) and a second time interval (T3);
- means for supplying a read control signal (RD=1) to the bus (OC) that is common to all of the elements during both the first time interval (T2) and the second time interval (T3); and
- means for supplying a non-specific signal (RTA=1) to the bus (OC) that is common to all of the elements during the second time interval (T3) only, so as to write information (0) indicating the non-existence of a relationship.

**26.** Apparatus according to claim 14, for performing a fifth complex operation consisting in releasing any relationship (P-Q) between a first object (P) and any second object (Q), and simultaneously setting up a new relationship (P-N) and a new relationship (N-Q) between a third object (N) and the two objects (P, N) respectively;
said apparatus being characterized in that the logic means (LM) coupled to the access points of the buses include means for simultaneously supplying:

- a selection signal of a first type (RT1, ST1, SS1) to the individual buses of the first object (P) and of the second object (Q); and
- a selection signal of a second type (RT2, ST2, SS2) to the individual bus of the third object (N);

and in that the logic circuit of each element (RMP1; RMP1"; RMP2; RMP2") includes means (1 to 4; 39 to 41; 1" to 41"; 72 to 74; 11 to 18, 42, 43; 61 to 69) for performing the following simultaneously:

- a first write operation consisting in writing information (0) indicating the non-existence of a relationship, when the logic circuit receives a first combination of two signals ($RT1_P.RT1_Q$=1; $SS1_P.SS1_Q$=1) made up of two signals of the first type (RT1; SS1), over the two individual buses that intersect each other at the logic circuit; and
- a second write operation consisting in writing information (1) indicating the existence of a relationship, when the logic circuit receives a second combination of selection signals ($ST1_N.ST2_P+ST2_N.ST1_P$=1; $SS1_N.SS2_P+S2_N.SS1_P$=1, or $ST1_N.ST2_Q+ST2_N.ST1_Q$=1; $SS1_N.SS2_Q+SS2_N.SS1_Q$=1) made up of a signal of the first type (ST1; SS1) and of a signal of the second type (ST2; SS2) over respective ones of the two selection buses that intersect each other at the logic circuit.

**27.** Apparatus according to claim 12, making a sixth complex operation possible consisting in releasing relationships existing between a given object (E), referred to as an "object to be removed", and at the most two other objects referred to as "adjacent objects" (P, Q), in a linear chain of relationships between objects, and in setting up a relationship directly between the two objects (P, Q);
said apparatus being characterized in that, in order to cause the following to be performed consecutively during a first time interval (T5; T7):

- a first operation consisting in reading the elements (RMP(E,P), RMP(E,Q)) storing information indicating the existence of any relationships between the object to be removed (E) and any other object; then

- a second operation consisting in writing information, indicating the existence of a relationship, in a memory element (RMP(P,Q), relating to two adjacent objects (P, Q) that may have been identified by the first operation;

· the logic means (LM) coupled to the access points of the buses include means supplying, for the first operation, a first selection and operation control signal ($RS_E$=1; $RD_E$=1), applied to the individual bus of the object to be removed (E), so as to cause reading to be performed in the elements storing the relationships between the object to be removed (E) and all of the other objects; and

· said management apparatus further includes logic means (44, 45; 51, 52; 47 to 49) for propagating another selection signal relating to the second operation, which means are coupled to the individual buses and supply a second selection and operation control signal ($ST_P$; $SSA_P$ and $SSB_P$) to the individual bus of an object (P, Q) if the bus is conveying a read output signal ($OL_P$), so as to cause information (1) to be written indicating the existence of a relationship between two adjacent objects (P, Q) identified by the first operation;

and in that, for releasing, in a second time interval (T6; T8), the relationships existing between the object to be removed (E) and the adjacent objects (P, Q), said apparatus includes means (OC1; OC'1) according to claim 12, making it possible to perform the first complex operation, for releasing any relationship with an object.

**28.** Apparatus according to claim 27, characterized:

in that it includes a bus that is common to all of the memory elements, and that transmits a "propagation control" signal (EC=1) specific to the sixth complex operation during a first time interval (T5);

in that the first selection and operation control signal is constituted by a read control signal ($RS_E$=1) for reading from the object to be removed (E), applied during the first time interval (T5);

in that the second selection and operation control signal is constituted by the releasing control signal ($RS_E$=1 and $RT_E$=1) specific to the first complex operation, applied during the second time interval (T6), for releasing the relationships between the object to be removed (E) and all of the other objects;

in that the logic circuit (1 to 5; OC1) of each relationship memory element (RMP1(E,P)) further includes:

· logic means (45) for producing a write control signal ($ST_P$=1; $ST_Q$=1) for causing information (1) to be written indicating the existence of a relationship (P-Q), the signal being produced over each individual bus (BO1(P); BO1(Q)) corresponding to an adjacent object (P; Q) to which the element is connected, if:

- the common propagation control signal (EC=1) specific to the sixth operation is present on the common control bus;
- and, simultaneously, a read control signal ($RS_E$=1) is present on the individual bus (BO'1(E)) corresponding to the object to be removed (E);
- and the relationship information read in the element indicates the existence of a relationship;

· means (1) for writing information (1) indicating the existence of a relationship (P-Q) when the logic circuit simultaneously receives two write control signals ($ST_P$=1 and $ST_Q$=1) for causing information (1) to be written indicating the existence of a relationship, the signals being received over respective ones of the two individual buses to which it is connected; and

· means (OC1) for writing information (0) indicating the non-existence of a relationship (P-E; E-Q) when the logic circuit receives a selection and operation control signal ($RS_E$=1 and $RT_E$=1) specific to the first complex operation, so as to make it possible to release a relationship with the object to be removed (E).

**29.** Apparatus according to claim 27, characterized in that it includes a bus that is common to all of the access points and that is capable of transmitting a common "propagation control" signal (EC'=1) specific to the sixth complex operation;

in that the logic means (LM) coupled to the access points of the control buses include:

· means for acting during a first time interval (T5) to transmit the common control signal (EC'=1) specific to the sixth complex operation, and to transmit a selection and read control signal ($RS_E$=1) over the individual bus corresponding to the object to be removed (E);

· for each individual bus corresponding to an object, means (48; 49) for supplying a selection and write control signal ($ST_P$=1; $ST_Q$=1) for causing information (1) to be written indicating the existence of a relationship, if the signal (EC'=1) specific to the sixth complex operation is active, and if, simultaneously, a read output signal

($OL_P$=1); $OL_Q$=1) indicating the existence of a relationship between the object to be removed (E) and at least one adjacent object (P, Q) is active on the individual bus; and

· means for acting during a second time interval (T6) to cease to transmit the signal (EC'=1) specific to the sixth complex operation, but to transmit the releasing signal ($RS_E$=1; $RT_E$=1) specific to the first complex operation and causing information (0) to be written indicating the non-existence of a relationship, the releasing signal being transmitted over the bus corresponding to the object to be removed (E), so as to release all of the relationships between the object to be removed (E) and the other objects (P, Q);

and in that the logic circuit (1 to 5; OC1) of each relationship memory element RMP1(E,P) further includes:

· means (1) for writing information (1) indicating the existence of a relationship (P-Q) when the logic circuit simultaneously receives two individual selection and write control signals ($ST_P$=1 and $ST_Q$=1) for causing information (1) to be written indicating the existence of a relationship, the signals being received over respective ones of the two individual buses that intersect each other at the cross-point to which the logic circuit is connected; and

· means (OC1) for writing information (0) indicating the non-existence of a relationship (P-E; E-Q) when the logic circuit receives the releasing control signal ($RS_E$=1 and $RT_E$=1) specific to the first complex operation, for releasing a relationship with the object to be removed (E).

**30.** Apparatus according to claim 27, characterized in that it includes a bus that is common to all of the memory elements, and that is suitable for transmitting an "identification and propagation" control signal (EC"1) specific to the sixth complex operation, and a "releasing" control signal (RTA'=1);

in that the logic circuit (11 to 18', OC"1) of each relationship memory element (RMP3(E, P)) includes:

- logic means (51, 52) for supplying a "write control propagation" signal ($SSB_E$=$SSA_E$=1; $SSB_P$=$SSA_P$=1) for writing information (1) indicating the existence of a relationship, over one (BO'3(P)) of the two individual buses that intersect each other at the element, if a read output signal ($OL_P$=1) indicating the existence of a relationship is supplied to the bus by the element, and if, simultaneously, the identification and propagation control signal (EC"=1) specific to the sixth complex operation is applied; and

- means (OC1") for writing information (0) indicating the non-existence of a relationship, in the memory element, if the releasing control signal (RTA'=1) is applied to the common bus, and if, simultaneously, a selection and read control signal ($RD_E$=1) is applied to one of the individual buses that intersect each other at the element;

and in that the logic means (LM) coupled to the access points of the control buses include means for:

· activating the following simultaneously during a first time interval (T7):

- the identification and propagation control signal (EC"=1) specific to the sixth complex operation, over the common bus;

- the selection and read control signal ($RD_E$=1) over the individual bus corresponding to an object to be removed (E); and

- the write control signal (ST=1), over the common bus, so as to write information (1) indicating the existence of a relationship between two objects (P, Q) adjacent to the object to be removed;

· activating the following simultaneously during a second time interval (T8):

- the selection and read control signal ($RD_E$=1) over the individual bus corresponding to the object to be removed (E); and

- the releasing control signal (RTA'=1) over the common bus, so as to write information (0) indicating the non-existence of any relationship between the object to be removed (E) and all of the other objects.

**31.** Apparatus according to claim 4, characterized in that, when the logic circuit (1, 2, 3', 4', 5; 11 to 16, 17', 18') of a memory element (RMP1', RMP2') performs a read operation, it restores relationship information simultaneously over the individual bus (BO1(X); BO2(X)) corresponding to the first object, and over the individual bus (BO'1(Y); BO'2(Y)) corresponding to the second object, if it receives a selection signal via at least one of the two individual buses, as well as a read control signal.

**32.** Apparatus according to claim 1, characterized in that, to restore, at an access point (AP(X)) relating to an object (X), at least one read output signal indicating the existence or the non-existence of at least one relationship with the object (X), each memory element (RMP1(X,Y), RMP2(X,Y)) includes:

- · an output (O1(X); O2(X) relating to the first object (X) and that is connected to at least one conductor of the bus (BO1(X); BO2(X)) corresponding to the first object (X); all the outputs relating to the first object (X) being connected together and constituting a wired-OR (WOR3; WOR5) transmitting at least one read output signal to the access point (AP(X)) relating to the first object; and
- · an output (O1(Y); O2(Y)) relating to the second object (Y) and that is connected to at least one conductor of the bus (BO'1(Y); BO'2(Y)) corresponding to the second object (Y); all of the outputs relating to the second object being connected together and constituting a wired-OR (WOR2; WOR4) transmitting at least one read output signal to the access point (AP(Y)) relating to the second object.

33. Apparatus according to claim 1, characterized in that, to limit a reading operation to relationships concerning the objects (X5, X6, X7) belonging to a known subset (S1), the logic means (LM) further include filter logic means (L3, LB3) that are coupled to the memory element outputs (OL) relating to the objects, and that do not take account of the signals supplied by said outputs, during a read operation.

FIG.1

FIG.2

# FIG.3

# FIG.4

# FIG.5

BO 1(X)

BO' 1(Y)

I(Y)

I(X)

STY
RTY
RSY
OLY

STX
RTX
RSX
OLX

S
1

R
0

1

2

3

4

5

WOR 2

WOR 3

O1(Y)

O1(X)

AP1(Y)

AP1(X)

RMP1(X,Y)

EP 0 782 815 B1

# FIG.6

EP 0 782 815 B1

# FIG.7

EP 0 782 815 B1

# FIG.8

AP(X1)  AP(X2)  AP(X3)  AP(X4)  AP(X5)  AP(X6)  AP(X7)  AP(X8)

OL

OL

S1

S2

LA2

RS = 1

LB2

LM

EP 0 782 815 B1

FIG.9

FIG.10

AP(A1)   AP(A2)   AP(B1)   AP(B2)   AP(B3)

S1   S2

LA1   $ST_K = 1$   $ST_K = 1$   LB1   LM

EP 0 782 815 B1

FIG.11

FIG.12

FIG.13

RMP

RD=1

AP(X1) AP(X2) AP(X3) AP(X4) AP(X5) AP(X6) AP(X7) AP(X8)

SSA=1

OL

OL

L2

L3

LM

FIG.14

ST = 1 / RT = 1

RMP2

AP(A1)    AP(A2)    AP(B1)    AP(B2)    AP(B3)

LAB    S1    LA3    S2

SSA = 1
SSB = 0

SSA = 0
SSB = 1

LB3

LM

A    B

EP 0 782 815 B1

FIG.15

ST = 1/ RT = 1

RMP2

AP(A1)  AP(A2)  AP(B1)  AP(B2)  AP(B3)

LAB    S1              LA4                    S2

LB4

SSA = 0          SSA = 1
SSB = 1          SSB = 0

LM

B                    A

EP 0 782 815 B1

75

FIG.16

FIG.17

FIG.18

FIG.19

BO2″(X)

BO'2″(Y)

61    69

62    68

63    67

66    S    R
          0

64    65

STAY
STBY
RTAY
RTBY
RDY
OLY

AP2″(Y)

WOR4″

WOR5″

STAX
STBX
RTAX
RTBX
RDX
OLX

AP2″(X)

RMP2″(X,Y)

EP 0 782 815 B1

79

FIG.20

# FIG.21

# FIG.22

# FIG.23

# FIG.24

# FIG.25

# FIG.26

# FIG.27

# FIG.28

# FIG.29

# FIG.30

# FIG.31

FIG.32

B01(X)  B0'1(Y)

21  23  OC1

22

STY
RTY
RSY
OLY

WOR2

S R
1 0  5

3  4

RMP1(X,Y)

AP1(Y)

STX
RTX
RSX
OLX

WOR3

AP1(X)

EP 0 782 815 B1

FIG.33

## FIG.34

## FIG.35

FIG.36

EP 0 782 815 B1

FIG.37

# FIG.38

# FIG.39

# FIG.40

# FIG.41

FIG.42

FIG.43

FIG.44

FIG.45

# FIG.46

# FIG.47

FIG.48

FIG.49

# FIG.50

BO2(X)

BO'2(Y)

IA(Y)

IA(X)

IB(Y)

IB(X)

42

43

OC

RT'

RT

ST

RD

11

12

I2

13

14

I1

15

16

S 1    R 0

SSBy,SS2Y

SSAY,SS1Y

OLY

WOR4

I3

I5

I4

SS2X, SSBX

SS1X, SSAX

OLX

WOR5

AP2(Y)

O2(Y)

17

18

O2(X)

RMP2(X,Y)

AP2(X)

100

EP 0 782 815 B1

FIG.51

FIG.52

FIG.53

FIG.54

EP 0 782 815 B1

102

# FIG.55

FIG.56

FIG.57

EP 0 782 815 B1

FIG.58

FIG.59